(19) Europäisches Patentamt
European Patent Office
Office européen des brevets

(11) EP 3 099 722 B1

(12) # FASCICULE DE BREVET EUROPEEN

(45) Date de publication et mention de la délivrance du brevet:
**12.07.2023 Bulletin 2023/28**

(21) Numéro de dépôt: **15703495.0**

(22) Date de dépôt: **26.01.2015**

(51) Classification Internationale des Brevets (IPC):
***C08F 230/06** (2006.01)* ***C10M 145/14** (2006.01)*
***C08L 43/00** (2006.01)* ***C08F 220/20** (2006.01)*

(52) Classification Coopérative des Brevets (CPC):
(C-Sets disponibles)
**C08F 220/20; C08L 33/06; C10M 157/00; C10M 159/005;** C08F 230/065; C10M 2205/04; C10M 2209/04; C10M 2209/084; C10N 2030/02

(Cont.)

(86) Numéro de dépôt international:
**PCT/EP2015/051517**

(87) Numéro de publication internationale:
**WO 2015/110642 (30.07.2015 Gazette 2015/30)**

(54) **COPOLYMERES THERMOASSOCIATIFS ET ECHANGEABLES, COMPOSITIONS LES COMPRENANT**

THERMOASSOZIATIVE UND AUSTAUSCHBARE COPOLYMERE UND ZUSAMMENSETZUNGEN DAMIT

THERMOASSOCIATIVE AND EXCHANGEABLE COPOLYMERS, AND COMPOSITIONS COMPRISING SAME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.01.2014 FR 1450654**

(43) Date de publication de la demande:
**07.12.2016 Bulletin 2016/49**

(73) Titulaires:
- **TotalEnergies OneTech**
  **92400 Courbevoie (FR)**
- **Ecole Supérieure de Physique et de Chimie Industrielles de la Ville de Paris**
  **75231 Paris Cedex 05 (FR)**
- **Centre National de la Recherche Scientifique (C.N.R.S.)**
  **75794 Paris Cedex 16 (FR)**

(72) Inventeurs:
- **NGUYEN, Thi Hang Nga**
  **F-94270 Le Kremlin Bicêtre (FR)**
- **NICOLAY, Renaud**
  **F-91370 Verrières le Buisson (FR)**
- **DEVES, Lise**
  **F-92340 Bourg-la-Reine (FR)**

(74) Mandataire: **Corizzi, Valérie**
**PACT-IP**
**37, rue Royale**
**92210 Saint-Cloud (FR)**

(56) Documents cités:
**EP-A1- 0 570 073 US-A- 4 401 797**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



(Cont. page suivante)

(52) Classification Coopérative des Brevets (CPC):
(Cont.)

C-Sets
**C08F 212/08, C08F 220/285;**
**C08L 33/06, C08L 33/14;**
**C08L 33/06, C08L 43/00;**
C10M 2205/04, C10M 2209/084, C10M 2229/00;
C10M 2209/04, C10M 2209/084, C10M 2229/00;
C10M 2209/084, C10M 2209/084, C10M 2229/00;
C10M 2209/084, C10M 2217/024, C10M 2229/00;
C10M 2209/084, C10M 2221/02, C10M 2229/00

## Description

### DOMAINE DE L'INVENTION

L'invention concerne une composition résultant du mélange d'au moins un copolymère A1 résultant de la copolymérisation d'au moins un monomère fonctionnalisé par des fonctions diols et d'au moins un composé A2 comprenant au moins deux fonctions esters boroniques. Elles présentent des propriétés rhéologiques très variées selon la proportion des composés A1 et A2 utilisée.

Le domaine de l'invention est celui des polymères associatifs et échangeables.

### ARRIERE-PLAN TECHNIQUE

Les polymères de hauts poids moléculaires sont largement utilisés pour augmenter la viscosité de solutions dans de nombreux domaines, tels que l'industrie du pétrole, du papier, du traitement de l'eau, l'industrie minière, des cosmétiques, du textile et de manière générale dans toutes les techniques industrielles utilisant des solutions épaissies.

Or, ces polymères de hauts poids moléculaires présentent l'inconvénient d'avoir une faible résistance au cisaillement permanent par rapport aux mêmes polymères de tailles plus faibles. Ces contraintes de cisaillement sur les polymères de haut poids moléculaire entrainent des coupures au niveau des chaînes macromoléculaires. Le polymère ainsi dégradé ne possède plus de propriétés épaississantes, et la viscosité des solutions le contenant chute de manière irréversible. Cette perte de résistance au cisaillement permanent conduit à une dégradation des propriétés des solutions à base de polymères de haut poids moléculaire.

La demanderesse s'est fixé pour objectif la formulation de nouveaux additifs qui soient plus stables au cisaillement par rapport aux composés de l'art antérieur.

Cet objectif est atteint grâce à de nouveaux additifs associatifs et échangeables de manière thermoréversible. Les copolymères associés (potentiellement réticulés) et échangeables de l'invention présentent l'avantage d'être plus stables aux contraintes de cisaillement. Cette caractéristique résulte de l'utilisation combinée de deux composés particuliers, un copolymère statistique portant des fonctions diols et un composé comportant au moins deux fonctions esters boroniques.

Il est connu du document WO2013147795 des polymères dont au moins un monomère comprend des fonctions esters boroniques. Ces polymères sont utilisés pour la fabrication d'appareils électroniques, notamment pour les appareils dont on souhaite obtenir une interface utilisateur flexible. Ces polymères sont aussi utilisés comme intermédiaire de synthèse. Ils permettent de fonctionnaliser les polymères par couplage avec des groupements luminescents, des groupements transporteurs d'électrons, etc. Le couplage de ces groupements s'effectue par des réactions classiques de chimique organique, faisant intervenir l'atome de bore, comme par exemple le couplage de Suzuki. Toutefois, aucune autre utilisation de ces polymères, ni une association avec d'autres composés n'est envisagée.

Il est connu du document US 4,401,797 un copolymère résultant de la copolymérisation d'un monomère méthacrylate de méthyle (MMA) et d'un monomère méthacrylate de glycéryle éventuellement protégé par un ester boronique (à savoir le méthacrylate de glycéryle d'acide butylboronique (BBA-GMA)). Ce copolymère forme un hydrogel en présence d'eau et est utilisé pour la fabrication de lentilles de contact. Toutefois, aucune autre utilisation de ce copolymère dans le domaine des compositions lubrifiantes, ni une association par l'intermédiaire de liens chimiques échangeables avec d'autres composés n'est envisagée.

Le document EP0570073 divulgue un additif qui améliore l'indice de viscosité d'une composition lubrifiante dans laquelle il est ajouté. Cet additif est un copolymère résultant de la polymérisation du 1-(méthacryloyléthoxy)-4,4,6-triméthyl-dioxaborinane et d'un méthacrylate d'alkyle linéaire ($C_{12}$-$C_{18}$). Cet additif appartient à la famille des composés borates qui peuvent être représentés par la formule générale $B(OR)_3$ avec R un groupe alkyle ou aryle. Cet additif n'appartient pas à la famille des composés boronates qui peuvent être représentés par la formule générale $R-B(OR)_2$ avec R un groupe alkyle ou aryle. Cet additif ne peut pas s'associer avec d'autres composés par l'intermédiaire de liens chimiques échangeables.

La demanderesse s'est également fixée pour objectif la synthèse de nouveaux polymères permettant d'augmenter la viscosité de solutions les comprenant par rapport aux polymères de l'art antérieur. En particulier, elle a pour objectif de fournir de nouveaux additifs rhéologiques qui, lorsqu'ils sont introduits dans une solution, notamment dans une solution hydrophobe, ont un comportement inversé vis-à-vis d'une modification de la température par rapport au comportement de la solution et des additifs rhéologiques de type polymère de l'art antérieur.

Cet objectif est atteint grâce à de nouveaux additifs rhéologiques pouvant s'associer, pour former éventuellement un gel, et échanger des liens chimiques de manière thermoréversible. Les additifs de la présente invention présentent l'avantage d'augmenter la viscosité de la solution les comprenant lorsque la température augmente.

Dans un premier temps, la demanderesse a essayé de synthétiser des copolymères portant des fonctions diols à partir de composés commerciaux tels que le solketal méthacrylate commercialisé par Sigma-Aldrich®.

Toutefois, l'utilisation de ce monomère présente plusieurs inconvénients :

- son coût à l'achat est élevé ;
- la polarité des motifs solketal méthacrylate et 2,3-dihydroxypropyl méthacrylate (résultant de la déprotection de la fonction solketal) limite la solubilité des copolymères dans les milieux apolaires;
- la fonction diol pendante est difficilement accessible sur les copolymères;
- suivant la nature du copolymère, la déprotection du monomère une fois polymérisé peut s'avérer difficile et/ou mener à la formation de gels.

Ainsi, la demanderesse s'est également fixé pour objectif la synthèse de nouveaux copolymères statistiques portant des fonctions diols qui pallient les inconvénients précités.

Cet objectif est atteint grâce aux nouveaux copolymères statistiques polydiols A1 comprenant au moins un monomère M1 de formule générale (I) telle que décrite ci-après.

Les copolymères statistiques polydiols A1 de l'invention présentent notamment les avantages suivants :

- la déprotection des fonctions diols protégées une fois polymérisé est plus simple du fait de leur plus grande accessibilité;
- ils sont mieux solubles dans un milieu apolaire ;
- ces polymères sont adaptatifs, c'est-à-dire qu'ils sont capables de répondre à un stimulus extérieur par un changement de propriétés ;
- ils peuvent s'associer et s'échanger de manière thermoréversible avec des composés ayant au moins deux fonctions esters boroniques, notamment dans un milieu apolaire, par exemple.

Dans un second temps, la demanderesse a essayé de synthétiser des composés portant au moins deux fonctions esters boroniques à partir de composés commerciaux tels que l'acide 4-vinylphénylboronique commercialisé par Sigma-Aldrich®.

Toutefois, l'utilisation de ce composé présente plusieurs inconvénients :

- la polymérisation de ces monomères en milieu hydrophobe mène à la formation de gels qui ne sont pas compatibles avec l'utilisation souhaitée;
- les copolymères contenant des fonctions acide 4-vinylphénylboroniques ne sont pas stables en température dans un milieu hydrophobe et conduisent à la formation de gels.

Ainsi, la demanderesse s'est également fixé pour objectif la synthèse de nouveaux composés portant au moins deux fonctions esters boroniques qui pallient les inconvénients précités.

Cet objectif est atteint grâce aux nouveaux composés ayant au moins deux fonctions esters boroniques de formule générale (III), ou comprenant au moins un monomère M3 de formule générale (IV), telles que décrites ci-après.

Les composés de l'invention ayant au moins deux fonctions esters boroniques présentent notamment les avantages suivants :

- leurs synthèses sont simples et peu coûteuses ;
- ils sont solubles dans un milieu hydrophobe, notamment dans un milieu hydrophobe apolaire ;
- ils ne forment pas de gel pendant la polymérisation ;
- ils sont stables en température dans un milieu hydrophobe et ne conduisent pas à la formation de gels.

## RESUME DE L'INVENTION

Ainsi, l'invention a pour objet une composition résultant du mélange d'au moins :

o un copolymère statistique A1 résultant de la copolymérisation :

  - d'au moins un premier monomère M1 de formule générale (I) :

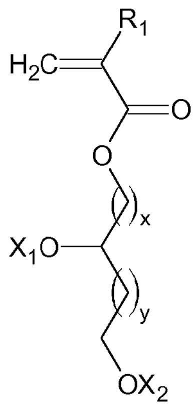

(I)

dans laquelle :

- $R_1$ est choisi parmi le groupe formé par -H, $-CH_3$, et $-CH_2-CH_3$ ;
- x est un nombre entier allant de 2 à 18;
- y est un nombre entier égal à 0 ou 1;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ;
  ou bien
- $X_1$ et $X_2$ forment avec les atomes d'oxygène un pont de formule suivante

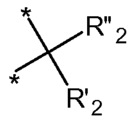

  dans laquelle:

  - les étoiles (*) symbolisent les liaisons aux atomes d'oxygène,
  - $R'_2$ et $R''_2$, identiques ou différents, sont choisis parmi le groupe formé par l'hydrogène et un alkyle en $C_1$-$C_{11}$, de préférence le méthyle;

  ou bien
- $X_1$ et $X_2$ forment avec les atomes d'oxygène un ester boronique de formule suivante

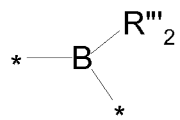

  dans laquelle :

  - les étoiles (*) symbolisent les liaisons aux atomes d'oxygène,
  - $R'''_2$ est choisi parmi le groupe formé par un aryle en $C_6$-$C_{18}$, un aralkyle en $C_7$-$C_{18}$ et alkyle en $C_2$-$C_{18}$, de préférence un aryle en $C_6$-$C_{18}$;

▪ avec au moins un second monomère M2 de formule générale (II) :

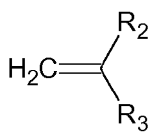

(II)

dans laquelle :

- $R_2$ est choisi parmi le groupe formé par -H, $-CH_3$ et $-CH_2-CH_3$ ,
- $R_3$ est choisi parmi le groupe formé par un aryle en $C_6-C_{18}$, un aryle en $C_6-C_{18}$ substitué par un groupement $R'_3$, $-C(O)-O-R'_3$, $-O-R'_3$, $-S-R'_3$ et $-C(O)-N(H)-R'_3$ avec $R'_3$ un groupe alkyle en $C_1-C_{30}$ ; et

o un composé A2 comprenant au moins deux fonctions esters boroniques.

Dans une variante, le copolymère statistique A1 résulte de la copolymérisation d'au moins un monomère M1 avec au moins deux monomères M2 ayant des groupes $R_3$ différents.

De préférence, un des monomères M2 a pour formule générale (II-A) :

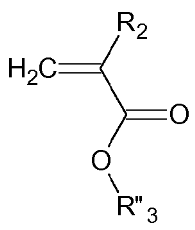

(II-A)

dans laquelle :

- $R_2$ est choisi parmi le groupe formé par -H, $-CH_3$ et $-CH_2-CH_3$ ;
- $R''_3$ est un groupe alkyle en $C_1-C_{14}$ ;

et l'autre monomère M2 a pour formule générale (II-B) :

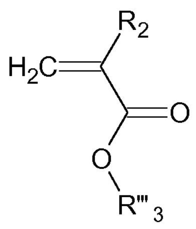

(II-B)

dans laquelle :

- $R_2$ est choisi parmi le groupe formé par -H, $-CH_3$ et-$CH_2-CH_3$ ;
- $R'''_3$ est un groupe alkyle en $C_{15}-C_{30}$.

De préférence, le copolymère statistique A1 décrit ci-dessus comprend une ou plusieurs des caractéristiques ci-dessous, prises séparément ou en combinaison :

- les chaînes latérales du copolymère ont une longueur moyenne allant de 8 à 20 atomes de carbone, de préférence de 9 à 15 atomes de carbone ;
- le pourcentage molaire de monomère M1 de formule (I) dans le dit copolymère allant de 1 à 30%, de préférence de 5 à 25%, de manière plus préférée allant de 9à21%;
- son degré de polymérisation moyen en nombre va de 100 à 2000, de préférence de 150 à 1000 ;
- son indice de polydispersité (Ip) va de 1,05 à 3,75 ; de préférence allant de 1,10 à 3,45 .

Dans une variante, le composé A2 est un composé de formule (III) :

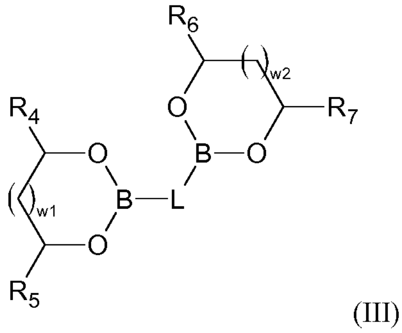

(III)

dans laquelle :

- $w_1$ et $w_2$, identiques ou différents sont des nombres entiers choisis entre 0 et 1 ;
- $R_4$, $R_5$, $R_6$ et $R_7$, identiques ou différents sont choisis parmi le groupe formé par l'hydrogène et un groupe hydrocarboné ayant de 1 à 24 atomes de carbone, de préférence entre 4 et 18 atomes de carbone, de préférence entre 6 et 14 atomes de carbone ;
- L est un groupement de liaison divalent et choisi parmi le groupe formé par un aryle en $C_6$-$C_{18}$, un aralkyle en $C_6$-$C_{18}$ et une chaîne hydrocarbonée en $C_2$-$C_{24}$.

Dans une autre variante, le composé A2 est un copolymère statistique résultant de la copolymérisation :

- d'au moins un monomère M3 de formule (IV) :

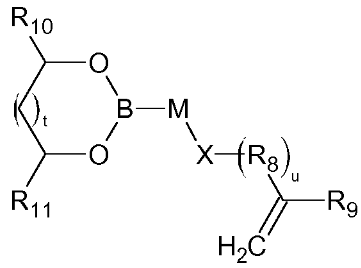

(IV)

dans laquelle :

- t est un nombre entier égal à 0 ou 1 ;
- u est un nombre entier égal à 0 ou 1 ;
- M et $R_8$ sont des groupements de liaison divalents, identiques ou différents, choisis parmi le groupe formé par un aryle en $C_6$-$C_{18}$, un aralkyle en $C_7$-$C_{24}$ et un alkyle en $C_2$-$C_{24}$, de préférence un aryle en $C_6$-$C_{18}$,
- X est une fonction choisie parmi le groupe formé par -O-C(O)-, -C(O)-O-, -C(O)-N(H)-, -N(H)-C(O)- , -S- , -N(H)- , -N(R'$_4$)- et -O- avec R'$_4$ une chaîne hydrocarbonée comprenant de 1 à 15 atomes de carbone;
- $R_9$ est choisi parmi le groupe formé par -H, $-CH_3$ et $-CH_2-CH_3$ ;
- $R_{10}$ et $R_{11}$ identiques ou différents sont choisis parmi le groupe formé par l'hydrogène et un groupe hydrocarboné ayant de 1 à 24 atomes de carbone, de préférence entre 4 et 18 atomes de carbone, de préférence entre 6 et 14 atomes de carbone ;

- avec au moins un second monomère M4 de formule générale (V) :

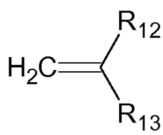

(V)

dans laquelle :

- $R_{12}$ est choisi parmi le groupe formé par -H, $-CH_3$ et $-CH_2-CH_3$,
- $R_{13}$ est choisi parmi le groupe formé par un aryle en $C_6-C_{18}$, un aryle en $C_6-C_{18}$ substitué par un groupement $R'_{13}$, $-C(O)-O-R'_{13;}$ $-O-R'_{13}$, $-S-R'_{13}$ et $-C(O)-N(H)-R'_{13}$ avec $R'_{13}$ un groupe alkyle en $C_1-C_{25}$.

De préférence, la composition décrite ci-dessus comprend une ou plusieurs des caractéristiques ci-dessous, prises séparément ou en combinaison :

- la chaîne formée par l'enchaînement des groupes $R_{10}$, M, X et $(R_8)_u$ avec u égal à 0 ou 1 du monomère de formule générale (IV) présente un nombre total d'atomes de carbone allant de 8 à 38, de préférence de 10 à 26 ;
- les chaînes latérales du copolymère A2 ont une longueur moyenne supérieure ou égale à 8 atomes de carbone, de préférence allant de 11 à 16 atomes de carbone ;
- le copolymère A2 a un pourcentage molaire de monomère de formule (IV) dans ledit copolymère allant de 0,25 à 20%, de préférence de 1 à 10% ;
- le copolymère A2 a un degré de polymérisation moyen en nombre allant de 50 à 1500, de préférence de 80 à 800 ;
- le copolymère A2 a un indice de polydispersité (Ip) allant de 1,04 à 3,54 ; de préférence allant de 1,10 à 3,10 ;
- la teneur en copolymère A1 dans la composition va de 0,1% à 50% en poids par rapport au poids total de la composition ;
- la teneur en composé A2 dans la composition va de 0,1% à 50% en poids par rapport au poids total de la composition ;
- le ratio massique entre le copolymère A1 et le composé A2 (ratio A1/A2) va de 0,005 à 200, de préférence de 0,05 à 20, de manière encore plus préférée de 0,1 à 10 ;
- la composition comprend en outre au moins un additif choisi parmi le groupe formé par les polymères, les pigments, les colorants, les charges, les plastifiants, les fibres, les antioxydants, les additifs pour lubrifiants, les agents de compatibilité, les agents anti-mousses, les additifs dispersants, les promoteurs d'adhérences et les stabilisants.

## BREVE DESCRIPTION DES FIGURES

La figure 1 représente de manière schématique un copolymère statistique (P1), un copolymère à gradient (P2) et un copolymère à blocs (P3), chaque rond représente un motif monomère. La différence de structure chimique entre les monomères est symbolisée par une couleur différente (gris clair/noir).

La figure 2 représente de manière schématique un copolymère peigne.

La figure 3 illustre et représente de manière schématique la réticulation de la composition selon l'invention dans du tétrahydrofurane (THF).

La figure 4 représente de manière schématique le comportement de la composition de l'invention en fonction de la température. Un copolymère statistique (2) possédant des fonctions diols (fonction A) peut s'associer de manière thermoréversible avec un copolymère statistique (1) possédant des fonctions esters boroniques (fonction B) via une réaction de transestérification. Le groupement organique des fonctions ester boronique (fonction B) qui s'échange lors de la réaction de transestérification est un diol symbolisé par un croissant noir. Il se forme un lien chimique (3) de type ester boronique avec libération d'un composé diol.

La figure 5 représente la variation, pour différentes températures comprises entre 10°C et 110°C, de la viscosité (Pa.s, l'axe des ordonnées) en fonction de la vitesse de cisaillement ($s^{-1}$, l'axe des abscisses) d'une solution à 10% massique d'un copolymère statistique polydiol A1-1 et 0,77 % massique d'un composé diester boronique A2-1 dans l'huile de base groupe III.

La figure 6A représente l'évolution de la viscosité relative (sans unité, l'axe des ordonnées) en fonction de la température (°C, l'axe des abscisses) des compositions A, B-1, C-1 et D-1.

La figure 6B représente l'évolution de la viscosité relative (sans unité, l'axe des ordonnées) en fonction de la température (°C, l'axe des abscisses) des compositions A, B-2, C-2 et D-2.

La figure 6C représente l'évolution de la viscosité relative (sans unité, l'axe des ordonnées) en fonction de la température (°C, l'axe des abscisses) des compositions A, B-3 et C-3.

La figure 6D représente l'évolution de la viscosité relative (sans unité, l'axe des ordonnées) en fonction de la température (°C, l'axe des abscisses) des compositions A, B-4, C-4 et D-4.

La figure 7 représente la variation, pour différentes températures comprises entre 10°C et 110°C, de la viscosité (Pa.s, l'axe des ordonnées) en fonction de la vitesse de cisaillement ($s^{-1}$, l'axe des abscisses) de la composition E.

La figure 8 représente l'évolution de la viscosité relative (sans unité, l'axe des ordonnées) en fonction de la température (°C, l'axe des abscisses) des compositions A, B, C, D et E.

La figure 9 illustre de manière schématique les réactions d'échanges de liens esters boroniques entre deux polymères statistiques polydiols (A1-1 et A1-2) et deux polymères statistiques esters boroniques (A2-1 et A2-2) en présence de diols.

La figure 10 représente l'évolution de la viscosité relative (sans unité, l'axe des ordonnées) en fonction de la température (°C, l'axe des abscisses) des compositions F et G.

## DESCRIPTION DE MODES DE REALISATION DE L'INVENTION

Un objet de la présente invention est une composition de composés associatifs et échangeables de manière thermoréversible, cette composition résultant du mélange d'au moins :

- un copolymère statistique polydiol A1 tel que décrit ci-après ou notamment susceptible d'être obtenu par l'un des procédés décrits ci-après;
- un composé A2 comprenant au moins deux fonctions esters boroniques.

### ◦ *Copolymères statistiques polydiols (copolymères statistiques A1)*

Le copolymère statistique polydiol (A1) conforme à la présente invention résulte de la copolymérisation d'au moins un premier monomère M1 portant des fonctions diols et d'au moins un second monomère M2, de structure chimique différente de celle du monomère M1.

Par « copolymère », on entend un oligomère ou une macromolécule linéaire ou ramifiée ayant une séquence constituée de plusieurs unités répétitives (ou motif monomère) dont au moins deux unités ont une structure chimique différente.

Par « motif monomère » ou « monomère », on entend une molécule capable d'être convertie en un oligomère ou une macromolécule par combinaison avec lui-même ou avec d'autres molécules du même type. Un monomère désigne la plus petite unité constitutive dont la répétition conduit à un oligomère ou à une macromolécule.

Par « copolymère statistique », on entend un oligomère ou une macromolécule dans lequel la distribution séquentielle des motifs monomères obéit à des lois statistiques connues. Par exemple, un copolymère est dit statistique lorsqu'il est constitué par des motifs monomères dont la distribution est une distribution markovienne. Un polymère statistique schématique (P1) est illustré en figure 1. La distribution dans la chaîne polymère des motifs monomères dépend de la réactivité des fonctions polymérisables des monomères et de la concentration relative des monomères. Les copolymères statistiques polydiols de l'invention se distinguent des copolymères à blocs et des copolymères à gradients. Par « bloc » on désigne une partie d'un copolymère comprenant plusieurs motifs monomères identiques ou différents et qui possèdent au moins une particularité de constitution ou de configuration permettant de la distinguer de ses parties adjacentes. Un copolymère à blocs schématique (P3) est illustré en figure 1. Un copolymère à gradient désigne un copolymère d'au moins deux motifs monomères de structures différentes dont la composition en monomère change de façon graduelle le long de la chaîne polymère, passant ainsi de façon progressive d'une extrémité de la chaîne polymère riche en un motif monomère, à l'autre extrémité riche en l'autre comonomère. Un polymère à gradient schématique (P2) est illustré en figure 1.

Par « copolymérisation », on entend un procédé qui permet de convertir un mélange d'au moins deux motifs monomères de structures chimiques différentes en un oligomère ou en un copolymère.

Dans la suite de la présente demande, « B » représente un atome de bore.

Par « alkyle en $C_i$-$C_j$ » on entend une chaîne hydrocarbonée saturée, linéaire ou ramifiée, comprenant de i à j atomes de carbone. Par exemple, pour « alkyle en $C_1$-$C_{10}$ », on entend une chaîne hydrocarbonée saturée, linéaire ou ramifiée, comprenant de 1 à 10 atomes de carbone.

Par « aryle en $C_6$-$C_{18}$», on entend un groupe fonctionnel qui dérive d'un composé hydrocarboné aromatique comprenant de 6 à 18 atomes de carbone. Ce groupe fonctionnel peut être monocyclique ou polycyclique. A titre illustratif, un aryle en $C_6$-$C_{18}$ peut être le phényle, le naphtalène, l'anthracène, le phénanthrène et le tétracène.

Par « alcényle en $C_2$-$C_{10}$», on entend une chaîne hydrocarbonée linéaire ou ramifiée comportant au moins une insaturation, de préférence une double liaison carbone-carbone, et comprenant de 2 à 10 atomes de carbone.

Par « aralkyle en $C_7$-$C_{18}$ », on entend un composé hydrocarboné aromatique, de préférence monocyclique, substitué par au moins une chaîne alkyle linéaire ou ramifiée et dont le nombre total d'atomes de carbone du cycle aromatique et de ses substituants va de 7 à 18 atomes de carbone. A titre illustratif un aralkyle en $C_7$-$C_{18}$ peut être choisi dans le groupe formé par le benzyle, le tolyle et le xylyle.

Par groupe « aryle en $C_6$-$C_{18}$ substitué par un groupement $R'_3$ », on entend un composé hydrocarboné aromatique, de préférence monocyclique, comprenant de 6 à 18 atomes de carbone dont au moins un atome de carbone du cycle aromatique est substitué par un groupe $R'_3$.

Par « Hal » ou « halogène » on entend un atome d'halogène choisi parmi le groupe formé par le chlore, le

brome, le fluor et l'iode.

• *Monomère M1*

Le premier monomère M1 du copolymère statistique polydiol (A1) de l'invention a pour formule générale (I) :

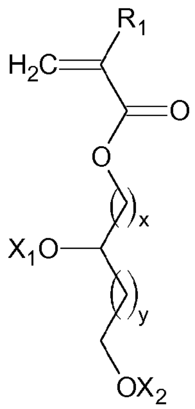

(I)

dans laquelle :

- $R_1$ est choisi parmi le groupe formé par -H, $-CH_3$ et $-CH_2-CH_3$, de préférence -H et $-CH_3$;
- x est un nombre entier allant de 2 à 18; de préférence de 3 à 8 ; de manière plus préférée x est égal à 4 ;
- y est un nombre entier égal à 0 ou 1; de préférence y est égal à 0 ;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ;
  ou bien
- $X_1$ et $X_2$ forment avec les atomes d'oxygène un pont de formule suivante :

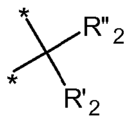

  dans laquelle :

  - les étoiles (*) symbolisent les liaisons aux atomes d'oxygène,
  - $R'_2$ et $R''_2$, identiques ou différents, sont choisis parmi le groupe formé par l'hydrogène et un groupe alkyle en $C_1$-$C_{11}$ ;

  ou bien
- $X_1$ et $X_2$ forment avec les atomes d'oxygène un ester boronique de formule suivante :

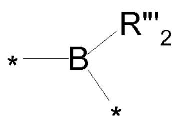

  dans laquelle :

  - les étoiles (*) symbolisent les liaisons aux atomes d'oxygène,
  - $R'''_2$ est choisi parmi le groupe formé par un aryle en $C_6$-$C_{18}$, un aralkyle en $C_7$-$C_{18}$ et un alkyle en $C_2$-$C_{18}$, de préférence un aryle en $C_6$-$C_{18}$, de manière plus préférée le phényle.

De préférence, lorsque $R'_2$ et $R''_2$ est un groupe alkyle en $C_1$-$C_{11}$; la chaîne hydrocarbonée est une chaîne linéaire. De préférence, le groupe alkyle $C_1$-$C_{11}$ est choisi parmi le groupe formé par le méthyle, l'éthyle, le n-propyle,

le n-butyle, le n-pentyle, le n-hexyle, le n-heptyle, le n-octyle, le n-nonyle, le n-décycle et le n-undécyle. De manière plus préférée, le groupe alkyle $C_1$-$C_{11}$ est le méthyle.

De préférence, lorsque R‴$_2$ est un groupe alkyle en $C_2$-$C_{18}$; la chaîne hydrocarbonée est une chaîne linéaire.

Parmi les monomères de formule (I), les monomères répondant à la formule (I-A) font partie des préférés :

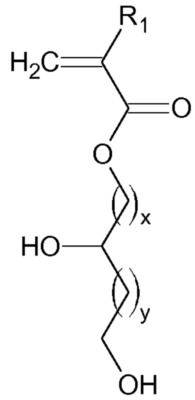

(I-A)

dans laquelle :

- $R_1$ est choisi parmi le groupe formé par -H, $-CH_3$ et $-CH_2-CH_3$, de préférence -H et $-CH_3$;
- x est un nombre entier allant de 2 à 18; de préférence de 3 à 8 ; de manière plus préférée x est égal à 4 ;
- y est un nombre entier égal à 0 ou 1; de préférence y est égal à 0.

Parmi les monomères de formule (I), les monomères répondant à la formule (I-B) font partie des préférés :

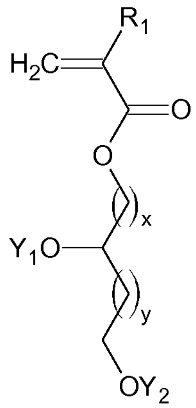

(I-B)

dans laquelle :

- $R_1$ est choisi parmi le groupe formé par -H, $-CH_3$ et $-CH_2-CH_3$, de préférence -H et $-CH_3$;
- x est un nombre entier allant de 2 à 18; de préférence de 3 à 8 ; de manière plus préférée x est égal à 4 ;
- y est un nombre entier égal à 0 ou 1; de préférence y est égal à 0 ;
- $Y_1$ et $Y_2$, identiques ou différents, sont choisis parmi le groupe formé par le tétrahydropyranyle, le méthyloxyméthyle, le ter-butyle, le benzyle, le triméthylsilyle et le t-butyle diméthylsilyle ;
  ou bien
- $Y_1$ et $Y_2$ forment avec les atomes d'oxygène un pont de formule suivante :

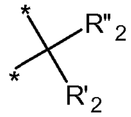

dans laquelle :

- les étoiles (*) symbolisent les liaisons aux atomes d'oxygène,
- $R'_2$ et $R''_2$, identiques ou différents, sont choisis parmi le groupe formé par l'hydrogène et un groupe alkyle en $C_1$-$C_{11}$ ;

ou bien

- $Y_1$ et $Y_2$ forment avec les atomes d'oxygène un ester boronique de formule suivante :

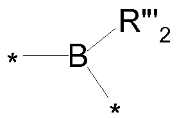

dans laquelle :

- les étoiles (*) symbolisent les liaisons aux atomes d'oxygène,
- $R'''_2$ est choisi parmi le groupe formé par un aryle en $C_6$-$C_{18}$, un aralkyle en $C_7$-$C_{18}$ et un alkyle en $C_2$-$C_{18}$, de préférence un aryle en $C_6$-$C_{18}$, de manière plus préférée le phényle.

De préférence, lorsque $R'_2$ et $R''_2$ est un groupe alkyle en $C_1$-$C_{11}$; la chaîne hydrocarbonée est une chaîne linéaire. De préférence, le groupe alkyle $C_1$-$C_{11}$ est choisi parmi le groupe formé par le méthyle, l'éthyle, le n-propyle, le n-butyle, le n-pentyle, le n-hexyle, le n-heptyle, le n-octyle, le n-nonyle, le n-décycle et le n-undécyle. De manière plus préférée, le groupe alkyle $C_1$-$C_{11}$ est le méthyle.

De préférence, lorsque $R'''_2$ est un groupe alkyle en $C_2$-$C_{18}$; la chaîne hydrocarbonée est une chaîne linéaire.

• *Obtention du monomère M1*

Le monomère M1 de formule générale formule (I-A) est obtenu par déprotection des fonctions alcools du monomère de formule générale (I-B) selon le schéma réactionnel 1 ci-dessous :

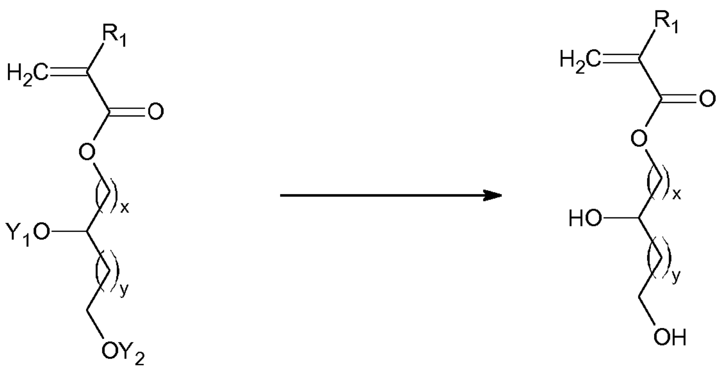

(I-B) (I-A)

Schéma 1

avec $R_1$, $Y_1$, $Y_2$, x et y tels que définis dans la formule générale (I-B) décrite ci-dessus.

La réaction de déprotection des fonctions diols du monomère de formule générale (I-B) est bien connue de l'homme du métier. Il sait adapter les conditions réactionnelles de déprotection en fonction de la nature des groupes protecteurs $Y_1$ et $Y_2$.

Le monomère M1 de formule générale (I-B) peut être obtenu par une réaction d'un composé de formule générale (I-c) avec un composé alcool de formule générale (I-b) selon le schéma réactionnel 2 ci-dessous :

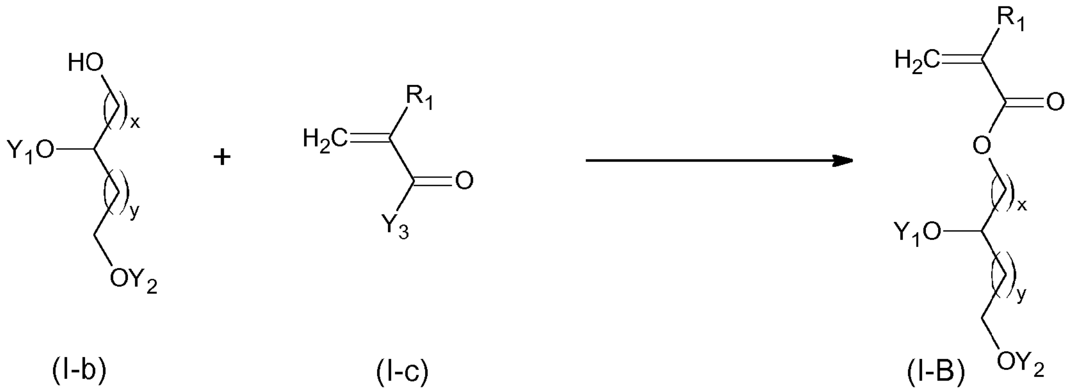

(I-b) (I-c) (I-B)

Schéma 2

dans lequel :

- $Y_3$ est choisi parmi le groupe formé par un atome d'halogène, de préférence le chlore, -OH et O-C(O)-R'$_1$ avec R'$_1$ choisi parmi le groupe formé par -H, $-CH_3$ et $-CH_2-CH_3$, de préférence -H et $-CH_3$;
- $R_1$, $Y_1$, $Y_2$, x et y ont la même signification que celle donnée dans formule générale (I-B).

Ces réactions de couplages sont bien connues de l'homme du métier.

Le composé de formule générale (I-c) est disponible commercialement auprès des fournisseurs : Sigma-Aldrich® et Alfa Aesar®.

Le composé alcool de formule générale (I-b) est obtenu à partir du polyol correspondant de formule (I-a) par protection des fonctions diols selon le schéma réactionnel 3 suivant :

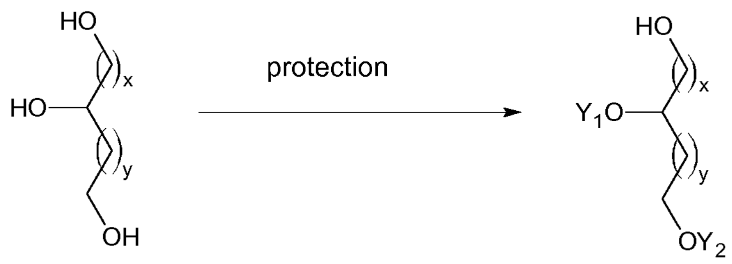


(I-a) (I-b)

Schéma 3

avec x, y, $Y_1$ et $Y_2$ tels que définis dans la formule générale (I-B).

La réaction de protection des fonctions diols du composé de formule générale (I-a) est bien connue de l'homme du métier. Il sait adapter les conditions réactionnelles de protection en fonction de la nature des groupes protecteurs $Y_1$ et $Y_2$ utilisés.

Le polyol de formule générale (I-a) est disponible commercialement auprès des fournisseurs : Sigma-Aldrich® et Alfa Aesar®.

• *Monomère M2*

Le second monomère du copolymère statistique de l'invention a pour formule générale (II) :

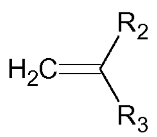

(II)

dans laquelle :

- $R_2$ est choisi parmi le groupe formé par -H, $-CH_3$ et $-CH_2-CH_3$, de préférence -H et $-CH_3$;
- $R_3$ est choisi parmi le groupe formé par un groupement aryle en $C_6$-$C_{18}$, un aryle en $C_6$-$C_{18}$ substitué par un groupement $R'_3$, -C(O)-O-$R'_3$; -O-$R'_3$, -S-$R'_3$ et -C(O)-N(H)-$R'_3$ avec $R'_3$ un groupe alkyle en $C_1$-$C_{30}$.

De préférence, $R'_3$ est un groupe alkyle en $C_1$-$C_{30}$ dont la chaîne hydrocarbonée est linéaire.
De préférence, $R_3$ est choisi parmi le groupe formé par un groupement aryle en $C_6$-$C_{18}$, de préférence un aryle en $C_6$, et -C(O)-O-$R'_3$ avec $R'_3$ un groupe alkyle en $C_1$-$C_{30}$.
Parmi les monomères de formule (II), les monomères répondant à la formule (II-A) font partie des préférés :

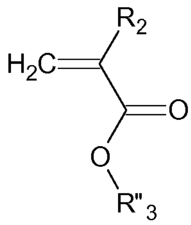

(II-A)

dans laquelle :

- $R_2$ est choisi parmi le groupe formé par -H, $-CH_3$ et $-CH_2-CH_3$, de préférence -H et $-CH_3$;
- $R''_3$ est un groupe alkyle en $C_1$-$C_{14}$.

Par « groupe alkyle en $C_1$-$C_{14}$», on entend une chaîne hydrocarbonée saturée, linéaire ou ramifiée comprenant de 1 à 14 atomes de carbone. De préférence, la chaîne hydrocarbonée est linéaire. De manière préférée, la chaîne hydrocarbonée comprend de 4 à 12 atomes de carbone.
Parmi les monomères de formule (II), les monomères répondant à la formule (II-B) font aussi partie des préférés :

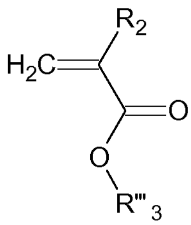

(II-B)

dans laquelle :

- $R_2$ est choisi parmi le groupe formé par -H, $-CH_3$ et $-CH_2-CH_3$, de préférence -H et $-CH_3$;
- $R'''_3$ est un groupe alkyle en $C_{15}$-$C_{30}$.

Par « groupe alkyle en $C_{15}$-$C_{30}$», on entend une chaîne hydrocarbonée saturée, linéaire ou ramifiée comprenant de 15 à 30 atomes de carbone. De préférence, la chaîne hydrocarbonée est linéaire. De préférence, la chaîne hydrocarbonée comprend de 16 à 24 atomes de carbone.

• *Obtention du monomère M2*

Les monomères de formule (II), (II-A) et, (II-B) sont bien connus de l'homme du métier. Ils sont commercialisés par Sigma-Aldrich® et TCI®.

• *Copolymères polydiols préférés*

Dans un mode de réalisation, un copolymère statistique préféré résulte de la copolymérisation d'au moins :

- un premier monomère M1 de formule générale (I) tel que décrit précédemment ;
- un second monomère M2 de formule (II) tel que décrit précédemment, dans laquelle $R_2$ est -H et $R_3$ est un groupement aryle en $C_6$-$C_{18}$; de préférence $R_3$ est le phényle.

Dans un autre mode de réalisation, un copolymère statistique préféré résulte de la copolymérisation d'au moins :

- un premier monomère M1 de formule générale (I) tel que décrit précédemment ;
- un second monomère M2 de formule (II-A) tel que décrit précédemment ; et
- un troisième monomère M2 de formule (II-B) tel que décrit précédemment.

Selon cet autre mode de réalisation, un copolymère statistique préféré résulte de la copolymérisation d'au moins :

- un premier monomère M1 de formule générale (I) tel que décrit précédemment ;
- un second monomère M2 de formule (II-A) dans laquelle $R_2$ est $-CH_3$ et $R''_3$ est un groupe alkyle en $C_4$-$C_{12}$, de préférence un alkyle linéaire en $C_4$-$C_{12}$;
- un troisième monomère M2 de formule (II-B) dans laquelle $R_2$ est $-CH_3$ et $R'''_3$ est un groupe alkyle en $C_{16}$-$C_{24}$, de préférence un alkyle linéaire en $C_{16}$-$C_{24}$.

Selon ce mode de réalisation, un copolymère statistique préféré résulte de la copolymérisation d'au moins :

- un premier monomère M1 de formule générale (I) tel que décrit précédemment ;
- un second monomère M2 choisi dans le groupe formé par le méthacrylate de n-octyle, le méthacrylate de n-décyle et le méthacrylate de n-dodécyle ;
- un troisième monomère M2 choisi dans le groupe formé par le méthacrylate de palmityle, le méthacrylate de stéaryle, le méthacrylate d'arachidyle et le méthacrylate de béhényle.

• *Procédé d'obtention des copolymères polydiols*

L'homme du métier est à même de synthétiser les copolymères statistiques polydiols A1 en faisant appel à ses connaissances générales.

La copolymérisation peut être amorcée en masse ou en solution dans un solvant organique par des composés générateurs de radicaux libres. Par exemple, les copolymères de l'invention sont obtenus par les procédés connus de copolymérisation radicalaire, notamment contrôlée telle que la méthode dénommée polymérisation radicalaire contrôlée par transfert de chaîne réversible par addition-fragmentation (en anglais : Réversible Addition-Fragmentation Chain Transfer (RAFT)) et la méthode dénommée polymérisation radicalaire contrôlée par transfert d'atome (en anglais Atom Transfer Radical Polymerization (ARTP)). La polymérisation radicalaire conventionnelle et la télomérisation peuvent également être employées pour préparer les copolymères de l'invention (Moad, G.; Solomon, D. H., The Chemistry of Radical Polymerization. 2nd ed.; Elsevier Ltd: 2006; p 639 ; Matyaszewski, K.; Davis, T. P. Handbook of Radical Polymerization; Wiley-Interscience: Hoboken, 2002; p 936).

Un procédé de préparation d'un copolymère statistique comprend au moins une étape de polymérisation (a) dans laquelle on met en contact au moins :

i) un premier monomère M1 de formule générale (I) :

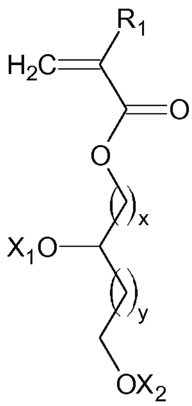

(I)

dans laquelle :

- $R_1$ est choisi parmi le groupe formé par -H, $-CH_3$, et $-CH_2-CH_3$;
- x est un nombre entier allant de 2 à 18;
- y est un nombre entier égal à 0 ou 1;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ;
  ou bien
- $X_1$ et $X_2$ forment avec les atomes d'oxygène un pont de formule suivante dans laquelle:

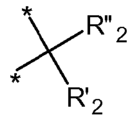

  - les étoiles (*) symbolisent les liaisons aux atomes d'oxygène ;
  - $R'_2$ et $R''_2$, identiques ou différents, sont choisis parmi le groupe formé l'hydrogène et un alkyle en $C_1$-$C_{11}$ , de préférence le méthyle;

  ou bien
- $X_1$ et $X_2$ forment avec les atomes d'oxygène un ester boronique de formule suivante

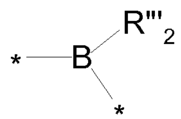

  dans laquelle :

  - les étoiles (*) symbolisent les liaisons aux atomes d'oxygène ;
  - $R'''_2$ est choisi parmi le groupe formé par un aryle en $C_6$-$C_{18}$, un aralkyle en $C_7$-$C_{18}$ et alkyle en $C_2$-$C_{18}$, de préférence un aryle en $C_6$-$C_{18}$;

ii) au moins un second monomère M2 de formule générale (II) :

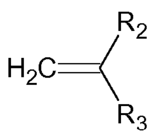

(II)

dans laquelle :

- $R_2$ est choisi parmi le groupe formé par -H, $-CH_3$ et $-CH_2-CH_3$ ;
- $R_3$ est choisi parmi le groupe formé par un aryle en $C_6-C_{18}$, un aryle en $C_6-C_{18}$ substitué par un groupement $R'_3$, $-C(O)-O-R'_3$; $-O-R'_3$, $-S-R'_3$ et $-C(O)-N(H)-R'_3$ avec $R'_3$ un groupe alkyle en $C_1-C_{30}$;

iii) au moins une source de radicaux libres.

Dans un mode de réalisation, le procédé peut comprendre en outre iv) au moins un agent de transfert de chaîne.

Par « une source de radicaux libres » on entend un composé chimique permettant de générer une espèce chimique possédant un ou plusieurs électrons non appariés sur sa couche externe. L'homme du métier peut utiliser toute source de radicaux libres connue en soi et adaptée aux procédés de polymérisation, notamment de polymérisation radicalaire contrôlée. Parmi les sources de radicaux libres, on préfère, à titre illustratif, le peroxyde de benzoyle, le peroxyde de tertio-butyle, les composés diazoïques tels que l'azobisisobutyronitrile, les composés péroxygénés tels que les persulfates ou l'eau oxygénée, les systèmes redox tels que l'oxydation de $Fe^{2+}$, les mélanges persulfates/sodium-métabisulfite, ou l'acide ascorbique/eau oxygénée ou encore les composés clivables photochimiquement ou par radiations ionisantes, par exemple les rayons ultraviolet ou par rayonnement beta ou gamma.

Par « agent de transfert de chaîne », on entend un composé dont le but est d'assurer une croissance homogène des chaînes macromoléculaires par réactions de transfert réversible entre espèces en croissance, i.e. chaînes polymères terminées par un radical carboné, et espèces dormantes, i.e. chaînes polymères terminées par un agent de transfert. Ce processus de transfert réversible permet de contrôler les masses moléculaires de copolymères ainsi préparés. De préférence dans le procédé de l'invention, l'agent de transfert de chaîne comprend un groupe thiocarbonylthio -S-C(=S)-. A titre illustratif d'agent de transfert de chaîne, on peut citer les dithioesters, les trithiocarbonates, les xanthates et les dithiocarbamates. Un agent de transfert préféré est le dithiobenzoate de cumyle ou le 2-cyano-2-propyl benzodithioate.

Par « agent de transfert de chaîne », on entend également un composé dont le but est de limiter la croissance des chaînes macromoléculaires en cours de formation par addition de molécules monomères et d'amorcer de nouvelles chaînes, ce qui permet de limiter les masses moléculaires finales, voire de les contrôler. Un tel type d'agent de transfert est utilisé en télomérisation. Un agent de transfert préféré est la cystéamine.

Le procédé de préparation d'un copolymère statistique polydiol peut comprend :

- au moins une étape de polymérisation (a) telle que définie ci-dessus, dans laquelle les monomères M1 et M2 sont choisis avec $X_1$ et $X_2$ différents de l'hydrogène, et en outre
- au moins une étape de déprotection (b) des fonctions diol du copolymère obtenu à l'issue de l'étape (a), de façon à obtenir un copolymère dans lequel $X_1$ et $X_2$ sont identiques et sont un atome d'hydrogène.

Dans un mode de réalisation, l'étape de polymérisation (a) comprend la mise en contact d'au moins un monomère M1 avec au moins deux monomères M2 ayant des groupes $R_3$ différents.

Dans ce mode de réalisation, l'un des monomères M2 a pour formule générale (II-A) :

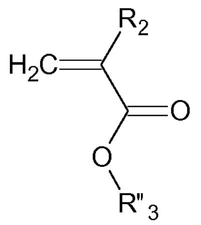

(II-A)

dans laquelle :

- $R_2$ est choisi parmi le groupe formé par -H, $-CH_3$ et$-CH_2-CH_3$ ;
- $R''_3$ est un groupe alkyle en $C_1-C_{14}$;

et l'autre monomère M2 a pour formule générale (II-B) :

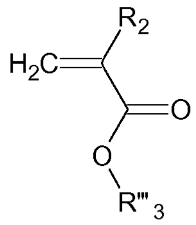

(II-B)

dans laquelle :

- $R_2$ est choisi parmi le groupe formé par -H, $-CH_3$ et $-CH_2-CH_3$;
- $R'''_3$ est un groupe alkyle en $C_{15}-C_{30}$.

Les préférences et définitions décrites pour les formules générales (I), (I-A), (I-B), (II-A), (II-B) s'appliquent également aux procédés décrits ci-dessus.

• *Propriétés des copolymères polydiols A1*

Les copolymères statistiques polydiols A1 sont des copolymères peignes.

Par « copolymères peignes », on entend un copolymère disposant d'une chaîne principale (aussi appelée squelette) et de chaînes latérales. Les chaînes latérales sont pendantes de part et d'autre de la chaîne principale. La longueur de chaque chaîne latérale est inférieure à la longueur de la chaîne principale. La figure 2 représente de manière schématique un polymère peigne.

Les copolymères A1 présentent un squelette de fonctions polymérisables, notamment un squelette de fonctions méthacrylate, et un mélange de chaînes latérales hydrocarbonées substituées ou non par des fonctions diol.

Comme les monomères de formule (I) et (II) présentent des fonctions polymérisables de réactivité identique ou sensiblement identique, on obtient un copolymère dont les monomères ayant des fonctions diols sont distribués statistiquement le long du squelette du copolymère par rapport aux monomères dont les chaînes alkyles sont non substituées par des fonctions diols.

Les copolymères statistiques polydiols A1 présentent l'avantage d'être sensibles à des stimuli extérieurs, tels que la température, la pression, la vitesse de cisaillement ; cette sensibilité se traduisant par un changement de propriétés. En réponse à un stimulus, la conformation dans l'espace des chaînes de copolymère est modifiée et les fonctions diols sont rendues plus ou moins accessibles aux réactions d'association, pouvant générée une réticulation, ainsi qu'aux réactions d'échanges. Ces processus d'association et d'échange sont réversibles. Le copolymère A1 est un copolymère thermosensible, c'est-à-dire qu'il est sensible aux changements de température.

Avantageusement, les chaînes latérales du copolymère statistique polydiol A1 ont une longueur moyenne allant de 8 à 20 atomes de carbone, de préférence de 9 à 15 atomes de carbone. Par « longueur moyenne de chaîne latérale » on entend la longueur moyenne des chaînes latérales de chaque monomère constituant le copolymère. L'homme du métier sait obtenir cette longueur moyenne en sélectionnant de manière appropriée les types et le ratio de monomères constituant le copolymère statistique polydiol. Le choix de cette longueur moyenne de chaîne permet d'obtenir un polymère soluble dans un milieu hydrophobe, quelle que soit la température à laquelle le copolymère est dissous. Le copolymère A1 est donc miscible dans un milieu hydrophobe. Par « milieu hydrophobe » on entend un milieu qui n'a pas ou a une très faible affinité pour l'eau, c'est à dire qu'il n'est pas miscible dans l'eau ou dans un milieu aqueux.

Avantageusement, le copolymère statistique polydiol A1 a un pourcentage molaire de monomère M1 de formule (I) dans ledit copolymère allant de 1 à 30 %, de préférence 5 à 25%, de manière plus préférée allant de 9 à 21%.

Dans un mode de réalisation préférée, le copolymère statistique polydiol A1 a un pourcentage molaire de monomère M1 de formule (I) dans ledit copolymère allant de 1 à 30 %, de préférence 5 à 25%, de manière plus préférée allant de 9 à 21%, un pourcentage molaire de monomère M2 de formule (II-A) allant de 8 à 92% et un pourcentage molaire de monomère M2 de formule (II-B) allant de 0,1 à 62%. Le pourcentage molaire de monomères dans le copolymère résulte directement de l'ajustement des quantités de monomères mises en oeuvre pour la synthèse du copolymère.

Dans un mode de réalisation préféré, le copolymère statistique polydiol A1 a un pourcentage molaire de monomère M1 de formule (I) dans ledit copolymère allant de 1 à 30 %, un pourcentage molaire de monomère M2 de formule (II-A) allant de 8 à 62% et un pourcentage molaire de monomère M2 de formule (II-B) allant de 8 à 91%. Le pourcentage molaire de monomères dans le copolymère résulte directement de l'ajustement des quantités de monomères mises en oeuvre pour la synthèse du copolymère.

Avantageusement, le copolymère statistique polydiol A1 a un degré de polymérisation moyen en nombre allant

de 100 à 2000, de préférence de 150 à 1000. De façon connue, le degré de polymérisation est contrôlé en utilisant une technique de polymérisation radicalaire contrôlée, une technique de télomérisation ou en ajustant la quantité de source de radicaux libres lorsque les copolymères de l'invention sont préparés par polymérisation radicalaire conventionnelle.

Avantageusement, le copolymère statistique polydiol A1 a un indice de polydispersité (Ip) allant de 1,05 à 3,75 ; de préférence allant de 1,10 à 3,45. L'indice de polydispersité est obtenu par mesure de chromatographie d'exclusion stérique en utilisant une calibration polystyrène.

Avantageusement, le copolymère statistique polydiol A1 a une masse molaire moyenne en nombre allant de 10 000 à 400 000 g/mol, de préférence de 25 000 à 150 000 g/mol, la masse molaire moyenne en nombre étant obtenue par mesure de chromatographie d'exclusion stérique en utilisant une calibration polystyrène.

La méthode de mesure de chromatographie d'exclusion stérique en utilisant une calibration polystyrène est décrite dans l'ouvrage (Fontanille, M.; Gnanou, Y., Chimie et physico-chimie des polymères. 2nd ed.; Dunod: 2010; p 546).

• *Composé A2 diester boronique*

Dans un mode de réalisation de la composition de l'invention, le composé A2 comprenant deux fonctions esters boroniques a pour formule générale (III) :

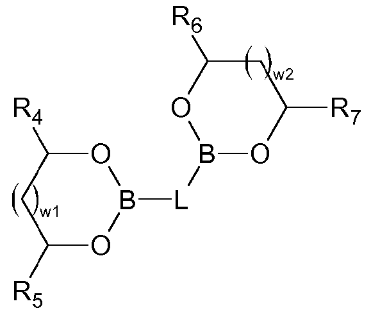

(III)

dans laquelle :

- $w_1$ et $w_2$, identiques ou différents sont des nombres entiers choisis entre 0 et 1,
- $R_4$, $R_5$, $R_6$ et $R_7$, identiques ou différents, sont choisis parmi le groupe formé par l'hydrogène et un groupe hydrocarboné ayant de 1 à 24 atomes de carbone, de préférence de 4 à 18 atomes de carbone, de préférence de 6 à 14 atomes de carbone ;
- L est un groupement de liaison divalent et choisi parmi le groupe formé par un aryle en $C_6$-$C_{18}$, un aralkyle en $C_7$-$C_{24}$ et une chaîne hydrocarbonée en $C_2$-$C_{24}$, de préférence un aryle en $C_6$-$C_{18}$.

Par « groupe hydrocarboné ayant de 1 à 24 atomes de carbone » on entend un groupe alkyle ou alkenyle, linéaire ou ramifié, ayant de 1 à 24 atomes de carbone. De préférence, le groupe hydrocarboné comprend de 4 à 18 atomes de carbone, de préférence de 6 à 14 atomes de carbone. De manière préférée, le groupe hydrocarboné est un alkyle linéaire.

Par «chaîne hydrocarbonée en $C_2$-$C_{24}$ » on entend un groupe alkyle ou alkenyle, linéaire ou ramifié, comprenant de 2 à 24 atomes de carbone. De préférence, la chaîne hydrocarbonée est un groupe alkyle linéaire. De préférence la chaîne hydrocarbonée comprend de 6 à 16 atomes de carbone.

Dans un mode de réalisation de l'invention, le composé A2 est un composé de formule générale (III) ci-dessus dans laquelle :

- $w_1$ et $w_2$, identiques ou différents sont des nombres entiers choisis entre 0 et 1;
- $R_4$ et $R_6$ sont identiques et sont des atomes d'hydrogène ;
- $R_5$ et $R_7$ sont identiques et sont un groupe hydrocarboné, de préférence un alkyle linéaire, ayant de 1 à 24 atomes de carbone, de préférence de 4 à 18 atomes de carbone, de préférence de 6 à 16 atomes de carbone ;
- L est un groupement de liaison divalent et est un aryle en $C_6$-$C_{18}$, de préférence le phényle.

Le composé A2 diester boronique de formule (III) telle que décrite ci-dessus est obtenu par une réaction de condensation entre un acide boronique de formule générale (III-a) et des fonctions diols des composés de formule générale (III-b) et (III-c) selon le schéma réactionnel 4 ci-dessous :

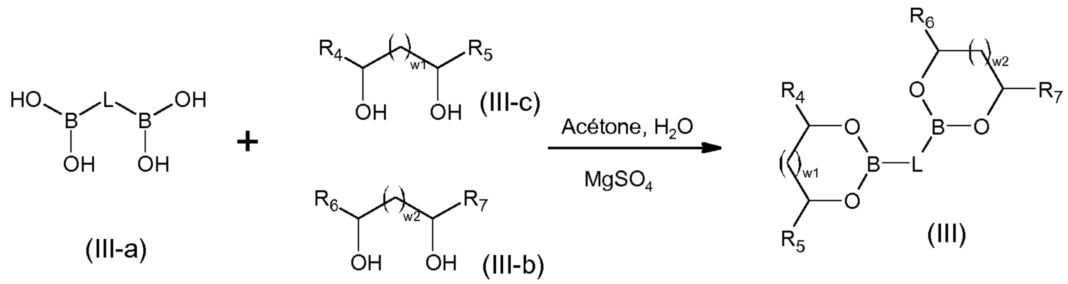

(III-a) (III-b) (III-c) (III)

Schéma 4

avec $w_1$, $w_2$, L, $R_4$, $R_5$, $R_6$ et $R_7$, tels que définis ci-dessus.

En effet, par condensation des fonctions acides boroniques du composé (III-a) avec des fonctions diols des composés de formule (III-b) et de formule (III-c), on obtient des composés ayant deux fonctions esters boronique (composé de formule (III)). Cette étape s'effectue selon des moyens bien connus de l'homme du métier.

Dans le cadre de la présente invention, le composé de formule générale (III-a) est dissous, en présence d'eau, dans un solvant polaire tel que l'acétone. La présence d'eau permet de déplacer les équilibres chimiques entre les molécules d'acide boronique de formule (III-a) et les molécules de boroxine obtenues à partir des acides boroniques de formule (III-a). En effet, il est bien connu que les acides boroniques peuvent former spontanément à température ambiante des molécules de boroxine. Or, la présence de molécules de boroxine n'est pas souhaitable dans le cadre de la présente invention.

La réaction de condensation s'effectue en présence d'un agent de déshydratation tel que le sulfate de magnésium. Cet agent permet de piéger les molécules d'eau initialement introduites ainsi que celles qui sont libérées par la condensation entre le composé de formule (III-a) et le composé de formule (III-b) et entre le composé de formule (III-a) et le composé de formule (III-c).

Dans un mode de réalisation, le composé (III-b) et le composé (III-c) sont identiques.

L'homme du métier sait adapter les quantités de réactifs de formule (III-b) et/ou (III-c) et de formule (III-a) pour obtenir le produit de formule (III).

• *Composé A2 copolymère ester boronique*

Dans un autre mode de réalisation de la composition de l'invention, le composé A2 comprenant au moins deux fonctions esters boroniques est un copolymère statistique ester boronique résultant de la copolymérisation d'au moins un monomère M3 de formule (IV) telle que décrite ci-dessous avec au moins un monomère M4 de formule (V) telle que décrite ci-dessous.

✓ Monomère M3 de formule (IV)

Le monomère M3 du composé A2 copolymère statistique ester boronique a pour formule générale (IV) dans laquelle :

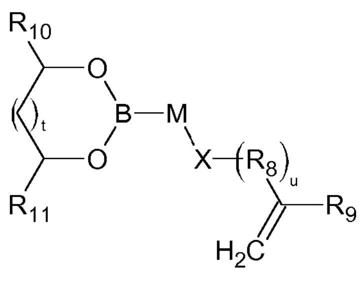

(IV)

dans laquelle :

- t est un nombre entier égal à 0 ou 1 ;

- u est un nombre entier égal à 0 ou 1 ;
- M et $R_8$ sont des groupements de liaison divalent, identiques ou différents, et sont choisis parmi le groupe formé par un aryle en $C_6$-$C_{18}$, un aralkyle en $C_7$-$C_{24}$ et alkyle en $C_2$-$C_{24}$, de préférence un aryle en $C_6$-$C_{18}$,
- X est une fonction choisie parmi le groupe formé par -O-C(O)-, -C(O)-O-, -C(O)-N(H)-, -N(H)-C(O)- , -S- , -N(H)- , -N(R'$_4$)- et -O- avec R'$_4$ une chaîne hydrocarbonée comprenant de 1 à 15 atomes de carbone;
- $R_9$ est choisi parmi le groupe formé par -H, -$CH_3$ et -$CH_2$-$CH_3$ ; de préférence -H et -$CH_3$;
- $R_{10}$ et $R_{11}$, identiques ou différents, sont choisis parmi le groupe formé par l'hydrogène et une chaîne hydrocarbonée ayant de 1 à 24 atomes de carbone, de préférence entre 4 et 18 atomes de carbone, de préférence entre 6 et 12 atomes de carbone ;

Par « alkyle en $C_2$-$C_{24}$ » on entend une chaîne hydrocarbonée saturée, linéaire ou ramifiée, comprenant de 2 à 24 atomes de carbone. De préférence, la chaîne hydrocarbonée est linéaire. De préférence la chaîne hydrocarbonée comprend de 6 à 16 atomes de carbone.

Par « chaîne hydrocarbonée comprenant de 1 à 15 atomes de carbone » on entend, un groupe alkyle ou alkenyle linéaire ou ramifié, comprenant de 1 à 15 atomes de carbone. De préférence, la chaîne hydrocarbonée est un groupe alkyle linéaire. De préférence, elle comprend de 1 à 8 atomes de carbone.

Par « chaîne hydrocarbonée comprenant de 1 à 24 atomes de carbone » on entend, un groupe alkyle ou alkenyle linéaire ou ramifié, comprenant de 1 à 24 atomes de carbone. De préférence, la chaîne hydrocarbonée est un groupe alkyle linéaire. De préférence, elle comprend de 4 à 18 atomes de carbone, de préférence entre 6 et 12 atomes de carbone.

Dans un mode de réalisation de l'invention, le monomère M3 a pour formule générale (IV) dans laquelle :

- t est un nombre entier égal à 0 ou 1 ;
- u est un nombre entier égal à 0 ou 1 ;
- M et $R_8$ sont des groupements de liaison divalents et sont différents, M est un aryle en $C_6$-$C_{18}$, de préférence le phényle, $R_8$ est un aralkyle en $C_7$-$C_{24}$, de préférence le benzyle ;
- X est une fonction choisie parmi le groupe formé par -O-C(O)-, -C(O)-O-, -C(O)-N(H)- et -O-, de préférence -C(O)-O- ou -O-C(O)- ;
- $R_9$ est choisi parmi le groupe formé par -H, -$CH_3$, de préférence -H;
- $R_{10}$ et $R_{11}$ sont différents, l'un des groupes $R_{10}$ ou $R_{11}$ est H et l'autre groupe $R_{10}$ ou $R_{11}$ est une chaîne hydrocarbonée, de préférence un groupe alkyle linéaire, ayant de 1 à 24 atomes de carbone, de préférence entre 4 et 18 atomes de carbone, de préférence entre 6 et 12 atomes de carbone.

✔ <u>Synthèse du monomère M3 de formule (IV)</u>

Dans tous les schémas exposés ci-dessous, sauf indication contraire, les variables $R_{10}$, $R_{11}$, M, u, t, X, $R_8$, R'$_4$ et $R_9$ ont la même définition que dans la formule (IV) ci-dessus.

Les monomère M3 de formule (IV) sont notamment obtenus à partir d'un procédé de préparation comprenant au moins une étape de condensation d'un acide boronique de formule générale (IV-f) avec un composé diol de formule générale (IV-g) selon le schéma réactionnel 5 ci-dessous :

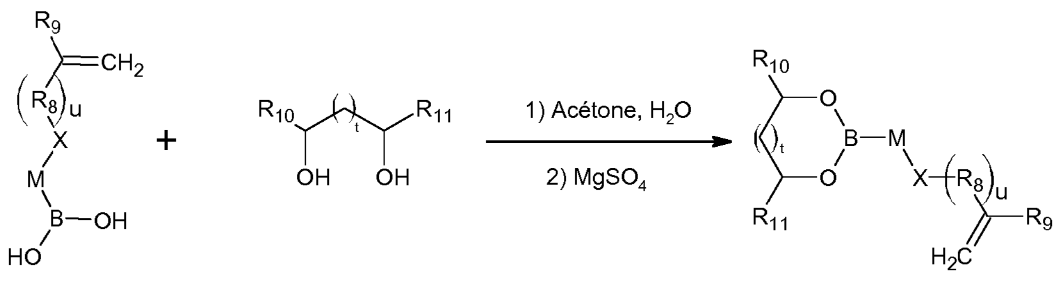


(IV-f) (IV-g) (IV)

Schéma 5

En effet, par condensation des fonctions acide boronique du composé de formule (IV-f) avec des fonctions diols des composés de formule (IV-g), on obtient un composé ester boronique de formule (IV). Cette étape s'effectue

selon des méthodes bien connues de l'homme du métier.

Dans le cadre de la présente invention, le composé de formule générale (IV-f) est dissous, en présence d'eau, dans un solvant polaire tel que l'acétone. La réaction de condensation s'effectue en présence d'un agent de déshydratation, tel que le sulfate de magnésium.

Les composés de formule (IV-g) sont disponibles commercialement auprès des fournisseurs suivants : Sigma-Aldrich®, Alfa Aesar® et TCI®.

Le composé de formule (IV-f) est obtenu directement à partir du composé de formule (IV-e) par hydrolyse selon le schéma réactionnel 6 suivant :

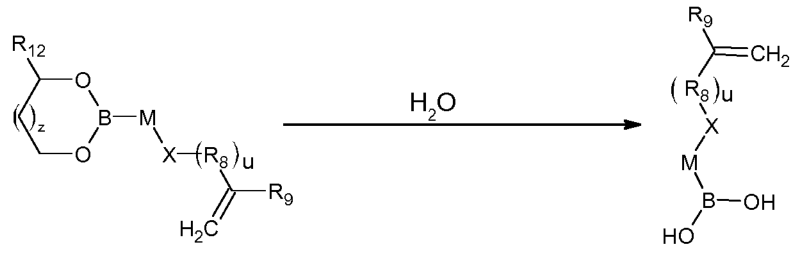


(IV-e) (IV-f)

Schéma 6

avec

- z un nombre entier égal à 0 ou 1 ;
- $R_{12}$ est choisi parmi le groupe formé par -H, $-CH_3$ et $-CH_2-CH_3$ ;
- u, X, M, $R_8$ et $R_9$ tels que définis ci-dessus.

Le composé de formule (IV-e) est obtenu par réaction d'un composé de formule (IV-c) avec un composé de formule (IV-d) selon le schéma réactionnel 7 suivant :

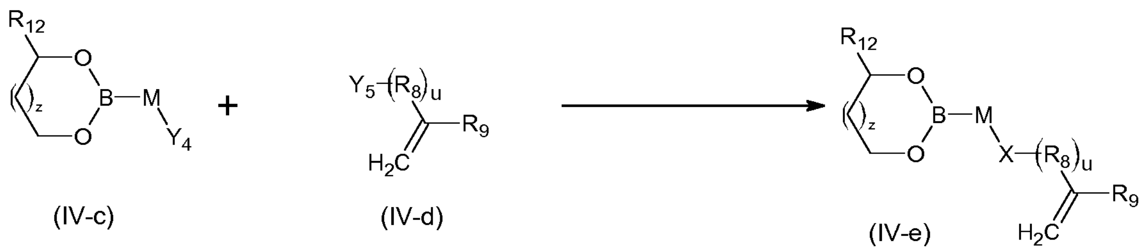

(IV-c) (IV-d) (IV-e)

Schéma 7

avec

- z, u, $R_{12}$, M, $R'_4$, $R_9$ et $R_8$ tels que définis ci-dessus ;

et dans ce schéma lorsque :

- X représente -O-C(O)-, alors $Y_4$ représente une fonction alcool -OH ou un atome d'halogène, de préférence le chlore ou le brome et $Y_5$ est une fonction acide carboxylique -C(O)-OH ;
- X représente -C(O)-O-, alors $Y_4$ représente une fonction acide carboxylique -C(O)-OH et $Y_5$ est une fonction alcool -OH ou un atome d'halogène, et de préférence le chlore ou le brome;
- X représente -C(O)-N(H)-, alors $Y_4$ représente une fonction acide carboxylique -C(O)-OH ou une fonction -C(O)-Hal, et $Y_5$ est une fonction amine $NH_2$;
- X représente -N(H)-C(O)-, alors $Y_4$ représente une fonction amine $NH_2$ et $Y_5$ est une fonction acide carboxylique -C(O)-OH ou une fonction -C(O)-Hal ;

- X représente -S-, alors $Y_4$ est un atome d'halogène et $Y_5$ est une fonction thiol -SH ou bien $Y_4$ est une fonction thiol -SH et $Y_5$ est un atome d'halogène ;
- X représente -N(H)- , alors $Y_4$ est un atome d'halogène et $Y_5$ est une fonction amine $-NH_2$ ou bien $Y_4$ est une fonction amine $-NH_2$ et $Y_5$ est un atome d'halogène;
- X représente $-N(R'_4)-$ , alors $Y_4$ est un atome d'halogène et $Y_5$ est une fonction amine $-N(H)(R'_4)$ ou bien $Y_4$ est une fonction amine $-N(H)(R'_4)$ et $Y_5$ est un atome d'halogène;
- X représente -O-, alors $Y_4$ est un atome d'halogène et $Y_5$ est une fonction alcool -OH ou bien $Y_4$ est une fonction alcool -OH et $Y_5$ est un atome d'halogène.

Ces réactions d'estérification, d'éthérification, de thioéthérification, d'alkylation ou de condensation entre une fonction amine et une fonction acide carboxylique sont bien connues de l'homme du métier. L'homme du métier sait donc choisir en fonction de la nature chimique des groupes $Y_1$ et $Y_2$ les conditions réactionnelles pour obtenir le composé de formule (IV-e).

Les composés de formule (IV-d) sont disponibles commercialement auprès des fournisseurs: Sigma-Aldrich®, TCI® et Acros Organics®.

Le composé de formule (IV-c) est obtenu par une réaction de condensation entre un acide boronique de formule (IV-a) avec au moins un composé diol de formule (IV-b) selon le schéma réactionnel 8 suivant :

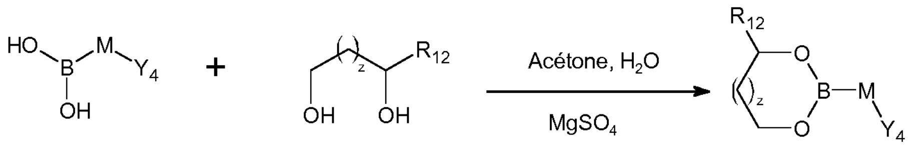


(IV-a) (IV-b) (IV-c)

Schéma 8

avec M, $Y_4$, z et $R_{12}$ tels que définis ci-dessus,

Parmi les composés de formule (IV-b), on préfère celui dans lequel $R_{12}$ est le méthyle et z=0.

Les composé de formule (IV-a) et (IV-b) sont disponibles commercialement auprès des fournisseurs suivant Sigma-Aldrich®, Alfa Aesar® et TCI®.

✓ Monomère M4 de formule générale (V) :

Le monomère M4 du composé A2 copolymère statistique ester boronique a pour formule générale (V)

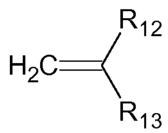
(V)

dans laquelle :

- $R_{12}$ est choisi parmi le groupe formé par -H, $-CH_3$ et $-CH_2-CH_3$, de préférence -H et $-CH_3$ ;
- $R_{13}$ est choisi parmi le groupe formé par un aryle en $C_6-C_{18}$, un aryle en $C_6-C_{18}$ substitué par un groupement $R'_{13}$, $-C(O)-O-R'_{13}$; $-O-R'_{13}$, $-S-R'_{13}$ et $-C(O)-N(H)-R'_{13}$ avec $R'_{13}$ un groupe alkyle en $C_1-C_{25}$ .

Par « groupe alkyle en $C_1-C_{25}$ », on entend une chaîne hydrocarbonée saturée, linéaire ou ramifiée, comprenant de 1 à 25 atomes de carbone. De préférence, la chaîne hydrocarbonée est linéaire.

Par groupe « aryle en $C_6-C_{18}$ substitué par un groupement $R_{13}$ », on entend un composé hydrocarboné aromatique comprenant de 6 à 18 atomes de carbone dont au moins un atome de carbone du cycle aromatique est substitué par un groupe alkyle en $C_1-C_{25}$ tel que défini ci-dessus.

De préférence, $R_{13}$ est choisi parmi le groupe formé par un aryle en $C_6-C_{18}$, de préférence un aryle en $C_6$, et $-C(O)-O-R'_{13}$ avec $R'_{13}$ un groupe alkyle en $C_1-C_{25}$ .

Parmi les monomères de formule (V), les monomères répondant à la formule (V-A) font partie des préférés :

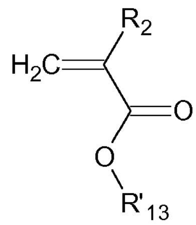

(V-A)

dans laquelle :

- $R_2$ est choisi parmi le groupe formé par -H, $-CH_3$ et $-CH_2-CH_3$, de préférence - H et $-CH_3$ ;
- $R'_{13}$ un groupe alkyle en $C_1$-$C_{25}$, de préférence un alkyle linéaire en $C_1$-$C_{25}$, de manière encore plus préféré un alkyle linéaire en $C_5$-$C_{15}$.

✔ Obtention du monomère M4 :

Les monomères de formules (V) et (V-A) sont bien connus de l'homme du métier. Ils sont commercialisés par Sigma-Aldrich® et TCI®.

✔ Synthèse du composé A2 copolymère statistique ester boronique

L'homme du métier est à même de synthétiser les copolymères statistiques ester boronique en faisant appel à ses connaissances générales. La copolymérisation peut être amorcée en masse ou en solution dans un solvant organique par des composés générateurs de radicaux libres. Par exemple, les copolymères statistiques ester boronique sont obtenus par les procédés connus de copolymérisation radicalaire, notamment contrôlée telle que la méthode dénommée polymérisation radicalaire contrôlée par transfert de chaîne réversible par addition-fragmentation (en anglais : Réversible Addition-Fragmentation Chain Transfer (RAFT)) et la méthode dénommée polymérisation radicalaire contrôlée par transfert d'atome (en anglais Atom Transfer Radical Polymerization (ARTP)). La polymérisation radicalaire conventionnelle et la télomérisation peuvent également être employées pour préparer les copolymères de l'invention (Moad, G.; Solomon, D. H., The Chemistry of Radical Polymerization. 2nd ed.; Elsevier Ltd: 2006; p 639 ; Matyaszewski, K.; Davis, T. P. Handbook of Radical Polymerization; Wiley-Interscience: Hoboken, 2002; p 936)).

Un procédé de préparation d'un copolymère statistique ester boronique comprend au moins une étape de polymérisation (a) dans laquelle on met en contact au moins :

i) un premier monomère M3 de formule générale (IV) :

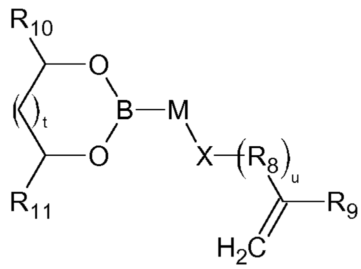

(IV)

dans laquelle :

- t est un nombre entier égal à 0 ou 1 ;
- u est un nombre entier égal à 0 ou 1 ;
- M et $R_8$ sont des groupements de liaison divalents, identiques ou différents, et sont choisis parmi le groupe formé par un aryle en $C_6$-$C_{18}$, un aralkyle en $C_7$-$C_{24}$ et un alkyle en $C_2$-$C_{24}$, de préférence un aryle en $C_6$-$C_{18}$ ;
- X est une fonction choisie parmi le groupe formé par -O-C(O)-, -C(O)-O-, -C(O)-N(H)-, -N(H)-C(O)- , -S- , -N(H)- , $-N(R'_4)-$ et -O- avec $R'_4$ une chaîne hydrocarbonée comprenant de 1 à 15 atomes de carbone;

- $R_9$ est choisi parmi le groupe formé par -H, $-CH_3$ et $-CH_2-CH_3$ ; de préférence -H ;
- $R_{10}$ et $R_{11}$, identiques ou différents, sont choisis parmi le groupe formé par l'hydrogène et une chaîne hydrocarbonée ayant de 1 à 24 atomes de carbone, de préférence entre 4 et 18 atomes de carbone, de préférence entre 6 et 12 atomes de carbone ;

ii) au moins un second monomère M4 de formule générale (V) :

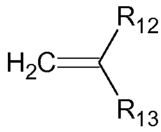

(V)

dans laquelle :

- $R_{12}$ est choisi parmi le groupe formé par -H, $-CH_3$ et $-CH_2-CH_3$, de préférence -H ou $-CH_3$ ;
- $R_{13}$ est choisi parmi le groupe formé par un aryle en $C_6$-$C_{18}$, un aryle en $C_6$-$C_{18}$ substitué par un groupement $R'_{13}$, -C(O)-O-$R'_{13;}$ -O-$R'_{13}$, -S-$R'_{13}$ et -C(O)-N(H)-$R'_{13}$ avec $R'_{13}$ un groupe alkyle en $C_1$-$C_{25}$ .

iii) au moins une source de radicaux libres.

Le procédé peut comprendre en outre iv) au moins un agent de transfert de chaîne.

Les préférences et définitions décrites pour les formules générales (IV) et (V) s'appliquent également au procédé.

Les sources de radicaux et les agents de transferts sont ceux qui ont été décrits pour la synthèse de copolymères statistiques polydiols. Les préférences décrites pour les sources de radicaux et les agents de transferts s'appliquent également à ce procédé.

✓ Propriétés des composés A2 copolymères statistiques ester boronique

Avantageusement, la chaîne formée par l'enchaînement des groupes $R_{10}$, M, $(R_8)_u$ avec u, un nombre entier égal à 0 ou 1, et X du monomère M3 de formule générale (IV) présente un nombre total d'atomes de carbone allant de 8 à 38, de préférence allant de 10 à 26.

Avantageusement, les chaînes latérales du copolymère statistique ester boronique ont une longueur moyenne supérieure à 8 atomes de carbone, de préférence allant de 11 à 16. Cette longueur de chaînes permet de solubiliser le copolymère statistique ester boronique dans un milieu hydrophobe. Par « longueur moyenne de chaîne latérale » on entend la longueur moyenne des chaînes latérales de chaque monomère constituant le copolymère. L'homme du métier sait obtenir cette longueur moyenne en sélectionnant de manière appropriée les types et le ratio de monomères constituants le copolymère statistique ester boronique.

Avantageusement, le copolymère statistique ester boronique a un pourcentage molaire de monomère de formule (IV) dans ledit copolymère allant de 0,25 à 20%, de préférence de 1 à 10%.

Avantageusement, le copolymère statistique ester boronique a un pourcentage molaire de monomère de formule (IV) dans ledit copolymère allant de 0,25 à 20%, de préférence de 1 à 10% et un pourcentage molaire de monomère de formule (V) dans ledit copolymère allant de 80 à 99,75%, de préférence de 90 à 99%.

Avantageusement, le copolymère statistique ester boronique a un degré de polymérisation moyen en nombre allant de 50 à 1500, de préférence de 80 à 800.

Avantageusement, le copolymère statistique ester boronique a un indice de polydispersité (Ip) allant de 1,04 à 3,54 ; de préférence allant de 1,10 à 3,10. Ces valeurs sont obtenues par chromatographie d'exclusion stérique en utilisant le tétrahydrofurane comme éluant et une calibration polystyrène.

Avantageusement, le copolymère statistique ester boronique a une masse molaire moyenne en nombre allant de 10 000 à 200 000 g/mol de préférence de 25 000 à 100 000 g/mol. Ces valeurs sont obtenues par chromatographie d'exclusion stérique en utilisant le tétrahydrofurane comme éluant et une calibration polystyrène.

✓ Caractéristiques des nouvelles compositions de l'invention

Les compositions de l'invention résultant du mélange d'au moins un copolymère statistique polydiol A1 tel que défini ci-dessus et d'au moins un composé A2 tel que défini précédemment présentent des propriétés rhéologiques très

variées selon la proportion des composés A1 et A2 utilisée.

Les copolymères statistiques polydiols A1 et les composés A2 tels que définis ci-dessus présentent l'avantage d'être associatifs et d'échanger des liens chimiques de manière thermoréversible, notamment dans un milieu hydrophobe, notamment un milieu hydrophobe apolaire.

Dans certaines conditions, les copolymères statistiques polydiols A1 et les composés A2 tels que définis ci-dessus peuvent être réticulés.

Les copolymères statistiques polydiols A1 et les composés A2 présentent aussi l'avantage d'être échangeables.

Par « associatif », on entend qu'il s'établit des liens chimiques covalents de type ester boronique entre les copolymères statistiques polydiols A1 et les composés A2 comprenant au moins deux fonctions ester boronique. La figure 4 illustre des polymères associatifs. Suivant la fonctionnalité des polydiols A1 et des composés A2 et suivant la composition des mélanges, la formation des liens covalents entre les polydiols A1 et les composés A2 pourra amener ou non à la formation d'un réseau polymérique tridimensionnel.

Par « lien chimique », on entend un lien chimique covalent de type ester boronique.

Par « échangeable », on entend que les composés sont capables d'échanger des liens chimiques entre eux sans que le nombre total de fonctions chimiques soit modifié. Les liens esters boroniques des composés A2 ainsi que les liens esters boroniques formés par association des copolymères statistiques polydiols A1 et des composés A2 peuvent s'échanger avec des fonctions diols présentes dans la composition pour former de nouveaux esters boroniques et de nouvelles fonctions diols sans que le nombre total de fonctions ester boronique et de fonctions diol ne soit affecté. La réaction chimique d'échange (transestérification) est illustrée dans le schéma réactionnel 9 suivant :

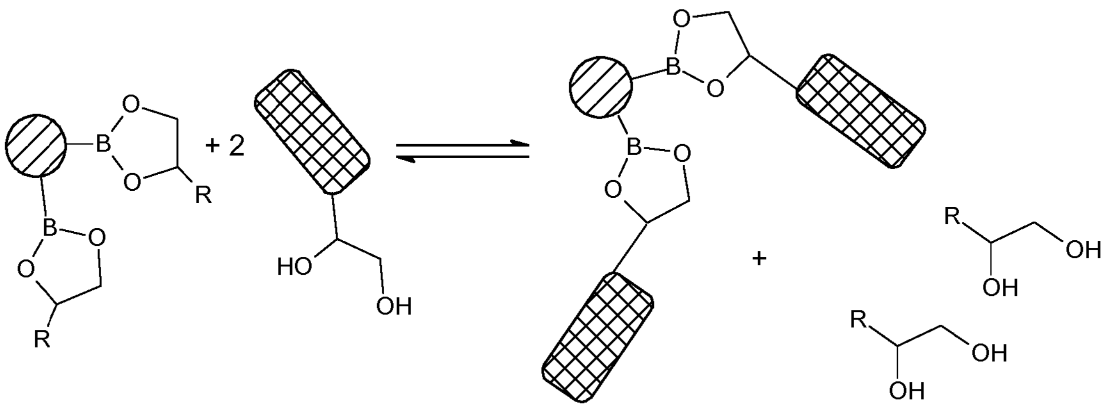

Schéma 9

avec :

- R un groupe chimique du composé A2,
- le rond hachuré symbolise le reste de la structure chimique du composé A2,
- le rectangle quadrillé symbolise le reste de la structure chimique du polymère statistique polydiol A1.

Les liens esters boroniques des composés A2 ainsi que les liens esters boroniques formés par association des copolymères statistiques polydiols A1 et des composés A2 peuvent aussi s'échanger pour former de nouveaux esters boroniques sans que le nombre total de fonctions ester boronique ne soit affecté. Cet autre processus d'échange de liens chimiques s'effectue par réaction de métathèse, via des échanges successifs des fonctions ester boronique en présence de diols; ce processus est illustré en figure 9. Le copolymère statistique polydiol A1-1, qui était associé au polymère A2-1, a échangé un lien ester boronique avec le copolymère statistique ester boronique A2-2. Le copolymère statistique polydiol A1-2, qui était en associé au polymère A2-2, a échangé un lien ester boronique avec le copolymère statistique ester boronique A2-1 ; le nombre total de lien ester boronique dans la composition étant inchangé et est égal à 4. Le copolymère A1-1 est alors associé à la fois avec le polymère A2-1 et avec le copolymère A2-2. Le copolymère A1-2 est alors associé à la fois avec le copolymère A2-1 et avec le copolymère A2-2.

Un autre processus d'échange de liens chimiques est illustré en figure 9, dans laquelle on peut observer que le copolymère statistique polydiol A1-1, qui était associé au polymère A2-1, a échangé deux liens esters boroniques avec le copolymère statistique ester boronique A2-2. Le copolymère statistique polydiol A1-2, qui était en associé au polymère A2-2, a échangé deux liens esters boroniques avec le copolymère statistique ester boronique A2-1 ; le nombre total de lien ester boronique dans la composition étant inchangé et est égal à 4. Le copolymère A1-1 est alors associé

avec le polymère A2-2. Le copolymère A1-2 est alors avec le polymère A2-1. Le copolymère A2-1 a été échangé avec le polymère A2-2.

Par « réticulé », on entend un copolymère sous forme d'un réseau obtenu par l'établissement de ponts entre les chaînes macromoléculaires du copolymère. Ces chaînes reliées entre elles sont pour la plupart distribuées dans les trois dimensions de l'espace. Un copolymère réticulé forme un réseau tridimensionnel. Dans la pratique, la formation d'un réseau de copolymère est assurée par un test de solubilité. On peut s'assurer qu'un réseau de copolymères a été formé en plaçant le réseau de copolymère dans un solvant connu pour dissoudre les copolymères non réticulés de même nature chimique. Si le copolymère gonfle au lieu de se dissoudre, l'homme du métier sait qu'un réseau a été formé. La figure 3 illustre ce test de solubilité.

Par « réticulable » on entend un copolymère susceptible d'être réticulé.

Par « réticulé de manière réversible » on entend un copolymère réticulé dont les ponts sont formés par une réaction chimique réversible. La réaction chimique réversible peut se déplacer dans un sens ou dans un autre, entraînant un changement de structure du réseau de polymère. Le copolymère peut passer d'un état initial non réticulé à un état réticulé (réseau tridimensionnel de copolymères) et d'un état réticulé à un état initial non réticulé. Dans le cadre de la présente invention, les ponts qui se forment entre les chaînes de copolymères sont labiles. Ces ponts peuvent se former ou s'échanger grâce à une réaction chimique qui est réversible. Dans le cadre de la présente invention, la réaction chimique réversible est une réaction de transestérification entre des fonctions diols d'un copolymère statistique (copolymère A1) et des fonctions ester boronique d'un agent de réticulation (composé A2). Les ponts formés sont des liaisons de type ester boronique. Ces liaisons ester boronique sont covalentes et labiles du fait de la réversibilité de la réaction de transestérification.

Par « réticulé de manière thermoréversible », on entend un copolymère réticulé grâce à une réaction réversible dont le déplacement dans un sens ou dans l'autre sens est contrôlé par la température. Le mécanisme de réticulation thermoréversible de la composition de l'invention est présenté schématiquement en figure 4. De manière inattendue, la demanderesse a observé qu'à faible température, le copolymère polydiol A1 (symbolisé par le copolymère portant des fonctions A sur la figure 4) n'est pas ou peu réticulé par les composés esters boroniques A2 (symbolisé par le composé portant des fonctions B sur la figure 4). Quand la température augmente, les fonctions diol du copolymère A1 réagissent avec les fonctions ester boronique du composé A2 par une réaction de transestérification. Les copolymères statistiques polydiols A1 et les composés A2 comprenant au moins deux fonctions esters boroniques se lient alors ensemble et peuvent s'échanger. Suivant la fonctionnalité des polydiols A1 et des composés A2 et suivant la composition des mélanges, il peut se former un gel dans le milieu, notamment lorsque le milieu est apolaire. Lorsque la température diminue à nouveau, les liaisons esters boroniques entre les copolymères statistiques polydiols A1 et les composés A2 se rompent, et le cas échéant, la composition perd son caractère gélifié.

La quantité de liaisons ester boronique (ou lien ester boronique) pouvant s'établir entre les copolymères statistiques polydiols A1 et les composés A2 est ajustée par l'homme du métier au moyen d'une sélection appropriée du copolymère statistique polydiol A1, du composé A2 et de la composition du mélange.

En outre, l'homme du métier sait sélectionner la structure du composé A2 en fonction de la structure du copolymère statistique A1. De préférence, lorsque dans le copolymère statistique A1 comprenant au moins un monomère M1 dans lequel y=1, alors le composé A2 de formule générale (III) ou le copolymère A2 comprenant au moins un monomère M3 de formule (IV) sera choisi de de préférence avec $w_1$= 1, $w_2$=1 et t=1, respectivement.

Avantageusement, la teneur en copolymère statistique A1 dans la composition va de 0,1% à 99,5% en poids par rapport au poids total de la composition, de préférence va de 0,25% à 80% en poids par rapport au poids total de la composition finale, de manière plus préférée de 1% à 50% en poids par rapport au poids total de la composition finale.

Avantageusement, la teneur en composé A2 dans la composition va de 0,1% à 99,5% en poids par rapport au poids total de la composition, de préférence va de 0,25% à 80% en poids par rapport au poids total de la composition finale, de manière plus préférée de préférence de 0,5% à 50% en poids par rapport au poids total de la composition finale.

Dans un mode de réalisation, la teneur en copolymère statistique A1 dans la composition va de 0,5 à 99,5% en poids par rapport au poids total de la composition et la teneur en composé A2, notamment en copolymère statistique ester boronique dans la composition va de 0,5% à 99,5% en poids par rapport au poids total de la composition.

Préférentiellement, le ratio massique entre le composé statistique polydiol A1 et composé A2 (ratio A1/A2) dans la composition va de 0,005 à 200, de préférence de 0,05 à 20, de manière encore plus préférée de 0,1 à 10.

Dans un mode de réalisation, la composition de l'invention comprend :

- 0,5% à 40 % en poids , par rapport au poids total de la composition, d'un mélange d'au moins un copolymère statistique polydiol A1 tel que défini précédemment et d'au moins un composé A2 tel que défini précédemment, de préférence le mélange comprenant de 0,5% à 99,5% en poids du copolymère statistique A1 par rapport au poids total du mélange et de 0,5% à 99,5% en poids du composé A2, notamment en copolymère statistique ester boronique, par rapport au poids total du mélange ;
- 60% à 99,5% en poids, par rapport au poids total de la composition, d'un milieu hydrophobe.

Dans un mode de réalisation, la composition de l'invention consiste essentiellement en :

- 0,5% à 40 % en poids, par rapport au poids total de la composition, d'un mélange d'au moins un copolymère statistique polydiol A1 tel que défini précédemment et d'au moins un composé A2 tel que défini précédemment, de préférence le mélange comprenant de 0,5% à 99,5% en poids du copolymère statistique A1 par rapport au poids total du mélange et de 0,5% à 99,5% en poids du composé A2, notamment en copolymère statistique ester boronique, par rapport au poids total du mélange ;
- 60% à 99,5% en poids, par rapport au poids total de la composition, d'un milieu hydrophobe.

Dans un mode de réalisation, la composition de l'invention se présente sous forme d'une composition-mère. Par « composition-mère » on entend, une composition dont l'homme du métier pourra faire des solutions-filles par prélèvement d'une certaine quantité de solution mère complétée par l'apport d'une quantité nécessaire de diluant (solvant ou autre) pour obtenir une concentration souhaitée. Une composition-fille est donc obtenue par dilution d'une composition-mère.

Un milieu hydrophobe peut être un solvant, une huile minérale, une huile naturelle, une huile synthétique.

Dans un mode de réalisation, la composition de l'invention peut comprendre en outre au moins un additif choisi parmi le groupe formé par les thermoplastiques, les élastomères, les élastomères thermoplastiques, les polymères thermodurcissables, les pigments, les colorants, les charges, les plastifiants, les fibres, les antioxydants, les additifs pour lubrifiants, les agents de compatibilité, les agents anti-mousses, les additifs dispersants, les promoteurs d'adhérences et les stabilisants.

✓ Procédé de préparation des nouvelles compositions de l'invention

Les nouvelles compositions de l'invention sont préparées par des moyens bien connus de l'homme du métier. Par exemple, il suffit à l'homme du métier notamment de:

- prélever une quantité voulue d'une solution comprenant le copolymère statistique polydiol A1 tel que défini ci-dessus ;
- prélever une quantité voulue d'une solution comprenant le composé A2 tel que défini ci-dessus ;
- mélanger les deux solutions prélevées pour obtenir la composition de l'invention.

L'homme du métier sait aussi ajuster les différents paramètres de la composition de l'invention pour obtenir soit une composition dans laquelle le copolymère statistique polydiol A1 et le composé A2, notamment le copolymère statistique ester boronique, sont associés soit une composition dans laquelle le copolymère statistique polydiol A1 et le composé A2, notamment le copolymère statistique ester boronique, sont réticulés. Par exemple, l'homme du métier sait ajuster notamment:

- le pourcentage molaire de monomère M1 portant des fonctions diols dans le copolymère statistique polydiol A1 ;
- le pourcentage molaire de monomère M3 portant des fonctions ester boronique dans le copolymère statistique ester boronique A2 ;
- la longueur moyenne des chaînes latérales du copolymère statistique polydiol A1 ;
- la longueur moyenne des chaînes latérales du copolymère statistique ester boronique A2 ;
- la longueur du monomère M3 du copolymère statistique ester boronique A2 ;
- la longueur du composé diester boronique A2 ;
- le degré de polymérisation moyen en nombre des copolymères statistiques polydiol A1 et des copolymères statistiques ester boronique A2 ;
- le pourcentage massique du copolymère statistique polydiol A1 ;
- le pourcentage massique du composé diester boronique A2 ;
- le pourcentage massique du copolymère statistique ester boronique A2 ;

✓ Utilisation des nouvelles compositions de l'invention

Les compositions de l'invention peuvent être utilisées dans toutes les solutions dont la viscosité varie en fonction de la température. Les compositions de l'invention permettent d'épaissir un fluide et de contrôler sa viscosité. Les copolymères statistiques polydiols A1, les composés A2 et les compositions peuvent être utilisés dans les domaines aussi variés que la récupération améliorée du pétrole, l'industrie papetière, les peintures, les additifs alimentaires, la formulation cosmétique ou pharmaceutique.

Par exemple, les compositions de l'invention peuvent être ajoutées dans des compositions pour lubrifier des pièces mécaniques. En effet, les nouvelles compositions de l'invention lorsqu'elles sont introduites dans une huile de

base ont un comportement inversé vis-à-vis d'une modification de la température par rapport au comportement de l'huile de base et des additifs rhéologiques de type polymère de l'art antérieur. Contrairement à l'huile de base qui se fluidifie lorsque la température augmente, les compositions de la présente invention présentent l'avantage de s'épaissir lorsque la température augmente. La formation des liaisons covalentes réversibles permet d'augmenter (de façon réversible) la masse molaire des polymères et limite donc la chute de la viscosité de l'huile de base à hautes températures. De manière avantageuse, la viscosité de la composition lubrifiante est ainsi contrôlée et dépend moins des fluctuations de température.

## EXEMPLES

Les exemples suivants illustrent l'invention sans la limiter.

### 1 Synthèse de copolymères statistiques A1 polyméthacrylates porteurs de fonction diol

o *1.1 : A partir d'un monomère porteur d'une fonction diol protégée sous forme de cétal*

Dans un mode de réalisation, le copolymère statistique A1 de l'invention est obtenu selon le schéma réactionnel 10 suivant :

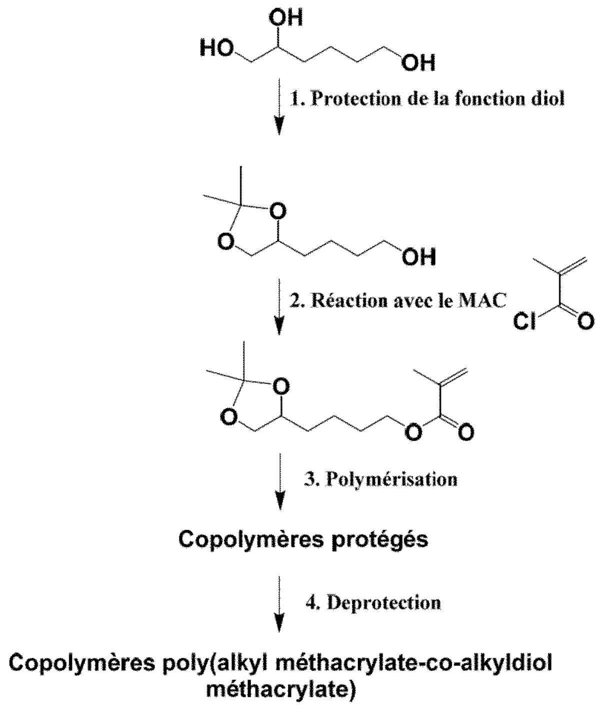


Schéma 10

*1.1.1 Synthèse du monomère M1 porteur d'une fonction diol protégée sous forme de cétal*

La synthèse d'un monomère méthacrylate porteur d'une fonction diol protégée sous forme de cétal s'effectue en deux étapes (étapes 1 et 2 du schéma réactionnel 10) selon le protocole ci-dessous :

1$^{ière}$ étape :

42,1 g (314 mmol) d'1,2,6-hexane triol (1,2,6-HexTri) sont introduits dans un ballon d'1L. 5,88 g de tamis moléculaire (4°A) sont ajoutés suivis de 570 mL d'acétone. 5,01 g (26,3 mmol) d'acide para-toluène-sulfonique (pTSA) sont ensuite lentement additionnés. Le milieu réactionnel est laissé sous agitation pendant 24 heures à température ambiante. 4,48 g (53,3 mmol) de $NaHCO_3$ sont alors ajoutés. Le milieu réactionnel est laissé sous agitation pendant 3 heures à température ambiante avant d'être filtré. Le filtrat est alors concentré sous vide au moyen d'un évaporateur rotatif jusqu'à obtention d'une suspension de cristaux blancs. 500 mL d'eau sont alors ajoutés à cette suspension. La solution ainsi obtenue est extraite avec 4 × 300 mL de dichlorométhane. Les phases organiques sont regroupées et séchées sur $MgSO_4$. Le solvant est ensuite entièrement évaporé sous vide à 25°C au moyen d'un évaporateur

rotatif.

2ème étape :

Le produit ainsi obtenu est ensuite introduit dans un ballon d'1L surmonté d'une ampoule à brome. La verrerie utilisée ayant été au préalable séchée une nuit dans une étuve thermostatée à 100°C. 500 mL de dichlorométhane anhydre sont ensuite introduits dans le ballon suivis de 36,8 g (364 mmol) de triéthylamine. Une solution de 39,0 g (373 mmol) de chlorure de méthacryloyle (MAC) dans 50 mL de dichlorométhane anhydre est introduite dans l'ampoule à brome. Le ballon est alors placé dans un bain de glace pour baisser la température du milieu réactionnel aux alentours de 0°C. La solution de chlorure de méthacryloyle est alors ajoutée goutte à goutte sous forte agitation. Une fois l'addition du chlorure de méthacryloyle terminée, le milieu réactionnel est laissé sous agitation 1 heure à 0°C, puis 23 heures à température ambiante. Le milieu réactionnel est ensuite transféré dans un erlenmeyer de 3 L et 1 L de dichlorométhane est ajouté. La phase organique est ensuite successivement lavée avec 4 × 300 mL d'eau, 6 × 300 mL d'une solution aqueuse d'acide chlorhydrique à 0,5 M, 6 × 300 mL d'une solution aqueuse saturée de $NaHCO_3$ et de nouveau 4 × 300 mL d'eau. La phase organique est séchée sur $MgSO_4$, filtrée puis concentrée sous vide à l'aide d'un évaporateur rotatif pour donner 64,9 g (rendement de 85,3 %) de monomère diol protégé sous la forme d'un liquide jaune clair dont les caractéristiques sont les suivantes :

$^1$H RMN (400 MHz, CDCl3) $\delta$ : 6,02 (singulet, 1H), 5,47 (singulet, 1H), 4,08 (triplet, J = 6,8 Hz, 2H), 4,05-3,98 (multiplet, 1H), 3,96 (doublet de doublets, J = 6 Hz et J = 7,6 Hz, 1H), 3,43 (doublet de doublet, J = 7,2 Hz et J = 7,2 Hz, 1H), 1,86 (doublet de doublets, J = 1,2 Hz et J = 1,6 Hz, 3H), 1,69-1,33 (multiplet, 6H), 1,32 (singulet, 3H), 1,27 (singulet, 3H).

*1.1.2 Synthèse de copolymères méthacrylates selon l'invention portant des fonctions diol*

La synthèse des copolymères méthacrylates portant des fonctions diol selon l'invention s'effectue en deux étapes (étapes 3 et 4 du schéma réactionnel 10) :

- Copolymérisation de deux monomères méthacrylate d'alkyle avec un monomère méthacrylate porteur d'une fonction diol protégée sous forme de cétal ;
- Déprotection du copolymère.

Plus précisément, la synthèse du copolymère s'effectue selon le protocole suivant:
10,5 g (31,0 mmol) de méthacrylate de stéaryle (StMA), 4,76 g (18,7 mmol) de méthacrylate de lauryle (LMA), 3,07 g (12,7 mmol) de méthacrylate porteur d'une fonction diol protégée sous forme de cétal obtenu selon le protocole décrit au paragraphe 1.1.1, 68,9 mg (0,253 mmol) de dithiobenzoate de cumyle et 19,5 mL d'anisole sont introduits dans tube Schlenk de 100 mL. Le milieu réactionnel est placé sous agitation et 8,31 mg (0,0506 mmol) d'azobisisobutyronitrile (AIBN) en solution dans 85 $\mu$L d'anisole sont introduits dans le tube Schlenk. Le milieu réactionnel est ensuite dégazé pendant 30 minutes en faisant buller de l'argon avant d'être porté à 65°C pour une durée de 16 heures. Le tube de Schlenk est placé dans un bain de glace pour arrêter la polymérisation, puis le polymère est isolé par précipitation dans le méthanol, filtration et séchage sous vide à 30°C pendant une nuit.

On obtient ainsi un copolymère présentant une masse molaire moyenne en nombre ($M_n$) de 41 000 g/mol, un indice de polydispersité (Ip) de 1,22 et un degré de polymérisation moyen en nombre ($DP_n$) de 167. Ces valeurs sont respectivement obtenues par chromatographie d'exclusion stérique en utilisant le tétrahydrofurane comme éluant et une calibration polystyrène et par suivi de la conversion en monomères au cours de la copolymérisation.

La déprotection du copolymère s'effectue selon le protocole suivant :
7,02 g de copolymère contenant environ 20% de fonction diol protégée obtenus précédemment sont introduits dans un erlenmeyer de 500 mL. 180 mL de dioxane sont ajoutés et le milieu réactionnel est placé sous agitation à 30 °C. 3 mL d'une solution aqueuse d'acide chlorhydrique à 1M puis 2,5 mL d'une solution aqueuse d'acide chlorhydrique 35% massique sont ajoutés goutte à goutte. Le milieu réactionnel devient alors légèrement opaque et 20 mL de THF sont introduits pour rendre le milieu complètement homogène et transparent. Le milieu réactionnel est alors laissé sous agitation à 40°C pendant 48 heures. Le copolymère est récupéré par une précipitation dans méthanol, filtration et séchage sous vide à 30°C pendant une nuit.

On obtient un copolymère poly(alkyl méthacrylate-co-alkyldiol méthacrylate) contenant environ 20% molaire d'unités monomères diol M1, et présentant une longueur moyenne des chaînes alkyles pendantes de 13.8 atomes de carbone.

◦ *1.2 : A partir d'un monomère porteur d'une fonction diol protégée sous forme d'ester boronique*

Dans un autre mode de réalisation, le copolymère statistique A1 de l'invention est obtenu selon le schéma réactionnel 11 suivant :

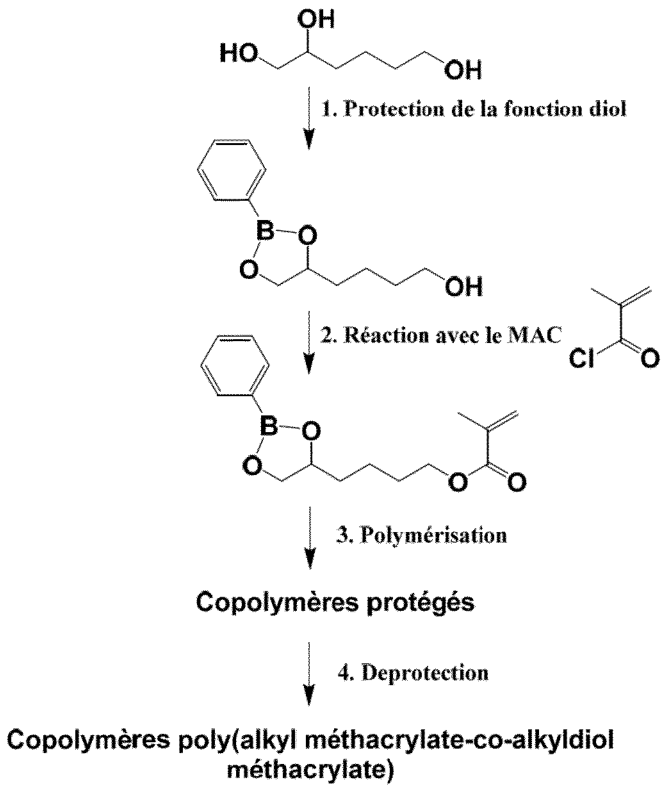


Schéma 11

*1.2.1 Synthèse du monomère M1 porteur d'une fonction diol protégée sous forme d'ester boronique*

La synthèse d'un monomère méthacrylate porteur d'une fonction diol protégée sous forme d'ester s'effectue en deux étapes (étapes 1 et 2 du schéma 11) selon le protocole suivant :

1$^{ière}$ étape :
6,01 g (49,3 mmol) d'acide phénylboronique (PBA) et 300 mL d'acétone sont introduits dans un bécher de 500 mL, suivis d'1,5 mL d'eau. Le milieu réactionnel est placé sous agitation et 6,07 g (45,2 mmol) d'1,2,6-hexanetriol sont ajoutés lentement. Un excès de sulfate de magnésium est ajouté au milieu réactionnel afin de piéger l'eau initialement introduite ainsi que l'eau libérée par la condensation entre l'acide phénylboronique et le 1,2,6-hexanetriol. Le milieu réactionnel est laissé sous agitation à température ambiante pendant 30 minutes avant d'être filtré puis concentré sous vide au moyen d'un rotavapeur.
2$^{ième}$ étape :
Le liquide jaune clair ainsi obtenu à l'étape précédente est ensuite introduit dans un ballon d'1L surmonté d'une ampoule à brome. La verrerie utilisée ayant été au préalable pré-séchée une nuit dans une étuve thermostatée à 100°C. 90 mL de dichlorométhane anhydre sont ensuite introduits dans le ballon suivis de 6,92 g (68,4 mmol) de triéthylamine. Une solution de 5,82 g (55,7 mmol) de chlorure de méthacryloyle (MAC) dans 10 mL de dichlorométhane anhydre est introduite dans l'ampoule à brome. Le ballon est alors placé dans un bain de glace pour baisser la température du milieu réactionnel aux alentours de 0°C. La solution de chlorure de méthacryloyle est alors ajoutée goutte à goutte sous forte agitation. Une fois l'addition du chlorure de méthacryloyle terminée, le milieu réactionnel est laissé sous agitation 1 heure à 0°C, puis 17 heures à température ambiante. Le milieu réactionnel est ensuite transféré dans un erlenmeyer de 500 mL et 300 mL de dichlorométhane sont ajoutés. La phase organique est ensuite successivement lavée avec 4 × 100 mL d'eau, 4 × 100 mL d'une solution aqueuse d'acide chlorhydrioque à 0,1 M, 4 × 100 mL d'une solution aqueuse saturée de $NaHCO_3$ et de nouveau 4 × 100 mL d'eau. La phase organique est séchée sur $MgSO_4$, filtrée puis concentrée sous vide à l'aide d'un évaporateur rotatif pour donner 11,6 g (rendement de 89 %) de monomère diol protégé sous la forme d'un liquide de couleur jaune clair dont les caractéristiques sont les suivantes :
$^1$H RMN (400 MHz, CDCl3) δ : 7,81 (doublet de doublets, J = 4 Hz et J = 8 Hz, 2H), 7,48 (triplet de triplets, J = 1,2 Hz et J = 7,2 Hz, 1H), 7,38 (triplet de triplets, J = 1,2 Hz et J = 6,8 Hz, 1 H), 6,10 (singulet, 1H), 5,55(singulet, 1H), 4,63-4,53 (multiplet, 1H), 4,44 (doublet de doublets, J= 7,6 Hz et J = 8,8 Hz, 1H), 4,18 (triplet, J = 6,8 Hz, 2H), 3,95

(doublet de doublets, J = 6,8 Hz et J = 8,8 Hz, 1H), 1,94 (doublet de doublets, J = 1,2 Hz et J = 1,6 Hz, 3H), 1,81-1,47 (multiplet, 6H)

*1.2.2 Synthèse de copolymères méthacrylates selon l'invention portant des fonctions diol*

La synthèse des copolymères méthacrylates portant des fonctions diol selon l'invention s'effectue en deux étapes (étapes 3 et 4 du schéma 11) :

- Copolymérisation de deux monomères méthacrylate d'alkyle avec un monomère méthacrylate porteur d'une fonction diol protégée sous forme d'ester boronique;
- Déprotection du copolymère.

Les modes opératoires suivants décrivent la synthèse d'un copolymère poly(alkyl méthacrylate-co-alkyldiol méthacrylate) contenant environ 10% mol. d'unités monomères diol, et présentant une longueur moyenne des chaînes alkyles pendantes de 13.8 atomes de carbone.

La synthèse du polymère s'effectue selon le protocole suivant :

13,5 g (40 mmol) de méthacrylate de stéaryle (StMA), 12 g (47,2 mmol) de méthacrylate de lauryle (LMA), 3,12 g (10,8 mmol) de méthacrylate porteur d'une fonction diol protégée sous forme d'ester boronique, 92,1 mg (0,416 mmol) de dithiobenzoate de cumyle et 34 mL d'anisole sont introduits dans un tube de Schlenk de 100 mL. Le milieu réactionnel est placé sous agitation et 13,7 mg (0,0833 mmol) d'azobisisobutyronitrile (AIBN) en solution dans 135 μL d'anisole sont introduits dans le tube de Schlenk. Le milieu réactionnel est ensuite dégazé pendant 30 minutes en faisant bullé de l'argon avant d'être porté à 65°C pour une durée de 24 heures. Le tube de Schlenk est placé dans un bain de glace pour arrêter la polymérisation et 30 mL de tétrahydrofurane (THF) sont ensuite ajoutés au milieu réactionnel. Le polymère est isolé par précipitation dans le méthanol froid, filtration et séchage sous vide à 30°C pendant une nuit.

On obtient ainsi, un copolymère présentant une masse molaire moyenne en nombre ($M_n$) de 70 400 g/mol, un indice de polydispersité (Ip) de 3,11 et un degré de polymérisation moyen en nombre ($DP_n$) de 228. Ces valeurs sont respectivement obtenues par chromatographie d'exclusion stérique en utilisant le tétrahydrofurane comme éluant et une calibration polystyrène et par suivi de la conversion en monomères au cours de la copolymérisation.

La déprotection du copolymère s'effectue selon le protocole suivant:

19 g de copolymère obtenu à l'étape précédente et contenant environ 10% de fonction diol protégée sont introduits dans un erlenmeyer d'1 L. 250 mL de dichlorométhane et 30 mL d'une solution aqueuse d'acide chlorhydrique sont ajoutés. Le milieu réactionnel est agité 24 heures à température ambiante avant d'être versé goutte à goutte dans 1L de solution aqueuse d'hydroxyde de sodium (pH = 10) puis agité de nouveau 24 heures à température ambiante. Pendant toute cette période d'agitation, le milieu réactionnel est composé de deux phases. La phase organique est récupérée à l'aide d'une ampoule à décanter et le polymère est précipité dans le méthanol froid. Le polymère ainsi obtenu est re-dissout dans 100ml de dichlorométhane afin d'être de nouveau précipité dans du méthanol froid. Le polymère est récupéré et séché sous vide à 30°C pendant une nuit.

On obtient un copolymère poly(alkyl méthacrylate-co-alkyldiol méthacrylate) contenant environ 10% molaire d'unités monomères diol, et présentant une longueur moyenne des chaînes alkyles pendantes de 13.8 atomes de carbone.

## 2. Synthèse des composés A2 de l'invention

◦ *2.1 : Synthèse d'un diester boronique comme agent de réticulation*

La synthèse d'un composé A2 selon l'invention s'effectue selon le protocole suivant et selon le schéma réactionnel 12 :

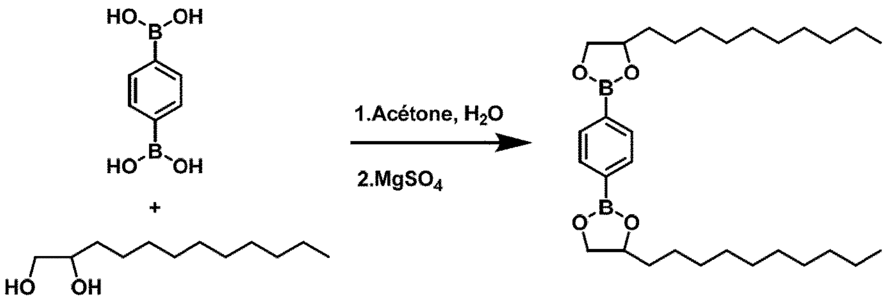


Schéma 12

L'acide 1,4 benzènediboronique (1,4-BDBA) (1,5 g ; 9,05 mmol) est introduit dans un bécher de 500 mL, suivi de 300 mL d'acétone. Le milieu réactionnel est placé sous agitation et 0,300 g (16,7 mmol) d'eau sont introduits goutte à goutte. Le milieu réactionnel devient alors transparent et homogène et le 1,2-dodécanediol (4,02 g ; 19,9 mmol) est lentement ajouté. Après dissolution complète de ce dernier, un excès de sulfate de magnésium est ajouté afin de piéger l'eau introduite initialement ainsi que l'eau libérée par la condensation entre 1'1,4-BDBA et 1'1,2-dodécanediol. Après 15 minutes sous agitation, le milieu réactionnel est filtré. Le solvant est ensuite éliminé du filtrat au moyen d'un évaporateur rotatif, pour donner 4,41 g de diester boronique et de 1,2-dodécanediol (rendement de 98 %) sous la forme d'un solide blanc.

Les caractéristiques sont les suivantes :

$^1H$ RMN (400 MHz, CDC13) Diester boronique : $\delta$ : 7,82 (singulet, 2H), 4,63-4,51 (multiplet, 2H), 4,42 (doublet de doublets, J = 8 Hz et J = 8,8 Hz, 2H), 3,95 (doublet de doublets, J = 7,2 Hz et J = 8,8 Hz, 2H), 1,81-1,31 (multiplet, 36H), 0,88 (triplet, J = 7,2 Hz, 6H) ; 1,2-dodécanediol : $\delta$ : 3,85-3,25 (multiplet, environ 2,17H), 1,81-1,31 (multiplet, environ 13,02H), 0,88 (triplet, J = 7,2 Hz, environ 2,17H)

◦ *2.2 : Synthèse du copolymère poly(alkyl méthacylate-co-monomère ester boronique)*

*2.2.1 Synthèse du monomère ester boronique*

Le monomère ester boronique de l'invention est synthétisé selon le schéma réactionnel 13 suivant :

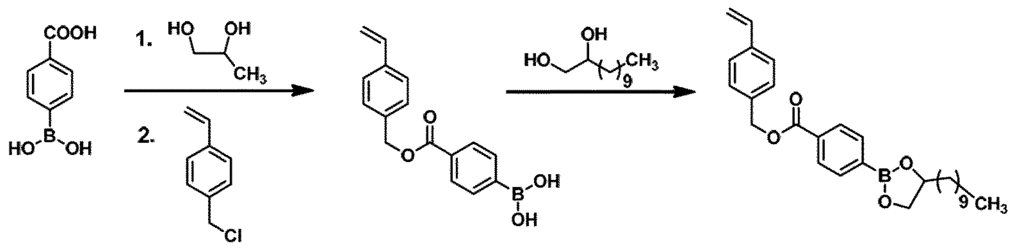


Schéma 13

Le monomère est obtenu selon le protocole en deux étapes :

La première étape consiste à synthétiser un acide boronique et la seconde étape consiste à obtenir un monomère ester boronique.

1ière étape :

L'acide 4-carboxyphénylboronique (CPBA) (5,01 g ; 30,2 mmol) est introduit dans un bécher d'1L suivi de 350 mL d'acétone et le milieu réactionnel est placé sous agitation. 7,90 mL (439 mmol) d'eau sont ajoutés goutte à goutte jusqu'à dissolution complète de l'acide 4-carboxyphénylboronique. Le milieu réactionnel est alors transparent et homogène. Le 1,2-propanediol (2,78 g ; 36,6 mmol) est ensuite lentement ajouté, suivi d'un excès de sulfate de magnésium afin de piéger l'eau initialement introduite ainsi que l'eau libérée par la condensation entre le CPBA et le 1,2 propanediol. Le milieu réactionnel est laissé sous agitation pendant 1 heure à 25°C avant d'être filtré. Le solvant est ensuite éliminé du filtrat au moyen d'un évaporateur rotatif. Le produit ainsi obtenu et 85 mL de DMSO sont introduits dans un ballon de 250 mL. Le milieu réactionnel est placé sous agitation puis après homogénéisation complète du milieu réactionnel, 8,33 g (60,3 mmol) de $K_2CO_3$ sont ajoutés. Le 4-(chlorométhyl)styrène (3,34 g ;

21,9 mmol) est alors lentement introduit dans le ballon. Le milieu réactionnel est alors laissé sous agitation à 50°C pendant 16 heures. Le milieu réactionnel est transféré dans un erlenmeyer d'2 L, puis 900 mL d'eau sont ajoutés. La phase aqueuse est extraite avec 8 × 150 mL d'acétate d'éthyle. Les phases organiques sont regroupées, puis extraites avec 3 × 250 mL d'eau. La phase organique est séchée sur $MgSO_4$ et filtrée. Le solvant est éliminé du filtrat au moyen d'un évaporateur rotatif pour donner le monomère acide boronique (5,70 g ; rendement de 92,2 %) sous la forme d'une poudre blanche, dont les caractéristiques sont les suivantes :
$^1$H RMN (400 MHz, CDC13) δ : 7,98 (doublet, J = 5,6 Hz, 4H), 7,49 (doublet, J = 4 Hz, 4H), 6,77 (doublet de doublets, J = 10,8 Hz et J = 17,6 Hz, 1H), 5,83 (doublet de doublet, J = 1,2 Hz et J = 17,6 Hz, 1H), 5,36 (singulet, 2H), 5,24 (doublet de doublets, J = 1,2 Hz et J = 11,2 Hz, 1H).
2$^{ième}$ étape :
Le monomère acide boronique (5,7 g ; 20,2 mmol) obtenu lors de la première étape et 500 mL d'acétone sont introduits dans un erlenmeyer d'1L. Le milieu réactionnel est placé sous agitation et 2,6 mL (144 mmol) d'eau sont ajoutés goutte à goutte jusqu'à dissolution complète du monomère acide boronique. Le milieu réactionnel est alors transparent et homogène. Une solution de 1,2-dodécanediol (5,32 g ; 26,3 mmol) dans 50 mL d'acétone est lentement ajoutée au milieu réactionnel, suivie d'un excès de sulfate de magnésium afin de piéger l'eau initialement introduite ainsi que l'eau libérée par la condensation entre le monomère acide boronique et le 1,2-dodécanediol. Après 3 heures sous agitation à température ambiante, le milieu réactionnel est filtré. Le solvant est ensuite éliminé du filtrat au moyen d'un évaporateur rotatif pour donner 10,2 g d'un mélange de monomère ester boronique et de 1,2-dodécanediol sous la forme d'un solide jaune clair.

Les caractéristiques sont les suivantes :
$^1$H RMN (400 MHz, CDCl3) : Monomère ester boronique : δ : 8,06 (doublet, J = 8 Hz, 2H), 7,89 (doublet, J = 8 Hz, 2H), 7,51 (doublet, J = 4 Hz, 4H), 6,78 (doublet de doublets, J = 8 Hz et J = 16 Hz, 1H), 5,84 (doublet de doublets, J = 1,2 Hz et J = 17,6 Hz, 1H), 5,38 (singulet, 2H), 5,26 (doublet de doublets, J = 1,2 Hz et J = 11,2 Hz, 1H), 4,69-4,60 (multiplet, 1H), 4,49 (doublet de doublets, J = 8 Hz et J = 9,2 Hz, 1H), 3,99 (doublet de doublets, J = 7,2 Hz et J = 9,2 Hz, 1H), 1,78-1,34 (multiplet, 18H), 0,87 (triplet, J = 6,4 Hz, 3H) ; 1,2-dodécanediol : δ : 3,61-3,30 (multiplet, environ 1,62H), 1,78-1,34 (multiplet, environ 9,72H), 0,87 (triplet, J = 6,4 Hz, environ 1,62H)

Dans une variante de la synthèse, le monomère acide boronique obtenu lors de la première étape peut-être protégé par le 1,2-propanediol au lieu du 1,2-dodécanediol, suivant le mode opératoire suivant:
Le monomère acide boronique (3,5 g ; 12,4 mmol) obtenu lors de la première étape et 250 mL d'acétone sont introduits dans un erlenmeyer de 500 L. Le milieu réactionnel est placé sous agitation et 1,8 mL (100 mmol) d'eau sont ajoutés goutte à goutte jusqu'à dissolution complète du monomère acide boronique. Le milieu réactionnel est alors transparent et homogène. Le 1,2-propanediol (1,08 g ; 14,2 mmol) est lentement ajouté au milieu réactionnel, suivie d'un excès de sulfate de magnésium afin de piéger l'eau initialement introduite ainsi que l'eau libérée par la condensation entre le monomère acide boronique et le 1,2-propanediol. Après 2 heures sous agitation à température ambiante, le milieu réactionnel est filtré. Le solvant est ensuite éliminé du filtrat au moyen d'un évaporateur rotatif pour donner un mélange de monomère ester boronique et de 1,2-propanediol sous la forme d'un solide jaune clair.

Les caractéristiques sont les suivantes :
1H RMN (400 MHz, CDCl3) : Monomère ester boronique : δ : 8,06 (doublet, J = 8 Hz, 2H), 7,87 (doublet, J = 8 Hz, 2H), 7,42 (doublet, J = 2 Hz, 4H), 6,72 (doublet de doublets, J = 11 Hz et J = 18 Hz, 1H), 5,76 (doublet de doublets, J = 1 Hz et J = 18 Hz, 1H), 5,35 (singulet, 2H), 5,26 (doublet de doublets, J = 1 Hz et J = 11 Hz, 1H), 4,77-4,68 (multiplet, 1H), 4,48 (doublet de doublets, J = 8 Hz et J = 9 Hz, 1H), 3,91 (doublet de doublets, J = 8 Hz et J = 9 Hz, 1H), 1,42 (doublet, J = 6Hz, 3H) ; 1,2-dodécanediol : δ : 3,66-3,37 (multiplet, environ 0,26H), 1,17 (doublet, J = 6 Hz, environ 0,39H)

*2.2.2 Synthèse du composé A2, copolymère statistique méthacrylate-co-monomère ester boronique)*

Le copolymère statistique A2 de l'invention est obtenu selon le protocole suivant :
2,09 g d'un mélange monomère ester boronique et 1,2-dodécanediol précédemment préparé (contenant 3,78 mmol de monomère ester boronique), 98,3 mg (0,361 mmol) de dithiobenzoate de cumyle, 22,1 g (86,9 mmol) de méthacrylate de lauryle (LMA) et 26,5 mL d'anisole sont introduite dans un tube de Schlenk de 100 mL. Le milieu réactionnel est placé sous agitation et 11,9 mg (0,0722 mmol) d'azobisisobutyronitrile (AIBN) en solution dans 120 μL d'anisole sont introduits dans le tube de Schlenk. Le milieu réactionnel est ensuite dégazé pendant 30 minutes en faisant buller de l'argon avant d'être porté à 65°C pour une durée de 16 heures. Le tube de Schlenk est placé dans un bain de glace pour arrêter la polymérisation, puis le polymère est isolé par précipitation dans l'acétone anhydre, filtration et séchage sous vide à30°C pendant une nuit.

On obtient ainsi, un copolymère ayant la structure suivante :

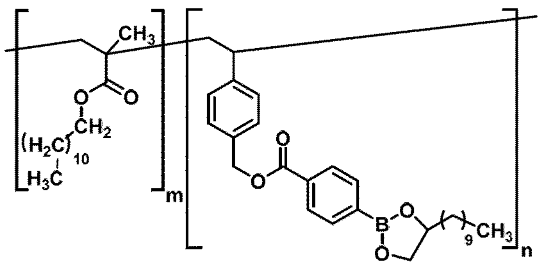

avec m =0,96 et n=0,04.

Le copolymère ester boronique obtenu présente une masse molaire moyenne en nombre ($M_n$) égale à 37 200 g/mol, un indice de polydispersité (Ip) égale à 1,24 et un degré de polymérisation moyen en nombre ($DP_n$) égal à 166. Ces valeurs sont respectivement obtenues par chromatographie d'exclusion stérique en utilisant le tétrahydrofurane comme éluant et une calibration polystyrène et par suivi de la conversion en monomères au cours de la copolymérisation Une analyse par RMN du proton du copolymère final donne une composition de 4% molaire en monomère ester boronique et 96 % en méthacrylate de lauryle.

## 3. Etudes rhéologiques des formulations de polymères en solution dans une huile de base du groupe III selon la classification API.

◦ *3.1 Appareillages et protocoles de mesure de la viscosité*

Les études rhéologiques ont été effectuées à l'aide d'un rhéomètre de Couette MCR 501 à contrainte contrôlée de la société Anton Paar. Les mesures ont été réalisées sur des formulations de polymères en solution dans une huile de base du groupe III en utilisant une géométrie cylindrique de référence DG 26.7. La viscosité a été mesurée en fonction de la vitesse de cisaillement pour une gamme de température variant de 10°C à 110°C. Pour chaque température, la viscosité du système a été mesurée en fonction de vitesse de cisaillement de 0,01 à 1000 $s^{-1}$. Les mesures de viscosité en fonction de la vitesse de cisaillement à T = 10°C, 20°C, 30°C, 50°C, 70°C, 90°C et 110°C ont été réalisées (en allant de 10 °C à 110 °C) suivies de nouvelles mesures à 10°C et/ou 20°C afin d'évaluer la réversibilité des systèmes. Une viscosité moyenne a alors été calculée pour chaque température en utilisant les points de mesure situés sur le même plateau.

La viscosité relative

$$(\eta_{relative} = \frac{\eta_{solution}}{\eta_{huile\ de\ base}})$$

a été également choisie pour représenter l'évolution de la viscosité du système en fonction de la température, car cette grandeur reflète directement la compensation à la perte de viscosité naturelle de l'huile de base de groupe III des systèmes polymères étudiés.

◦ *3.2 : Compositions à base de copolymères statistiques polydiols A1 et composés A2 diester boronique.*

▪ *Compositions testées*

**Copolymères A1** :

Quatre copolymères statistiques poly(alkyl méthacrylate-co-alkyldiol méthacrylate) de l'invention sont testés. Il s'agit des copolymères suivants :

✓ Copolymère A1-1 : Ce copolymère comprend 20% molaire de monomères ayant des fonctions diol. La longueur moyenne de chaînes latérale est de 13,8 atomes de carbone. Sa masse molaire moyenne en nombre est de 49 600 g/mol. Son indice de polydispersité est de 1,51. Son degré de polymérisation moyen en nombre ($DP_n$) est de 167. La masse molaire moyenne en nombre et l'indice de polydispersité sont mesurés par mesure de chromatographie d'exclusion stérique en utilisant une calibration polystyrène.

✓ Copolymère A1-2: Ce copolymère comprend 20% molaire de monomères ayant des fonctions diol. La longueur moyenne de chaînes latérale est de 10,8 atomes de carbone. Sa masse molaire moyenne en nombre est de 59 700 g/mol. Son indice de polydispersité est de 1,6. Son degré de polymérisation moyen en nombre ($DP_n$) est de

196. La masse molaire moyenne en nombre et l'indice de polydispersité sont mesurés par mesure de chromatographie d'exclusion stérique en utilisant une calibration polystyrène.

J Copolymère A1-3: Ce copolymère comprend 10% molaire de monomères ayant des fonctions diol. La longueur moyenne de chaînes latérale est de 13,8 atomes de carbone. Sa masse molaire moyenne en nombre est de 47 800 g/mol. Son indice de polydispersité est de 1,3. Son degré de polymérisation moyen en nombre ($DP_n$) est de 198. La masse molaire moyenne en nombre et l'indice de polydispersité sont mesurés par mesure de chromatographie d'exclusion stérique en utilisant une calibration polystyrène.

J Copolymère A1-4: Ce copolymère comprend 10% molaire de monomères ayant des fonctions diol. La longueur moyenne de chaînes latérale est de 13,8 atomes de carbone. Sa masse molaire moyenne en nombre est de 97 100 g/mol. Son indice de polydispersité est de 3,11. Son degré de polymérisation moyen en nombre ($DP_n$) est de 228. La masse molaire moyenne en nombre et l'indice de polydispersité sont mesurés par mesure de chromatographie d'exclusion stérique en utilisant une calibration polystyrène.

Les copolymères A1-1, A1-2, A1-3 et A1-4 sont obtenus selon l'un des protocoles décrit au paragraphe 1.

**Composé A2 :**

Le composé A2-1 est le diester boronique obtenu selon le protocole décrit au paragraphe 2.1.

**Huile de base lubrifiante**

L'huile de base lubrifiante utilisée dans les compositions à tester est une huile du groupe III de la classification API, commercialisée par SK sous le nom Yubase 4. Elle présente les caractéristiques suivantes :

- sa viscosité cinématique à 40°C mesurée selon la norme ASTM D445 est de 19,57 cSt ;
- sa viscosité cinématique mesurée à 100°C selon la norme ASTM D445 est de 4,23 cSt ;
- son indice de viscosité mesuré selon la norme ASTM D2270 est de 122 ;
- sa volatilité Noack en pourcentage poids, mesurée selon la norme DIN 51581 est de 14, 5 ;
- Son point flash (flash point en anglais) en degrés Celsius mesuré selon la norme ASTM D92 est de 230°C;
- Son point d'écoulement (pour point en anglais) en degrés Celsius mesuré selon la norme ASTM D97 est de -15°C.

**La composition A (hors invention)** est utilisée comme référence.

Elle contient une solution à 4,2 % massique d'un polymère polyméthacrylate dans une huile de base lubrifiante du groupe III de la classification API. Le polymère a une masse molaire moyenne en nombre ($M_n$) égale à 106 000 g/mol, un indice de polydispersité (Ip) égale à 3,06, un degré de polymérisation moyen en nombre de 466 et la longueur moyenne des chaînes pendantes est de 14 atomes de carbone.

Ce polyméthacrylate est utilisé comme additif améliorant l'indice de viscosité.

4,95 g d'une formulation ayant une concentration massique de 42 % de ce polyméthacrylate dans une huile de base groupe III et 44,6 g d'huile de base groupe III sont introduits dans un flacon. La solution ainsi obtenue est maintenue sous agitation à 90°C jusqu'à dissolution complète du polyméthacrylate.

On obtient une solution à 4,2% massique de ce polyméthacrylate.

**Composition B-1** (hors invention) est obtenue de la manière suivante :

4,14 g de copolymère polydiol A1-1 et 37,2 g d'huile de base groupe III sont introduits dans un flacon. La solution ainsi obtenue est maintenue sous agitation à 90°C jusqu'à dissolution complète du polydiol.

On obtient une solution à 10% massique de copolymère polydiol A1-1.

**Composition C-1** (selon l'invention) est obtenue de la manière suivante :

8 g de la solution à 10% massique de copolymère polydiol A1-1 dans l'huile de base groupe III préparée précédemment sont introduits dans un flacon. 55,8 mg de diester boronique A2-1 sont ajoutés à cette solution. La solution ainsi obtenue est maintenue sous agitation à 90°C jusqu'à dissolution complète du diester boronique.

On obtient une solution à 10% massique de copolymère polydiol A1-1 et 20% molaire de diester boronique A2-1 par rapport aux fonctions diols du copolymère polydiol A1-1.

**Composition D-1** (selon l'invention) est obtenue de la manière suivante :

8 g de la solution à 10% massique de copolymère polydiol A1-1 dans l'huile de base groupe III préparée précédemment sont introduits dans un flacon. 223 mg de diester boronique A2-1 sont ajoutés à cette solution. La solution ainsi obtenue est maintenue sous agitation à 90°C jusqu'à dissolution complète du diester boronique.
On obtient une solution à 10% massique de copolymère polydiol A1-1 et 80% molaire de diester boronique A2-1 par rapport aux fonctions diols du copolymère polydiol A1-1.

**Composition B-2** (hors invention) est obtenue de la manière suivante :

6,52 g de copolymère polydiol A1-2 et 58,7 g d'huile de base groupe III sont introduits dans un flacon. La solution ainsi obtenue est maintenue sous agitation à 90°C jusqu'à dissolution complète du polydiol.
On obtient une solution à 10% massique de copolymère polydiol A1-2.

**Composition C-2** (selon l'invention) est obtenue de la manière suivante :

8 g de la solution à 10% massique de copolymère polydiol A1-2 dans l'huile de base groupe III préparée précédemment sont introduits dans un flacon. 65,4 mg de diester boronique A2-1 sont ajoutés à cette solution. La solution ainsi obtenue est maintenue sous agitation à 90°C jusqu'à dissolution complète du diester boronique.
On obtient une solution à 10% massique de copolymère polydiol A1-2 et 20% molaire de diester boronique A2-1 par rapport aux fonctions diols du copolymère polydiol A1-2.

**Composition D-2** (selon l'invention) est obtenue de la manière suivante :

8 g de la solution à 10% massique de copolymère polydiol A1-2 dans l'huile de base groupe III préparée précédemment sont introduits dans un flacon. 262 mg de diester boronique A2-1 sont ajoutés à cette solution. La solution ainsi obtenue est maintenue sous agitation à 90°C jusqu'à dissolution complète du diester boronique.
On obtient une solution à 10% massique de copolymère polydiol A1-2 et 80% molaire de diester boronique A2-1 par rapport aux fonctions diols du copolymère polydiol A1-2.

**Composition B-3** (hors invention) est obtenue de la manière suivante :

7,24 g de copolymère polydiol A1-3 et 65,2 g d'huile de base groupe III sont introduits dans un flacon. La solution ainsi obtenue est maintenue sous agitation à 90°C jusqu'à dissolution complète du polydiol.
On obtient une solution à 10% massique de copolymère polydiol A1-3.

**Composition C-3** (selon l'invention) est obtenue de la manière suivante :

8 g de la solution à 10% massique de copolymère polydiol A1-3 dans l'huile de base groupe III préparée précédemment sont introduits dans un flacon. 28,2 mg de diester boronique A2-1 sont ajoutés à cette solution. La solution ainsi obtenue est maintenue sous agitation à 90°C jusqu'à dissolution complète du diester boronique.
On obtient une solution à 10% massique de copolymère polydiol A1-3 et 20% molaire de diester boronique A2-1 par rapport aux fonctions diols du copolymère polydiol A1-3.

**Composition B-4** (hors invention) est obtenue de la manière suivante :

4,99 g de copolymère polydiol A1-4 et 44,4 g d'huile de base groupe III sont introduits dans un flacon. La solution ainsi obtenue est maintenue sous agitation à 90°C jusqu'à dissolution complète du polydiol.
On obtient une solution à 10% massique de copolymère polydiol A1-4.

**Composition C-4** (selon l'invention) est obtenue de la manière suivante :

6,01 g de la solution à 10% massique de copolymère polydiol A1-4 dans l'huile de base groupe III préparée précédemment sont introduits dans un flacon. 18,6 mg de diester boronique A2-1 sont ajoutés à cette solution. La solution ainsi obtenue est maintenue sous agitation à 90°C jusqu'à dissolution complète du diester boronique.
On obtient une solution à 10% massique de copolymère polydiol A1-4 et 20% molaire de diester boronique A2-1 par rapport aux fonctions diols du copolymère polydiol A1-4.

**Composition D-4** (selon l'invention) est obtenue de la manière suivante :

6,03 g de la solution à 10% massique de copolymère polydiol A1-4 dans l'huile de base groupe III préparée précédemment sont introduits dans un flacon. 74,7 mg de diester boronique A2-1 sont ajoutés à cette solution. La solution ainsi obtenue est maintenue sous agitation à 90°C jusqu'à dissolution complète du diester boronique.

On obtient une solution à 10% massique de copolymère polydiol A1-4 et 80% molaire de diester boronique A2-1 par rapport aux fonctions diols du copolymère polydiol A1-4.

- *Résultats obtenus en rhéologie*

Le comportement rhéologique de la composition C1-1 a été étudié pour une gamme de température allant de 10°C à 110°C. Les résultats sont présentés en figure 5. La viscosité dynamique de la composition C1-1 varie à des faibles vitesses de cisaillement et pour des températures inférieures à 50°C. La composition C1-1 se déforme sous la contrainte du cisaillement pour des températures inférieures à 50°C.

Pour des températures supérieures à 50°C, la viscosité dynamique de la composition C1-1 varie très faiblement ou ne varie pas à des faibles vitesses de cisaillement. La composition C1-1 ne se déforme plus sous la contrainte du cisaillement à ces températures.

La viscosité relative des compositions A, B-1, C-1, D-1, B-2, C-2, D-2, B-3, C-3, D-3, B-4, C-4, D-4 a été étudiée. L'évolution de la viscosité relative de ces compositions est illustrée aux figures 6A-6D. En comparant les résultats obtenus, on observe que certains paramètres influencent la viscosité relative des compositions.

❖ **L'influence de $L_C$ (longueur moyenne de chaîne latérale pendante)**

Les copolymères polydiols A1-1 et A1-2 ont le même pourcentage de monomère diol M1 par chaîne, des masses molaires comparables, mais une longueur moyenne des chaînes alkyles des monomères différentes ($L_C$ = 13,8 et $L_C$ = 10,8 respectivement).

L'évolution de la viscosité relative en fonction de la température pour les solutions formulées à partir de ces polymères (Figure 6A et 6B) indique que la longueur moyenne des chaînes alkyles des monomères constituant le copolymère polydiol joue un rôle sur les propriétés rhéologiques des formulations.

❖ **L'influence du pourcentage molaire de monomère diol (% diol)**

Les copolymères polydiols A1-1 et A1-3 ont la même longueur moyenne des chaînes alkyles ($L_C$), des masses molaires comparables mais un pourcentage de monomère diol M1 par chaîne squelettique différent (20% et 10% respectivement).

L'évolution de la viscosité relative en fonction de la température pour les solutions formulées à partir de ces polymères (Figure 6A et 6C) indique que le pourcentage de monomère diol par chaîne squelettique joue un rôle sur les propriétés rhéologiques des formulations.

❖ **L'influence des masses molaires et des degrés de polymérisation ($DP_n$)**

Les polydiols A1-3 et A1-4 ont le même pourcentage de monomère diol M1 par chaîne, la même longueur moyenne des chaînes alkyles ($L_C$) mais des masses molaires (47 800 g/mol et 97 100 g/mol respectivement) et des degrés de polymérisation moyens en nombre sensiblement différents ($DP_n$ de 198 et 228 respectivement).

L'évolution de la viscosité relative en fonction de la température pour les solutions formulées à partir de ces polymères (Figure 6.C et 6.D) indique que la masse molaire des copolymères polydiols (Mn) joue un rôle sur les propriétés rhéologiques des formulations.

◦ *3.2 : Compositions à base de copolymères statistiques polydiols A1 et composés A2 polymère ester boronique.*

- *Compositions testées*

**Copolymères A1** :

Un copolymère statistique poly(alkyl méthacrylate-co-alkyldiol méthacrylate) de l'invention est testé. Il s'agit du copolymère suivant :

✓ Copolymère A1-1 : Ce copolymère comprend 20% molaire de monomères ayant des fonctions diol. La longueur

moyenne de chaînes latérale est de 13,8 atomes de carbone. Sa masse molaire moyenne en nombre est de 49 600 g/mol. Son indice de polydispersité est de 1,51. Son degré de polymérisation moyen en nombre ($DP_n$) est de 167. La masse molaire moyenne en nombre et l'indice de polydispersité sont mesurés par mesure de chromatographie d'exclusion stérique en utilisant une calibration polystyrène.

Le copolymère A1-1 est obtenu selon l'un des protocoles décrit au paragraphe 1.

**Composé A2** :

Le composé A2-2 est le polymère ester boronique obtenu selon le protocole décrit au paragraphe 2.2. Ce copolymère comprend 4% molaire de monomères ayant des fonctions ester boronique. La longueur moyenne de chaînes latérale est supérieure à 12 atomes de carbone. Sa masse molaire moyenne en nombre est de 37 200g/mol. Son indice de polydispersité est de 1,24. Son degré de polymérisation moyen en nombre ($DP_n$) est de 166. La masse molaire moyenne en nombre et l'indice de polydispersité sont mesurés par mesure de chromatographie d'exclusion stérique en utilisant une calibration polystyrène.

**Huile de base lubrifiante**

L'huile de base lubrifiante utilisée dans les compositions à tester est l'huile du groupe III décrite précédemment au paragraphe 3.1.
**La composition A (hors invention)** est utilisée comme référence est la même que la composition A utilisée au paragraphe 3.1.

**Composition B** (hors invention) est obtenue de la manière suivante :

La composition B est la même composition B-1 utilisée au paragraphe 3.1.

**Composition C** (selon l'invention) est obtenue de la manière suivante :

4 g de la solution à 10% massique de copolymère polydiol A1-1 dans l'huile de base groupe III préparée précédemment sont introduits dans un flacon. 76,8 mg de polymère ester boronique A2-2 et 4 g de l'huile de base groupe III sont ajoutés à cette solution. La solution ainsi obtenue est maintenue sous agitation à 90°C jusqu'à dissolution complète du polymère ester boronique.
On obtient une solution à 5% massique de copolymère polydiol A1-1 et 1% massique de polymère ester boronique A2-2 par rapport à la masse totale de la composition.

**Composition D** (selon l'invention) est obtenue de la manière suivante :

6 g de composition C précédente (c'est-à-dire une composition à 5% massique de copolymère polydiol A1-1 et 1% massique de polymère ester boronique A2-2 par rapport à la masse totale de la composition) sont introduits dans un flacon. 61,9 mg de polymère ester boronique A2-2 sont ajoutés à cette solution. La solution ainsi obtenue est maintenue sous agitation à 90°C jusqu'à dissolution complète du polymère ester boronique.
On obtient une solution à 5% massique de copolymère polydiol A1-1 et 2% massique de polymère ester boronique A2-2 par rapport à la masse totale de la composition.

**Composition** E (selon l'invention) est obtenue de la manière suivante :

3 g de la solution à 10% massique de copolymère polydiol A1-1 dans l'huile de base groupe III préparée précédemment sont introduits dans un flacon. 176 mg de polymère ester boronique A2-2 et 3 g de l'huile de base groupe III sont ajoutés à cette solution. La solution ainsi obtenue est maintenue sous agitation à 90°C jusqu'à dissolution complète du polymère ester boronique.
On obtient une solution à 5% massique de copolymère polydiol A1-1 et 3% massique de polymère ester boronique A2-2 par rapport à la masse totale de la composition.

- *Résultats obtenus en rhéologie*

Le comportement rhéologique de la composition E a été étudié pour une gamme de température allant de 10°C à 110°C. Les résultats sont présentés en figure 7. La viscosité dynamique de la composition E varie à des faibles vitesses

de cisaillement et pour des températures inférieures à 50°C. La composition E se déforme sous la contrainte du cisaillement pour des températures inférieures à 50°C.

Pour des températures supérieures à 50°C, la viscosité dynamique de la composition E varie très faiblement ou ne varie pas à des faibles vitesses de cisaillement. La composition E ne se déforme plus sous la contrainte du cisaillement à ces températures.

La viscosité relative des compositions A, B, C, D et E a été étudiée. L'évolution de la viscosité relative de ces compositions est illustrée à la figure 8. Cette figure indique que les systèmes polydiols/poly(ester boronique)s permettent de compenser de façon très significative la chute de viscosité naturelle de l'huile de base en fonction de la température. De plus, l'effet obtenu peut être régulé en jouant sur les concentrations massiques des différents polymères en solution dans l'huile de base III.

## 4 Synthèse de copolymères statistiques A1 Poly(Styrène- Méthacrylate d'Alkyldiol)

La synthèse des copolymères styrène-méthacrylate portant des fonctions diol selon l'invention s'effectue en deux étapes :

- Copolymérisation du monomère styrène avec un monomère méthacrylate porteur d'une fonction diol protégée sous forme cétal;
- Déprotection des fonctions diol du copolymère

Les modes opératoires suivants décrivent la synthèse d'un copolymère poly(styrène-co-méthacrylate d'alkyldiol) contenant environ 10% molaire d'unités monomères diol.

Plus précisément, la synthèse du copolymère s'effectue selon le protocole suivant:
3,03 g (12,50 mmol) de monomère méthacrylate d'hexyldiol porteur d'une fonction diol protégée sous forme de cétal obtenu selon le protocole décrit au paragraphe 1.1.1, 11,6 g (111,7 mmol) de styrène et 50,8 mg de 2-phenyl-2-propyl benzodithioate (0,187 mmol) en solution dans 0,89 g d'anisole sont introduits dans un tube Schlenk de 100 mL. Le milieu réactionnel est alors placé sous agitation puis dégazé pendant 30 minutes en faisant buller de l'azote avant d'être porté à 120°C pour une durée de 30 heures. Le tube Schlenk est alors placé dans un bain d'eau froide pour arrêter la polymérisation et 20 mL de tétrahydrofurane sont ensuite ajoutés au milieu réactionnel. Le polymère est isolé par précipitation dans le méthanol à température ambiante, filtration et séchage sous vide à 30°C pendant 17 heures.

On obtient ainsi un copolymère présentant une masse molaire moyenne en nombre (Mn) de 39 600 g/mol équivalent polystyrène, un indice de polydispersité (Ip) de 1,47 et un degré de polymérisation moyen en nombre de 541 (89 mol% de styrène). Ces valeurs sont respectivement obtenues par chromatographie d'exclusion stérique en utilisant le tétrahydrofurane comme éluant et une calibration polystyrène, et par suivi RMN de la conversion en monomères au cours de la polymérisation.

La déprotection du copolymère s'effectue selon le protocole suivant :
9,72 g de copolymère obtenu à l'étape précédente et contenant environ 10 % de fonctions diol protégé sont introduits dans un ballon de 500 mL contenant 280 mL de dioxane afin de solubiliser le polymère. 36 mL d'une solution aqueuse d'acide chlorhydrique (1 mol/L) sont ajoutés. Le milieu devient alors totalement opaque. Après 24 heures sous agitation à 25°C, le milieu est redevenu transparent. 1,5 mL d'acide chlorhydrique (36% massique) sont alors ajoutés au milieu avant que celui-ci soit laissé sous agitation à 25°C pendant 24 heures. Une fois la déprotection terminée, le milieu redevient parfaitement transparent. Le polymère est isolé par deux précipitations successives dans le méthanol à température ambiante, filtration et séchage sous vide à 30°C pendant 17 heures.

On obtient un copolymère poly(styrène-co- méthacrylate d'alkyldiol) présentant une masse molaire moyenne en nombre (Mn) de 43 800 g/mol équivalent polystyrène, un indice de polydispersité (Ip) de 1,34.

## 5 Synthèse de copolymères statistiques A2 Poly(Styrène-Styrène phénylboronique ester)

La synthèse d'un autre composé A2, copolymère styrène-styrène phénylboronique ester, est réalisée selon le protocole suivant :
1,00 g d'un mélange de monomère ester boronique et de 1,2-propanediol précédemment préparés conformément au paragraphe 2.2.1 (contenant 3,06 mmol de monomère ester boronique), 8,59 g (82,5 mmol) de styrène et 33,5 mg de 2-phenyl-2-propyl benzodithioate (0,123 mmol) en solution dans 0,59 g d'anisole sont introduits dans un tube Schlenk de 30 mL. Le milieu réactionnel est alors placé sous agitation puis dégazé pendant 30 minutes en faisant buller de l'azote avant d'être porté à 120°C pour une durée de 24 heures. Le tube Schlenk est placé dans un bain d'eau froide pour arrêter la polymérisation et 15 mL de tétrahydrofurane sont ensuite ajoutés au milieu réactionnel. Le polymère est isolé par précipitation dans l'hexane à température ambiante, filtration et séchage sous vide à 30°C pendant 17 heures.

On obtient ainsi, un copolymère présentant une masse molaire moyenne en nombre (Mn) de 35 200 g/mol, un

indice de polydispersité (Ip) de 1,31 et un degré de polymérisation moyen en nombre de 528 (96 mol% de styrène). Ces valeurs sont respectivement obtenues par chromatographie d'exclusion stérique en utilisant le tétrahydrofurane comme éluant et une calibration polystyrène, et par suivi RMN de la conversion en monomères au cours de la polymérisation.

**6. Etudes rhéologiques des formulations de polymères en solution dans la tétraline.**

6.1 Appareillages et protocoles de mesure de la viscosité

Les études rhéologiques ont été effectuées à l'aide d'un rhéomètre de Couette MCR 302 à contrainte contrôlée de la société Anton Paar.

Les mesures de rhéologie ont été réalisées en utilisant une géométrie cylindrique de référence DG 26.7. La viscosité a été mesurée en fonction de la vitesse de cisaillement pour une gamme de température variant de 50°C à 100°C. Pour chaque température, la viscosité du système a été mesurée en fonction de la vitesse de cisaillement de 0,1 à 200 $s^{-1}$ pour l'étude de la tétraline seule et de 1 à 500 $s^{-1}$ pour les compositions A et B. Les mesures de viscosité en fonction de la vitesse de cisaillement à T = 50°C, 60°C, 70°C, 80°C, 90°C et 100°C ont été réalisées (en allant de 50°C à 100°C). Une viscosité moyenne a alors été calculée pour chaque température en utilisant les points de mesure situés sur le même plateau.

La viscosité relative

$$(\eta_{relative} = \frac{\eta_{solution}}{\eta_{huile\ de\ base}})$$

a été choisie pour représenter l'évolution de la viscosité du système en fonction de la température, car cette grandeur reflète directement la compensation des systèmes polymères étudiés à la perte de viscosité naturelle de la tétraline.

6.2. Compositions dans la tétraline

**Tétraline**

La 1,2,3,4-tétrahydronaphthaline aussi appelée tétraline utilisée dans les compositions à tester est un solvant hydrocarboné apolaire peu volatile. Elle présente les caractéristiques suivantes selon les indications données par le fournisseur:

- Sa densité est de 0,966 ;
- Son point de fusion est de -36°C ;
- Son point d'ébullition se trouve entre 206 et 207°C ;
- Son point éclair est de 77°C.

**Copolymère A1-5**

Ce copolymère comprend 10% molaire de monomères ayant des fonctions diols et 90 % molaire de monomères styrène. Sa masse molaire moyenne en nombre est de 43 800 g/mol. Son indice de polydispersité est de 1,34. La masse molaire moyenne en nombre et l'indice de polydispersité sont mesurés par chromatographie d'exclusion stérique en utilisant une calibration polystyrène.

Ce copolymère est obtenu selon le procédé décrit au paragraphe 4.

**Copolymère A2-3**

Ce copolymère comprend 4 % molaire de monomères ayant des fonctions ester boroniques et 96% molaire de monomères styrène. Sa masse molaire moyenne en nombre est de 35 200 g/mol. Son indice de polydispersité est de 1,31. La masse molaire moyenne en nombre et l'indice de polydispersité sont mesurés par de chromatographie d'exclusion stérique en utilisant une calibration polystyrène.

Ce copolymère est obtenu selon le procédé décrit au paragraphe 5.

**Solution mère B-5**

1,00 g de copolymère polydiol **A1-5** et 19,00 g de tétraline sont introduits dans un flacon. La solution ainsi

obtenue est maintenue sous agitation à température ambiante pendant 4 heures jusqu'à dissolution complète du polydiol A1-5.

On obtient une solution contenant 5% massique de copolymère polydiol A1-5.

**Solution mère C-5**

1,00 g de copolymère poly(ester boronique) A2-3 et 19,00 g de tétraline sont introduits dans un flacon. La solution ainsi obtenue est maintenue sous agitation à température ambiante pendant 4 heures jusqu'à dissolution complète du poly(ester boronique) A2-3.

On obtient une solution contenant 5% massique de copolymère poly(ester boronique) A2-3.

**La composition F**

0,1 mL de la solution mère C-5 contenant 5% massique de copolymère poly(ester boronique) A2-3 dans la tétraline préparée précédemment sont introduits dans un flacon auxquels on ajoute 0,9 mL de tétraline. La solution est laissée sous agitation pendant 2 minutes dans un bain d'huile chauffé à 90°C. 4 mL de la solution mère B-5 contenant 5% massique de copolymère polydiol A1-5 sont ensuite ajoutés à cette solution en laissant le flacon dans le bain et sous agitation. La solution ainsi obtenue est maintenue sous agitation à 90°C pendant une heure.

On obtient une solution contenant 4% massique de copolymère polydiol **A1-5** et 0,1% massique de copolymère poly(ester boronique) A2-3.

**La composition G**

0,3 mL de la solution mère C-5 contenant 5% massique de copolymère poly(ester boronique) A2-3 dans la tétraline préparée précédemment sont introduits dans un flacon auxquels on ajoute 1,7 mL de tétraline. La solution est laissée sous agitation pendant 2 minutes dans un bain d'huile chauffé à 50°C. 3 mL de la solution mère B-5 contenant 5% massique de copolymère polydiol A1-5 sont ensuite ajoutés à cette solution en laissant le flacon dans le bain et sous agitation. La solution ainsi obtenue est maintenue sous agitation à 50°C pendant une heure.

On obtient une solution contenant 3% massique de copolymère polydiol A1-5 et 0,3% massique de copolymère poly(ester boronique) A2-3.

6.3. Résultats de rhéologie

Le comportement rhéologique des compositions F et G a été étudié pour une gamme de température allant de 50 à 100°C. Les résultats sont représentés en figure 10. On observe que le coplymère poly(styrène-alkyldiol méthacrylates) A1-5 et le copolymère poly(styrène-styrène phénylboronique ester) A2-3 permettent de compenser la baisse de la viscosité de la tétraline lorsque la température augmente.

## Revendications

**1.** Composition résultant du mélange d'au moins :

- un copolymère statistique A1 résultant de la copolymérisation :

  - d'au moins un premier monomère M1 de formule générale (I) :

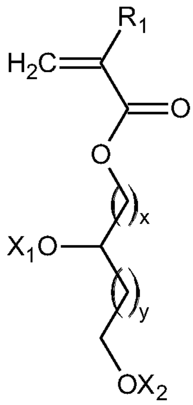

(I)

dans laquelle :

- $R_1$ est choisi parmi le groupe formé par -H, $-CH_3$, et $-CH_2-CH_3$ ;
- x est un nombre entier allant de 2 à 18;
- y est un nombre entier égal à 0 ou 1 ;
- $X_1$ et $X_2$, identiques ou différents, sont choisis parmi le groupe formé par l'hydrogène, le tétrahydropyranyle, le méthyloxyméthyle, le ter-butyle, le benzyle, le triméthylsilyle et le t-butyle diméthylsilyle ; ou bien
- $X_1$ et $X_2$ forment avec les atomes d'oxygène un pont de formule suivante

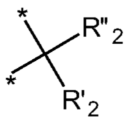

dans laquelle:

- les étoiles (*) symbolisent les liaisons aux atomes d'oxygène,
- $R'_2$ et $R''_2$, identiques ou différents, sont choisis parmi le groupe formé par l'hydrogène et un alkyle en $C_1$-$C_{11}$ , de préférence le méthyle;

ou bien
- $X_1$ et $X_2$ forment avec les atomes d'oxygène un ester boronique de formule suivante

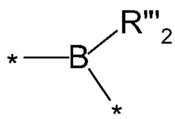

dans laquelle :

- les étoiles (*) symbolisent les liaisons aux atomes d'oxygène,
- $R'''_2$ est choisi parmi le groupe formé par un aryle en $C_6$-$C_{18}$, un aralkyle en $C_7$-$C_{18}$ et alkyle en $C_2$-$C_{18}$, de préférence un aryle en $C_6$-$C_{18}$ ;

▪ avec au moins un second monomère M2 de formule générale (II) :

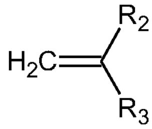

(II)

dans laquelle :

- $R_2$ est choisi parmi le groupe formé par -H, $-CH_3$ et $-CH_2-CH_3$ ,
- $R_3$ est choisi parmi le groupe formé par un aryle en $C_6$-$C_{18}$, un aryle en $C_6$-$C_{18}$ substitué par un groupement $R'_3$, -C(O)-O-$R'_3$ ; -O-$R'_3$, -S-$R'_3$ et -C(O)-N(H)-$R'_3$ avec $R'_3$ un groupe alkyle en $C_1$-$C_{30}$ ; et

◦ un composé A2 comprenant au moins deux fonctions esters boroniques,

le copolymère statistique A1 et le composé A2 étant capables de s'associer et d'échanger des liens chimiques de manière thermoréversible.

**2.** Composition selon la revendication 1, dans laquelle le copolymère statistique A1 résulte de la copolymérisation d'au moins un monomère M1 avec au moins deux monomères M2 ayant des groupes $R_3$ différents.

**3.** Composition selon la revendication 2, dans laquelle un des monomères M2 a pour formule générale (II-A) :

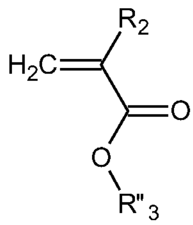

(II-A)

dans laquelle :

- $R_2$ est choisi parmi le groupe formé par -H, $-CH_3$ et$-CH_2-CH_3$,
- $R''_3$ est un groupe alkyle en $C_1$-$C_{14}$,

et l'autre monomère M2 a pour formule générale (II-B) :

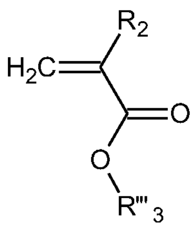

(II-B)

dans laquelle :

- $R_2$ est choisi parmi le groupe formé par -H, $-CH_3$ et$-CH_2-CH_3$,
- $R'''_3$ est un groupe alkyle en $C_{15}$-$C_{30}$.

**4.** Composition selon l'une des revendications 1 à 3, dans laquelle les chaînes latérales du copolymère statistique A1 ont une longueur moyenne allant de 8 à 20 atomes de carbone, de préférence de 9 à 15 atomes de carbone.

**5.** Composition selon l'une des revendications 1 à 4, dans laquelle le copolymère statistique A1 a un pourcentage molaire de monomère M1 de formule (I) dans ledit copolymère allant de 1 à 30%, de préférence de 5 à 25%, de manière plus préférée allant de 9 à 21%.

**6.** Composition selon l'une des revendications 1 à 5, dans laquelle le copolymère statistique A1 a un degré de polymérisation moyen en nombre allant de 100 à 2000, de préférence de 150 à 1000 et/ou un indice de polydispersité (Ip) allant de 1,05 à 3,75 ; de préférence allant de 1,10 à 3,45.

**7.** Composition selon la revendication 1 dans laquelle le composé A2 est un composé de formule (III) :

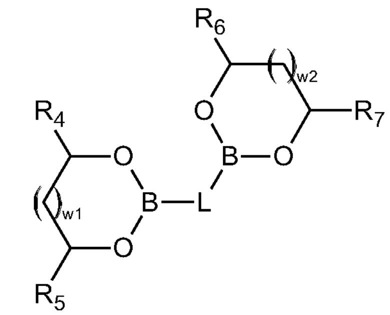

III

dans laquelle :

- $w_1$ et $w_2$, identiques ou différents sont des nombres entiers choisis entre 0 et 1 ;
- $R_4$, $R_5$, $R_6$ et $R_7$, identiques ou différents sont choisis parmi le groupe formé par l'hydrogène et un groupe hydrocarboné ayant de 1 à 24 atomes de carbone, de préférence entre 4 et 18 atomes de carbone, de préférence entre 6 et 14 atomes de carbone ;
- L est un groupement de liaison divalent et choisi parmi le groupe formé par un aryle en $C_6$-$C_{18}$, un aralkyle en $C_6$-$C_{18}$ et une chaîne hydrocarbonée en $C_2$-$C_{24}$.

**8.** Composition selon la revendication 1 dans laquelle le composé A2 est un copolymère statistique résultant de la copolymérisation

- d'au moins un monomère M3 de formule (IV) :

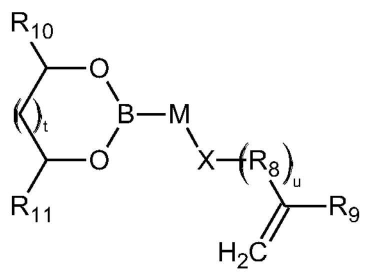

(IV)

dans laquelle :

- t est un nombre entier égal à 0 ou 1 ;
- u est un nombre entier égal à 0 ou 1 ;
- M et $R_8$ sont des groupements de liaison divalents, identiques ou différents, choisis parmi le groupe formé par un aryle en $C_6$-$C_{18}$, un aralkyle en $C_7$-$C_{24}$ et un alkyle en $C_2$-$C_{24}$, de préférence un aryle en $C_6$-$C_{18}$,
- X est une fonction choisie parmi le groupe formé par -O-C(O)-, -C(O)-O-, -C(O)-N(H)-, -N(H)-C(O)- , -S- , -N(H)- , -N(R'$_4$)- et -O- avec R'$_4$ une chaîne hydrocarbonée comprenant de 1 à 15 atomes de carbone;

- $R_9$ est choisi parmi le groupe formé par -H, $-CH_3$ et $-CH_2-CH_3$ ;
- $R_{10}$ et $R_{11}$ identiques ou différents sont choisis parmi le groupe formé par l'hydrogène et un groupe hydrocarboné ayant de 1 à 24 atomes de carbone, de préférence entre 4 et 18 atomes de carbone, de préférence entre 6 et 14 atomes de carbone ;

▪ avec au moins un second monomère M4 de formule générale (V) :

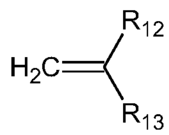

(V)

dans laquelle :

- $R_{12}$ est choisi parmi le groupe formé par -H, $-CH_3$ et $-CH_2-CH_3$ ,
- $R_{13}$ est choisi parmi le groupe formé par un aryle en $C_6$-$C_{18}$, un aryle en $C_6$-$C_{18}$ substitué par un groupement $R'_{13}$, -C(O)-O-$R'_{13}$ ; -O-$R'_{13}$, -S-$R'_{13}$ et -C(O)-N(H)-$R'_{13}$ avec $R'_{13}$ un groupe alkyle en $C_1$-$C_{25}$.

**9.** Composition selon la revendication 8 dans laquelle la chaîne formée par l'enchaînement des groupes $R_{10}$, M, X et $(R_8)_u$ avec u égal à 0 ou 1 du monomère de formule générale (IV) présente un nombre total d'atomes de carbone allant de 8 à 38, de préférence de 10 à 26.

**10.** Composition selon l'une des revendications 8 à 9, dans laquelle les chaînes latérales du copolymère A2 ont une longueur moyenne supérieure ou égale à 8 atomes de carbone, de préférence allant de 11 à 16 atomes de carbone.

**11.** Composition selon l'une des revendications 8 à 10 dans laquelle le copolymère A2 a un pourcentage molaire de monomère de formule (IV) dans ledit copolymère allant de 0,25 à 20%, de préférence de 1 à 10%.

**12.** Composition selon l'une des revendications 8 à 11, dans laquelle le copolymère A2 a un degré de polymérisation moyen en nombre allant de 50 à 1500, de préférence de 80 à 800 et/ou un indice de polydispersité (Ip) allant de 1,04 à 3,54 ; de préférence allant de 1,10 à 3,10.

**13.** Composition selon l'une des revendications 1 à 12 dans laquelle la teneur en copolymère A1 va de 0,1% à 50% en poids par rapport au poids total de la composition et/ou la teneur en composé A2 va de 0,1% à 50% en poids par rapport au poids total de la composition.

**14.** Composition selon l'une des revendications 1 à 13 à dans laquelle le ratio massique entre le copolymère A1 et le composé A2 (ratio A1/A2) va de 0,005 à 200, de préférence de 0,05 à 20, de manière encore plus préférée de 0,1 à 10.

**15.** Composition selon l'une quelconque des revendications 1 à 14 comprenant en outre au moins un additif choisi parmi le groupe formé par les polymères, les pigments, les colorants, les charges, les plastifiants, les fibres, les antioxydants, les additifs pour lubrifiants, les agents de compatibilité, les agents anti-mousses, les additifs dispersants, les promoteurs d'adhérences et les stabilisants.

## Patentansprüche

**1.** Zusammensetzung, die aus dem Mischen von mindestens Folgendem resultiert:

o einem statistischen Copolymer A1, das aus der Copolymerisation von Folgendem resultiert:

▪ mindestens einem ersten Monomer M1 der allgemeinen Formel (I):

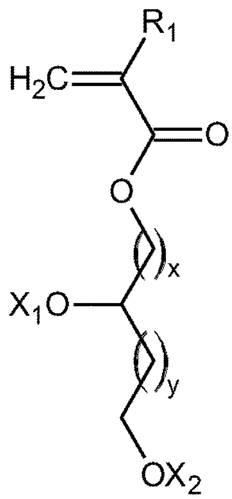

(I)

in der:

- $R_1$ aus der aus -H, $-CH_3$ und $-CH_2-CH_3$ gebildeten Gruppe ausgewählt ist;
- x eine ganze Zahl im Bereich von 2 bis 18 ist;
- y eine ganze Zahl mit einem Wert von 0 oder 1 ist;
- $X_1$ und $X_2$ gleich oder verschieden sind und aus der aus Wasserstoff, Tetrahydropyranyl, Methyloxymethyl, tert-Butyl, Benzyl, Trimethylsilyl und t-Butyldimethylsilyl gebildeten Gruppe ausgewählt sind; oder auch
- $X_1$ und $X_2$ mit den Sauerstoffatomen eine Brücke der folgenden Formel bilden:

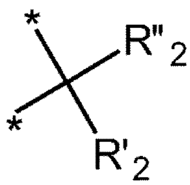

in der:

- die Sterne (*) die Bindungen an die Sauerstoffatome symbolisieren,
- $R'_2$ und $R''_2$ gleich oder verschieden sind und aus der aus Wasserstoff und einem $C_1$-$C_{11}$-Alkyl, vorzugsweise Methyl, gebildeten Gruppe ausgewählt sind;

oder auch
- $X_1$ und $X_2$ mit den Sauerstoffatomen einen Boronsäureester der folgenden Formel bilden:

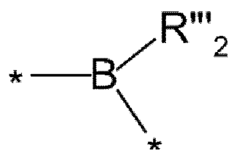

in der:

- die Sterne (*) die Bindungen an die Sauerstoffatome synthetisieren,
- $R'''_2$ aus der aus einem $C_6$-$C_{18}$-Aryl, einem $C_7$-$C_{18}$-Aralkyl und einem $C_2$-$C_{18}$-Alkyl, vorzugsweise einem $C_6$-$C_{18}$-Aryl, gebildeten Gruppe ausgewählt ist;

- mit mindestens einem zweiten Monomer M2 der allgemeinen Formel (II):

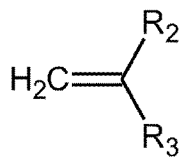

(II)

in der:

- $R_2$ aus der aus -H, $-CH_3$ und $-CH_2-CH_3$ gebildeten Gruppe ausgewählt ist;
- $R_3$ aus der aus einem $C_6$-$C_{18}$-Aryl, einem $C_6$-$C_{18}$-Aryl, das durch eine Gruppe $R'_3$, -C(O)-O-$R'_3$, -O-$R'_3$, -S-$R'_3$ und -C(O)-N(H)-$R'_3$ bestehenden Gruppe ausgewählt ist, wobei $R'_3$ eine $C_1$-$C_{30}$-Alkylgruppe ist; und

o einer Verbindung A2 mit mindestens zwei Boronsäureesterfunktionen,

wobei das statistische Copolymer A1 und die Verbindung A2 thermoreversibel assoziieren und chemische Bindungen austauschen können.

**2.** Zusammensetzung nach Anspruch 1, wobei das statistische Copolymer A1 aus der Copolymerisation von mindestens einem Monomer M1 mit mindestens zwei Monomeren M2 mit verschiedenen Gruppen $R_3$ resultiert.

**3.** Zusammensetzung nach Anspruch 2, wobei eines der Monomere M2 die allgemeine Formel (II-A) aufweist:

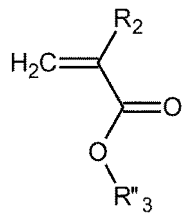

(II-A)

in der:

- $R_2$ aus der aus -H, $-CH_3$ und $-CH_2-CH_3$ gebildeten Gruppe ausgewählt ist,
- $R''_3$ eine $C_1$-$C_{14}$-Alkylgruppe ist,

und das andere Monomer M2 die allgemeine Formel (II-B) aufweist:

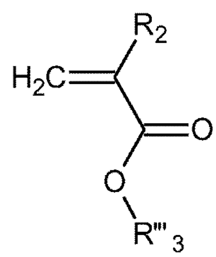

(II-B)

in der:

- $R_2$ aus der aus -H, $-CH_3$ und $-CH_2-CH_3$ gebildeten Gruppe ausgewählt ist,
- $R''_3$ eine $C_{15}$-$C_{30}$-Alkylgruppe ist.

4. Zusammensetzung nach einem der Ansprüche 1 bis 3, wobei die Seitenketten des statistischen Copolymers A1 eine mittlere Länge im Bereich von 8 bis 20 Kohlenstoffatomen, vorzugsweise von 9 bis 15 Kohlenstoffatomen, aufweisen.

5. Zusammensetzung nach einem der Ansprüche 1 bis 4, wobei das statistische Copolymer A1 einen Molprozentanteil von Monomer M1 der Formel (I) in dem Copolymer im Bereich von 1 bis 30 %, vorzugsweise 5 bis 25 %, weiter bevorzugt im Bereich von 9 bis 21 %, aufweist.

6. Zusammensetzung nach einem der Ansprüche 1 bis 5, wobei das statistische Copolymer A1 einen zahlenmittleren Polymerisationsgrad im Bereich von 100 bis 2000, vorzugsweise von 150 bis 1000, und/oder einen Polydispersitätsindex (Ip) im Bereich von 1,05 bis 3,75, vorzugsweise im Bereich von 1,10 bis 3,45, aufweist.

7. Zusammensetzung nach Anspruch 1, wobei es sich bei der Verbindung A2 um eine Verbindung der Formel (III) handelt:

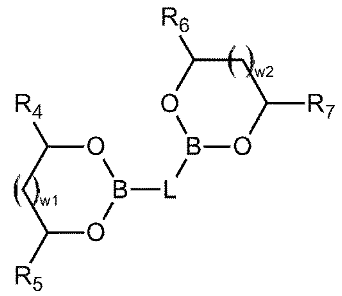

III

in der:

- $w_1$ und $w_2$ gleich oder verschieden sind und ganze Zahlen sind, die zwischen 0 und 1 ausgewählt sind;
- $R_4$, $R_5$, $R_6$ und $R_7$ gleich oder verschieden sind und aus der aus Wasserstoff und einer Kohlenwasserstoffgruppe mit 1 bis 24 Kohlenstoffatomen, vorzugsweise zwischen 4 und 18 Kohlenstoffatomen, vorzugsweise zwischen 6 und 14 Kohlenstoffatomen, bestehenden Gruppe ausgewählt sind;
- L eine zweiwertige Verknüpfungsgruppe ist, die aus der aus einem $C_6$-$C_{18}$-Aryl, einem $C_6$-$C_{18}$-Aralkyl und einer $C_2$-$C_{24}$-Kohlenstoffkette gebildeten Gruppe ausgewählt ist.

8. Zusammensetzung nach Anspruch 1, wobei es sich bei der Verbindung A2 um ein statistisches Copolymer handelt, das aus der Copolymerisation von Folgendem resultiert:

- mindestens einem Monomer M3 der Formel (IV)

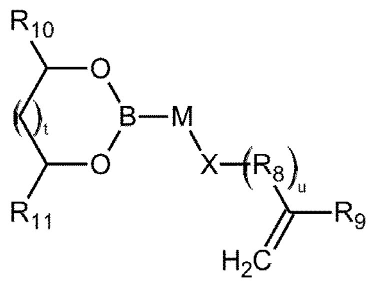

(IV)

in der:

- t eine ganze Zahl mit einem Wert von 0 oder 1 ist;
- u eine ganze Zahl mit einem Wert von 0 oder 1 ist;
- M und $R_8$ gleiche oder verschiedene zweiwertige Verbindungsgruppen sind, die aus der aus einem $C_6$-$C_{18}$-Aryl, einem $C_7$-$C_{24}$-Aralkyl und einem $C_2$-$C_{24}$-Alkyl, vorzugsweise einem $C_6$-$C_{18}$-Aryl, gebildeten Gruppe ausgewählt sind,

- X eine aus der aus -O-C(O)-, -C(O)-O-, -C(O)-N(H)-, -N(H)-C(O)-, -S-, - N(H)-, -N(R')$_4$ und -O- gebildeten Gruppe ausgewählte Funktion ist, wobei R'$_4$ eine Kohlenwasserstoffkette mit 1 bis 15 Kohlenstoffatomen ist;
- $R_9$ aus der aus -H, -$CH_3$ und -$CH_2$-$CH_3$ gebildeten Gruppe ausgewählt ist;
- $R_{10}$ und $R_{11}$ gleich oder verschieden sind und aus der aus Wasserstoff und einer Kohlenwasserstoffgruppe mit 1 bis 24 Kohlenstoffatomen, vorzugsweise zwischen 4 und 18 Kohlenstoffatomen, vorzugsweise zwischen 6 und 14 Kohlenstoffatomen, gebildeten Gruppe ausgewählt ist;

▪ mit mindestens einem zweiten Monomer M4 der allgemeinen Formel (V)

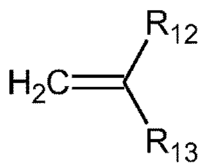

(V)

in der:

- $R_{12}$ aus der aus -H, -$CH_3$ und -$CH_2$-$CH_3$ gebildeten Gruppe ausgewählt ist,
- $R_{13}$ aus der aus einem $C_6$-$C_{18}$-Aryl, einem $C_6$-$C_{18}$-Aryl, das durch eine Gruppe R'$_{13}$ substituiert ist, -C(O)-O-R'$_{13}$, -O-R'$_{13}$, -S-R'$_{13}$ und -C(O)-N(H)-R'$_{13}$ bestehenden Gruppe ausgewählt ist, wobei R'$_{13}$ eine $C_1$-$C_{25}$-Alkylgruppe ist.

**9.** Zusammensetzung nach Anspruch 8, wobei die durch die Verknüpfung der Gruppen $R_{10}$, M, X und $(R_8)_u$ mit u gleich 0 oder 1 des Monomers der allgemeinen Formel (IV) gebildete Kette eine Gesamtzahl von Kohlenstoffatomen im Bereich von 8 bis 38, vorzugsweise von 10 bis 26, aufweist.

**10.** Zusammensetzung nach einem der Ansprüche 8 bis 9, wobei die Seitenketten des Copolymers A2 eine mittlere Länge größer oder gleich 8 Kohlenstoffatomen, vorzugsweise im Bereich von 11 bis 16 Kohlenstoffatomen, aufweisen.

**11.** Zusammensetzung nach einem der Ansprüche 8 bis 10, wobei das Copolymer A2 einen Molprozentanteil von Monomer der Formel (IV) in dem Copolymer im Bereich von 0,25 bis 20 %, vorzugsweise von 1 bis 10 %, aufweist.

**12.** Zusammensetzung nach einem der Ansprüche 8 bis 11, wobei das Copolymer A2 einen zahlenmittleren Polymerisationsgrad im Bereich von 50 bis 1500, vorzugsweise 80 bis 800, und/oder einen Polydispersitätsindex (Ip) im Bereich von 1,04 bis 3,54, vorzugsweise im Bereich von 1,10 bis 3,10, aufweist.

**13.** Zusammensetzung nach einem der Ansprüche 1 bis 12, wobei der Gehalt an Copolymer A1 0,1 bis 50 Gew.-%, bezogen auf das Gesamtgewicht der Zusammensetzung, beträgt und/oder der Gehalt an Verbindung A2 0,1 bis 50 Gew.-%, bezogen auf das Gesamtgewicht der Zusammensetzung, beträgt.

**14.** Verbindung nach einem der Ansprüche 1 bis 13, wobei das Massenverhältnis zwischen dem Copolymer A1 und der Verbindung A2 (Verhältnis A1/A2) 0,005 bis 200, vorzugsweise 0,05 bis 20, noch weiter bevorzugt 0,1 bis 10, beträgt.

**15.** Zusammensetzung nach einem der Ansprüche 1 bis 14, die außerdem mindestens ein Additiv umfasst, welches aus der aus Polymeren, Pigmenten, Farbmitteln, Füllstoffen, Weichmachern, Fasern, Antioxidantien, Additiven für Schmiermittel, Verträglichkeitsvermittlern, Antischaummitteln, Dispergieradditiven, Haftvermittlern und Stabilisatoren gebildeten Gruppe ausgewählt ist.

## Claims

**1.** Composition resulting from the mixture of at least:

o a statistical copolymer A1 resulting from the copolymerization:

- of at least one first monomer M1 of general formula (I):

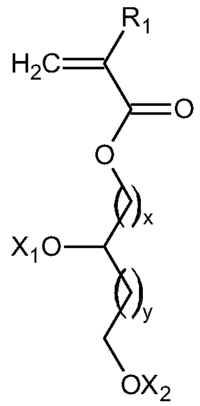

(I)

in which:

- $R_1$ is selected from the group formed by -H, $-CH_3$, and $-CH_2-CH_3$;
- x is an integer ranging from 2 to 18;
- y is an integer equal to 0 or 1;
- $X_1$ and $X_2$, identical or different, are selected from the group formed by hydrogen, tetrahydropyranyl, methyloxymethyl, ter-butyl, benzyl, trimethylsilyl and t-butyl dimethylsilyl;

or

- $X_1$ and $X_2$ form with the oxygen atoms a bridge of the following formula

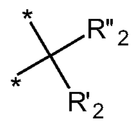

in which:

- the stars (*) symbolize the bonds to the oxygen atoms,
- $R'_2$ and $R''_2$, identical or different, are selected from the group formed by hydrogen and a $C_1$-$C_{11}$ alkyl, preferably methyl;

or

- $X_1$ and $X_2$ form with the oxygen atoms a boronic ester of the following formula

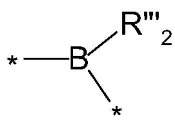

in which:

- the stars (*) symbolize the bonds to the oxygen atoms,
- $R'''_2$ is selected from the group formed by a $C_6$-$C_{18}$ aryl, a $C_7$-$C_{18}$ aralkyl and $C_2$-$C_{18}$ alkyl, preferably a $C_6$-$C_{18}$ aryl;

- with at least one second monomer M2 of general formula (II):

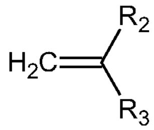

(II)

in which:

- $R_2$ is selected from the group formed by -H, $-CH_3$ and $-CH_2-CH_3$,
- $R_3$ is selected from the group formed by a $C_6$-$C_{18}$ aryl, a $C_6$-$C_{18}$ aryl substituted by an $R'_3$, -C(O)-O-$R'_3$; -O-$R'_3$, -S-$R'_3$ and -C(O)-N(H)-$R'_3$ group with $R'_3$ a $C_1$-$C_{30}$ alkyl group; and

o a compound A2 comprising at least two boronic ester functions.

the statistical copolymer A1 and the compound A2 being capable of associating and exchanging chemical bonds in a thermoreversible way.

**2.** Composition according to claim 1, in which the statistical copolymer A1 results from the copolymerization of at least one monomer M1 with at least two monomers M2 having different $R_3$ groups.

**3.** Composition according to claim 2, in which one of the monomers M2 has the general formula (II-A):

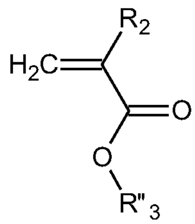

(II-A)

in which:

- $R_2$ is selected from the group formed by -H, $-CH_3$ and $-CH_2-CH_3$,
- $R''_3$ is a $C_1$-$C_{14}$ alkyl group,

and the other monomer M2 has the general formula (II-B):

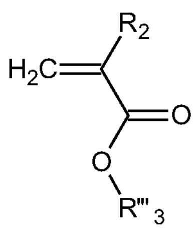

(II-B)

in which:

- $R_2$ is selected from the group formed by -H, $-CH_3$ and $-CH_2-CH_3$,
- $R'''_3$ is a $C_{15}$-$C_{30}$ alkyl group.

**4.** Composition according to one of claims 1 to 3, in which the side chains of the statistical copolymer A1 have an average length ranging from 8 to 20 carbon atoms, preferably from 9 to 15 carbon atoms.

5. Composition according to one of claims 1 to 4, in which the statistical copolymer A1 has a molar percentage of monomer M1 of formula (I) in said copolymer ranging from 1 to 30%, preferably from 5 to 25%, more preferably ranging from 9 to 21%.

6. Composition according to one of claims 1 to 5, in which the statistical copolymer A1 has a number-average degree of polymerization ranging from 100 to 2000, preferably from 150 to 1000 and/or a polydispersity index (PDI) ranging from 1.05 to 3.75; preferably ranging from 1.10 to 3.45.

7. Composition according to claim 1, in which the compound A2 is a compound of formula (III):

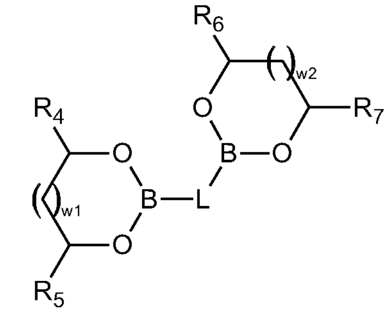

III

in which:

- $w_1$ and $w_2$, identical or different are integers selected between 0 and 1;
- $R_4$, $R_5$, $R_6$ and $R_7$, identical or different are selected from the group formed by hydrogen and a hydrocarbon-containing group having from 1 to 24 carbon atoms, preferably between 4 and 18 carbon atoms, preferably between 6 and 14 carbon atoms;
- L is a divalent bond group and selected from the group formed by a $C_6$-$C_{18}$ aryl, a $C_6$-$C_{18}$ aralkyl and a $C_2$-$C_{24}$ hydrocarbon-containing chain.

8. Composition according to claim 1, in which the compound A2 is a statistical copolymer resulting from the copolymerization

- of at least one monomer M3 of formula (IV):

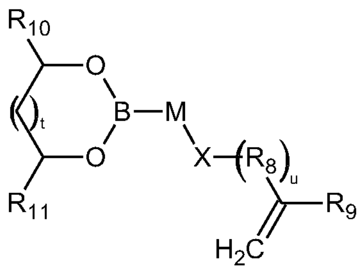

(IV)

in which:

- t is an integer equal to 0 or 1;
- u is an integer equal to 0 or 1;
- M and $R_8$ are divalent bond groups, identical or different, selected from the group formed by a $C_6$-$C_{18}$ aryl, a $C_7$-$C_{24}$ aralkyl and a $C_2$-$C_{24}$ alkyl, preferably a $C_6$-$C_{18}$ aryl,
- X is a function selected from the group formed by -O-C(O)-, -C(O)-O-, -C(O)-N(H)-, -N(H)-C(O)-, -S-, -N(H)-, -N(R'$_4$)- and -O- with R'$_4$ a hydrocarbon-containing chain comprising from 1 to 15 carbon atoms;
- $R_9$ is selected from the group formed by -H, $-CH_3$ and $-CH_2-CH_3$;
- $R_{10}$ and $R_{11}$ identical or different are selected from the group formed by hydrogen and a hydrocarbon-containing group having from 1 to 24 carbon atoms, preferably between 4 and 18 carbon atoms, preferably

between 6 and 14 carbon atoms;

- with at least one second monomer M4 of general formula (V):

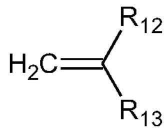

(V)

in which:

- $R_{12}$ is selected from the group formed by -H, $-CH_3$ and $-CH_2-CH_3$,
- $R_{13}$ is selected from the group formed by a $C_6$-$C_{18}$ aryl, a $C_6$-$C_{18}$ aryl substituted by an $R'_{13}$, -C(O)-O-$R'_{13}$; -O-$R'_{13}$, -S-$R'_{13}$ and -C(O)-N(H)-$R'_{13}$ group with $R'_{13}$ a $C_1$-$C_{25}$ alkyl group.

**9.** Composition according to claim 8, in which the chain formed by the sequence of the $R_{10}$, M, X and $(R_8)_u$ groups with u equal to 0 or 1 of the monomer of general formula (IV) has a total number of carbon atoms ranging from 8 to 38, preferably from 10 to 26.

**10.** Composition according to one of claims 8 to 9, in which the side chains of the copolymer A2 have an average length greater than or equal to 8 carbon atoms, preferably ranging from 11 to 16 carbon atoms.

**11.** Composition according to one of claims 8 to 10, in which the copolymer A2 has a molar percentage of monomer of formula (IV) in said copolymer ranging from 0.25 to 20%, preferably from 1 to 10%.

**12.** Composition according to one of claims 8 to 11, in which the copolymer A2 has a number-average degree of polymerization ranging from 50 to 1500, preferably from 80 to 800 and/or a polydispersity index (PDI) ranging from 1.04 to 3.54; preferably ranging from 1.10 to 3.10.

**13.** Composition according to one of claims 1 to 12, in which the copolymer A1 content ranges from 0.1% to 50% by weight with respect to the total weight of the composition and/or the compound A2 content ranges from 0.1% to 50% by weight with respect to the total weight of the composition.

**14.** Composition according to one of claims 1 to 13, in which the ratio by weight between the copolymer A1 and the compound A2 (ratio A1/A2) ranges from 0.005 to 200, preferably from 0.05 to 20, even more preferably from 0.1 to 10.

**15.** Composition according to any one of claims 1 to 14 further comprising at least one additive selected from the group formed by the polymers, pigments, dyes, fillers, plasticizers, fibres, antioxidants, additives for lubricants, compatibilizing agents, antifoaming agents, dispersant additives, adhesion promoters and stabilizing agents.

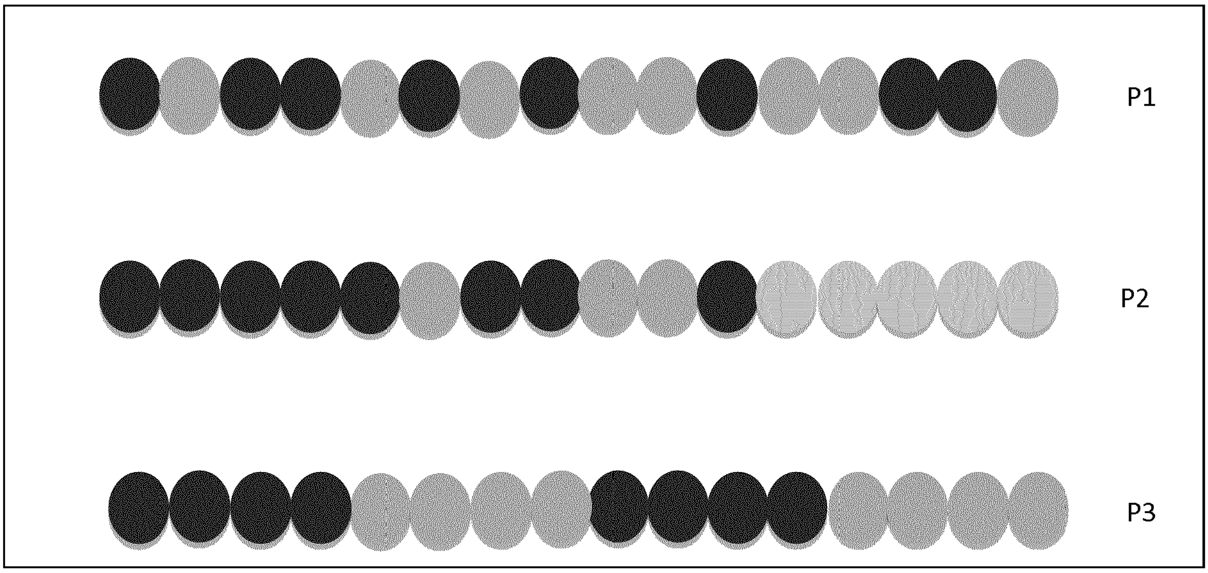


Figure 1

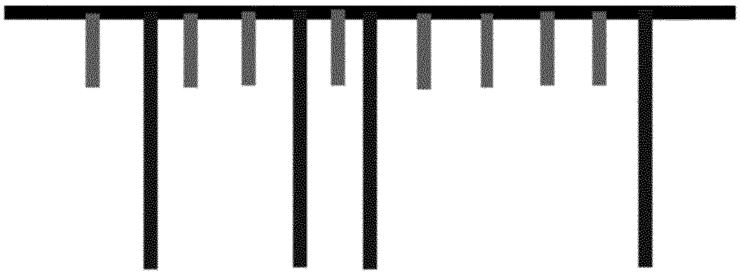

Figure 2

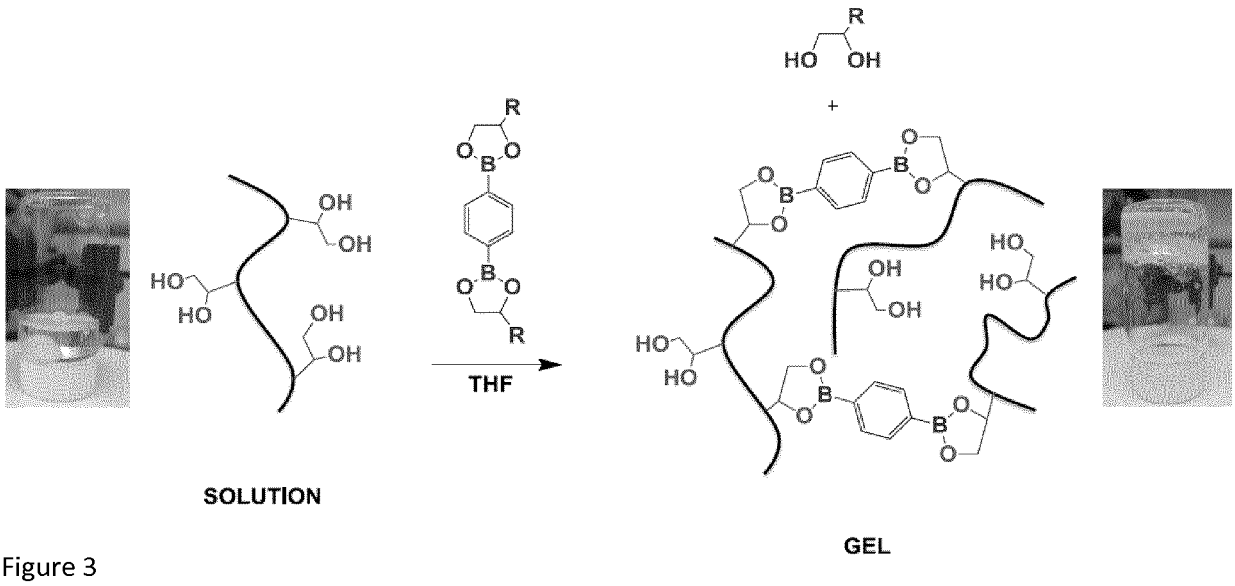


Figure 3

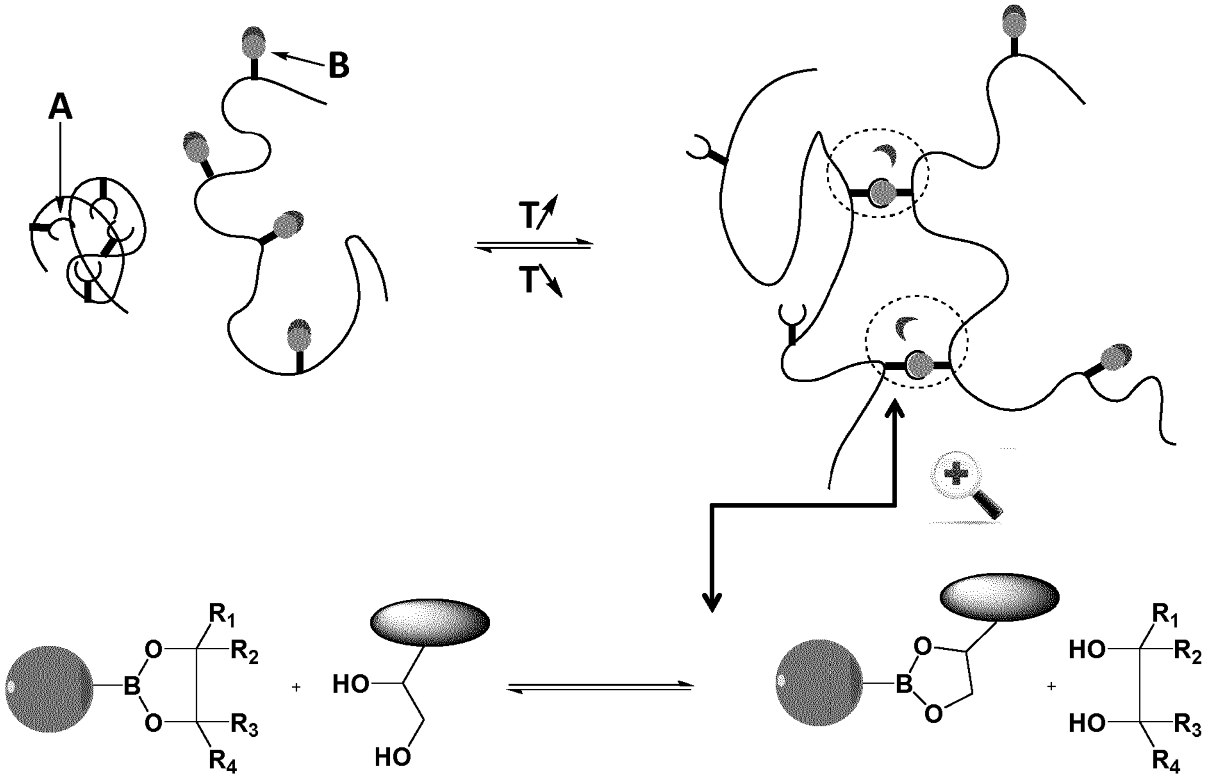


1 2 3

Figure 4

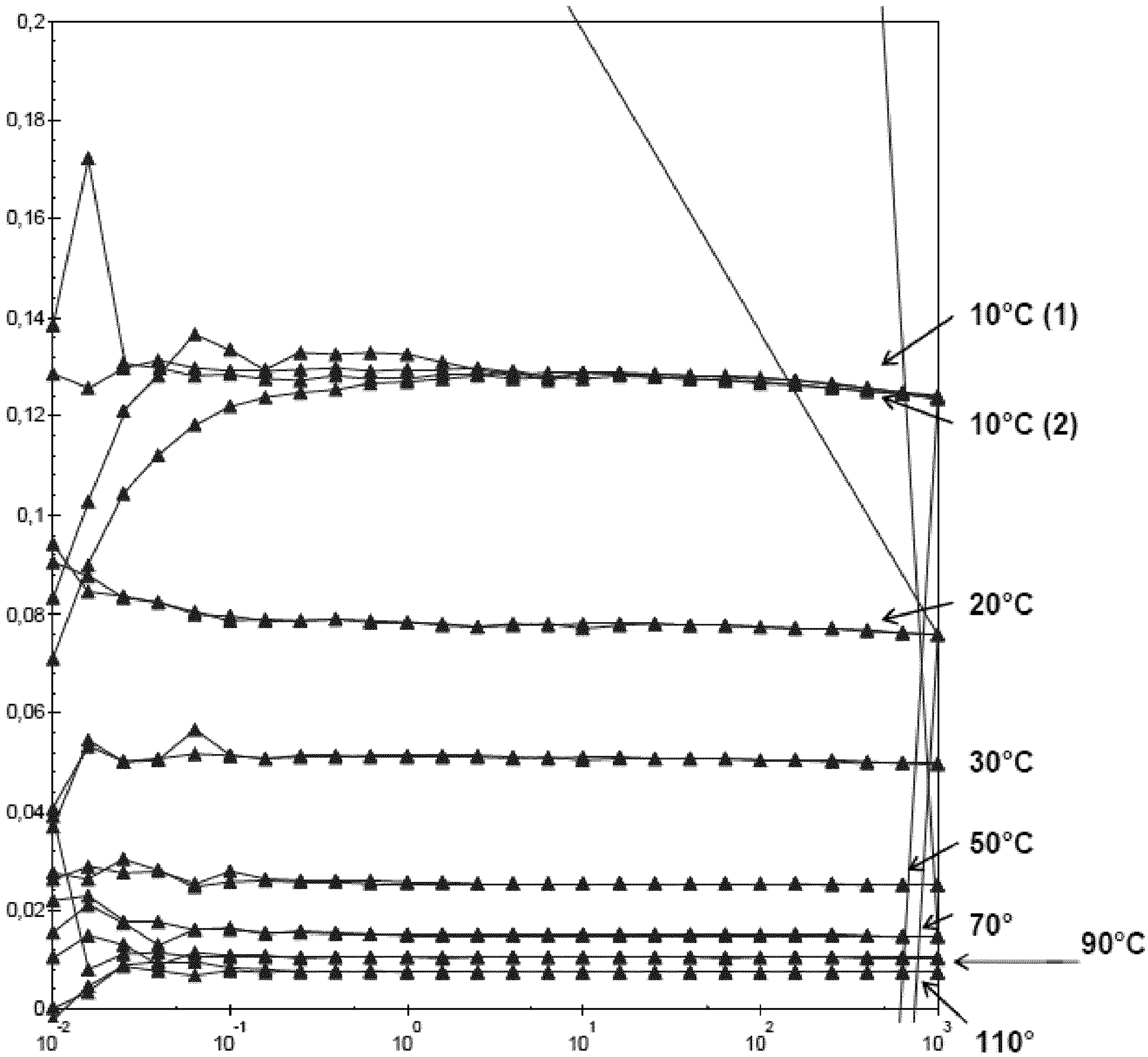
0,2
0,18
0,16
0,14
0,12
0,1
0,08
0,06
0,04
0,02
0
10°C (1)
10°C (2)
20°C
30°C
50°C
70°
90°C
110°
$10^{-2}$
$10^{-1}$
$10^{0}$
$10^{1}$
$10^{2}$
$10^{3}$

Figure 5

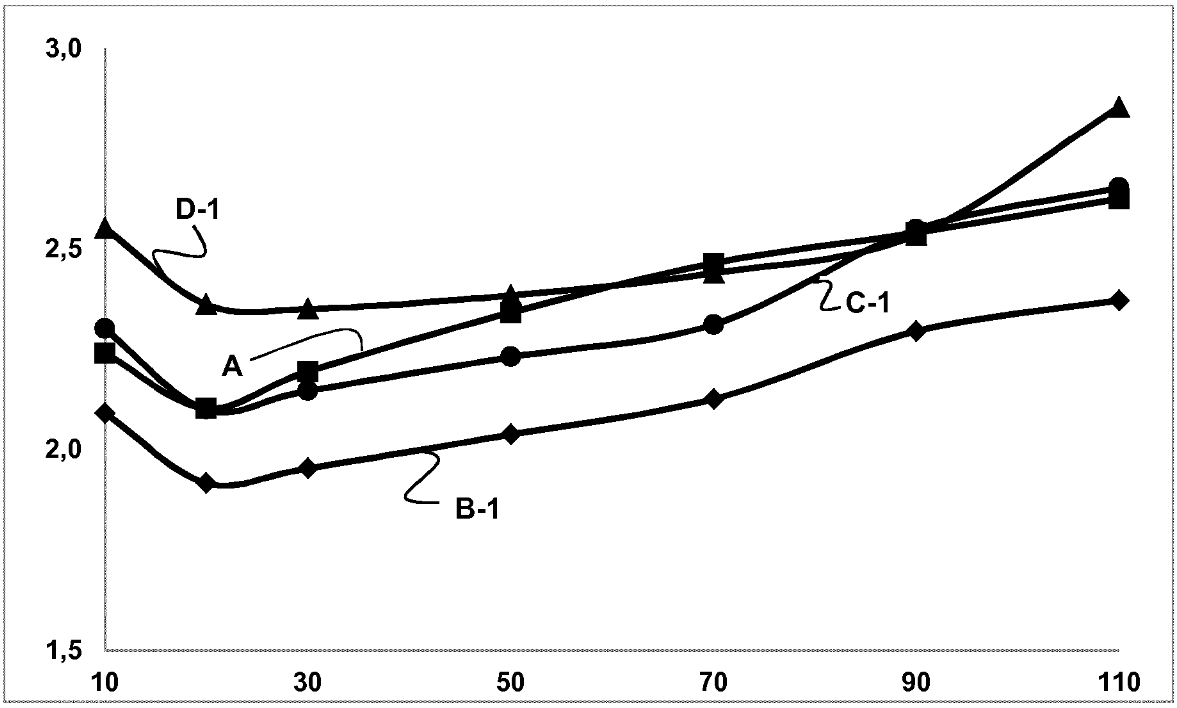


Figure 6A

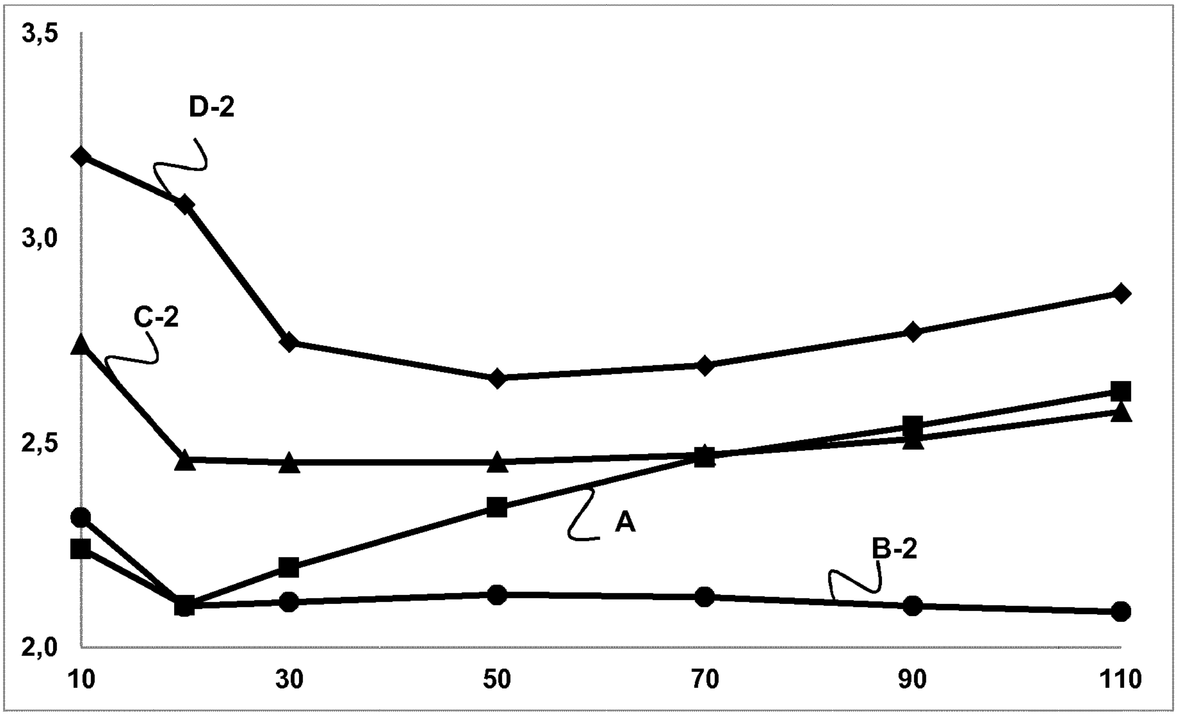


Figure 6B

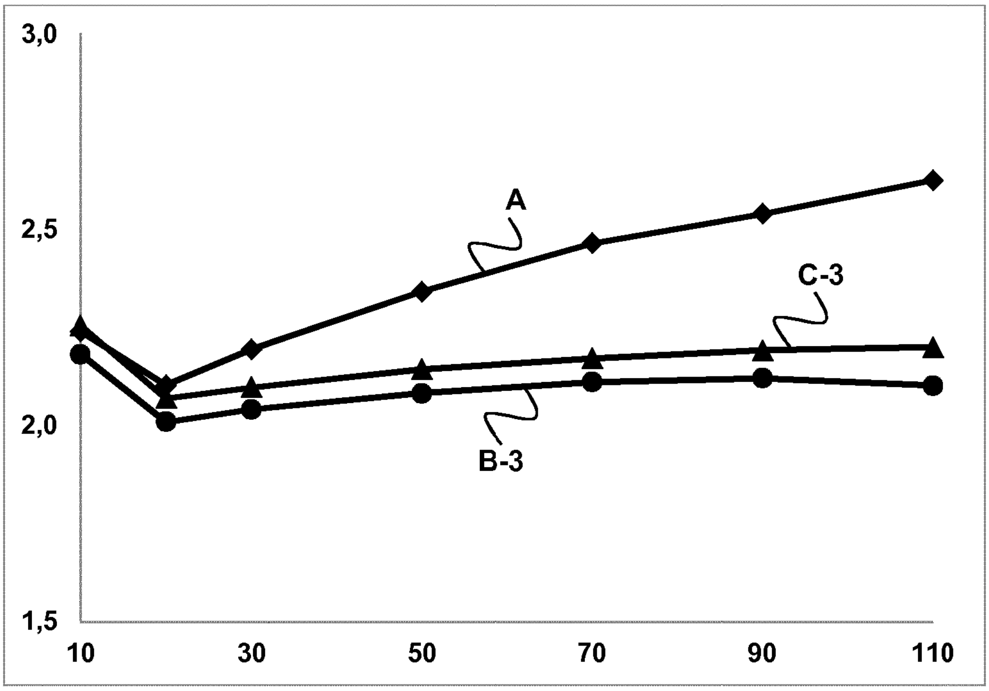


Figure 6C

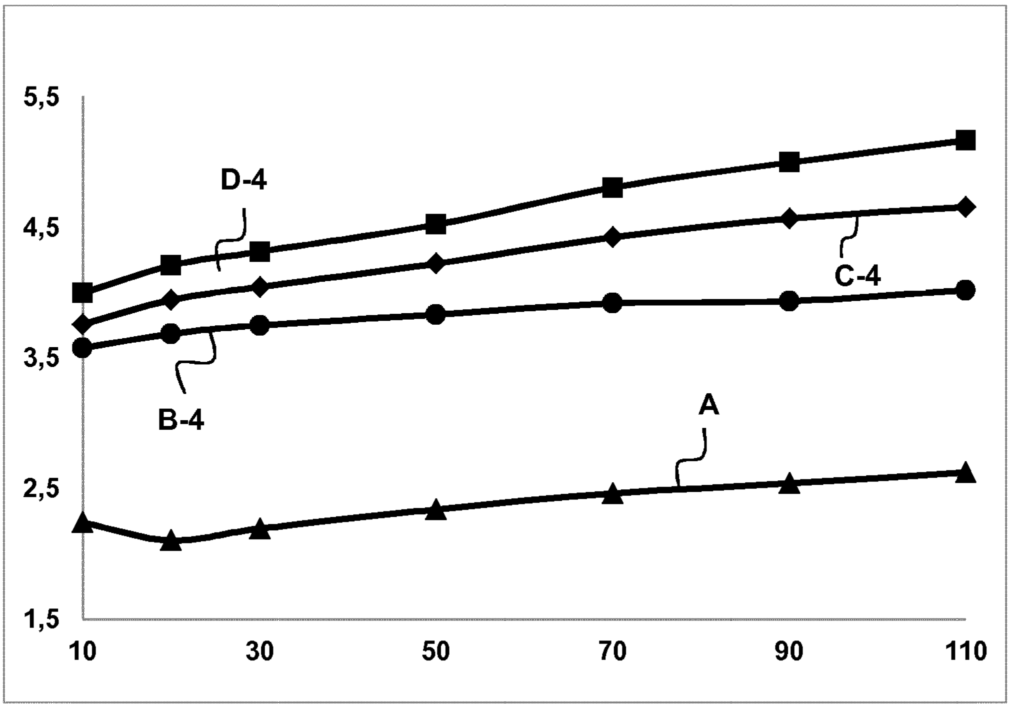


Figure 6D

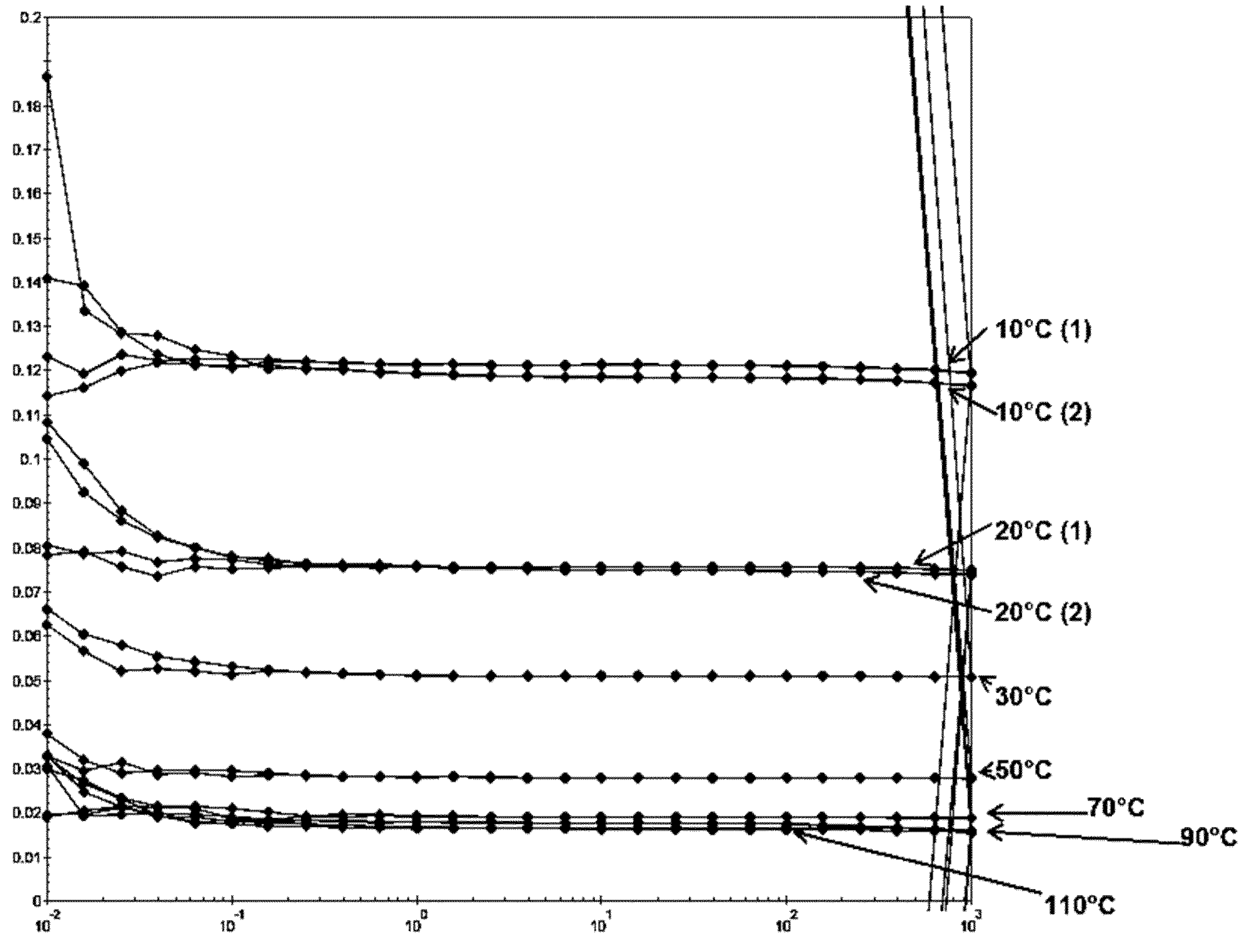
0.2
0.18
0.17
0.16
0.15
0.14
0.13
0.12
0.11
0.1
0.09
0.08
0.07
0.06
0.05
0.04
0.03
0.02
0.01
0
10^-2
10^-1
10^0
10^1
10^2
10^3
10°C (1)
10°C (2)
20°C (1)
20°C (2)
30°C
50°C
70°C
90°C
110°C

Figure 7

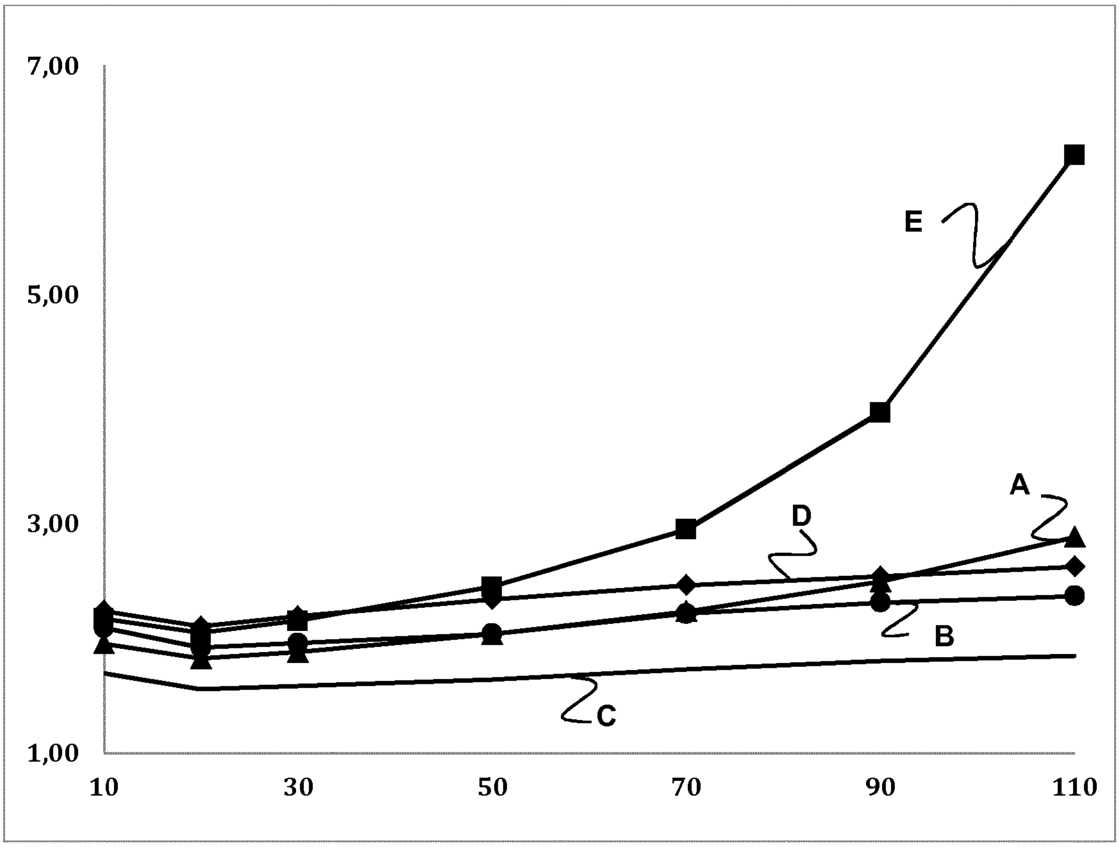


Figure 8

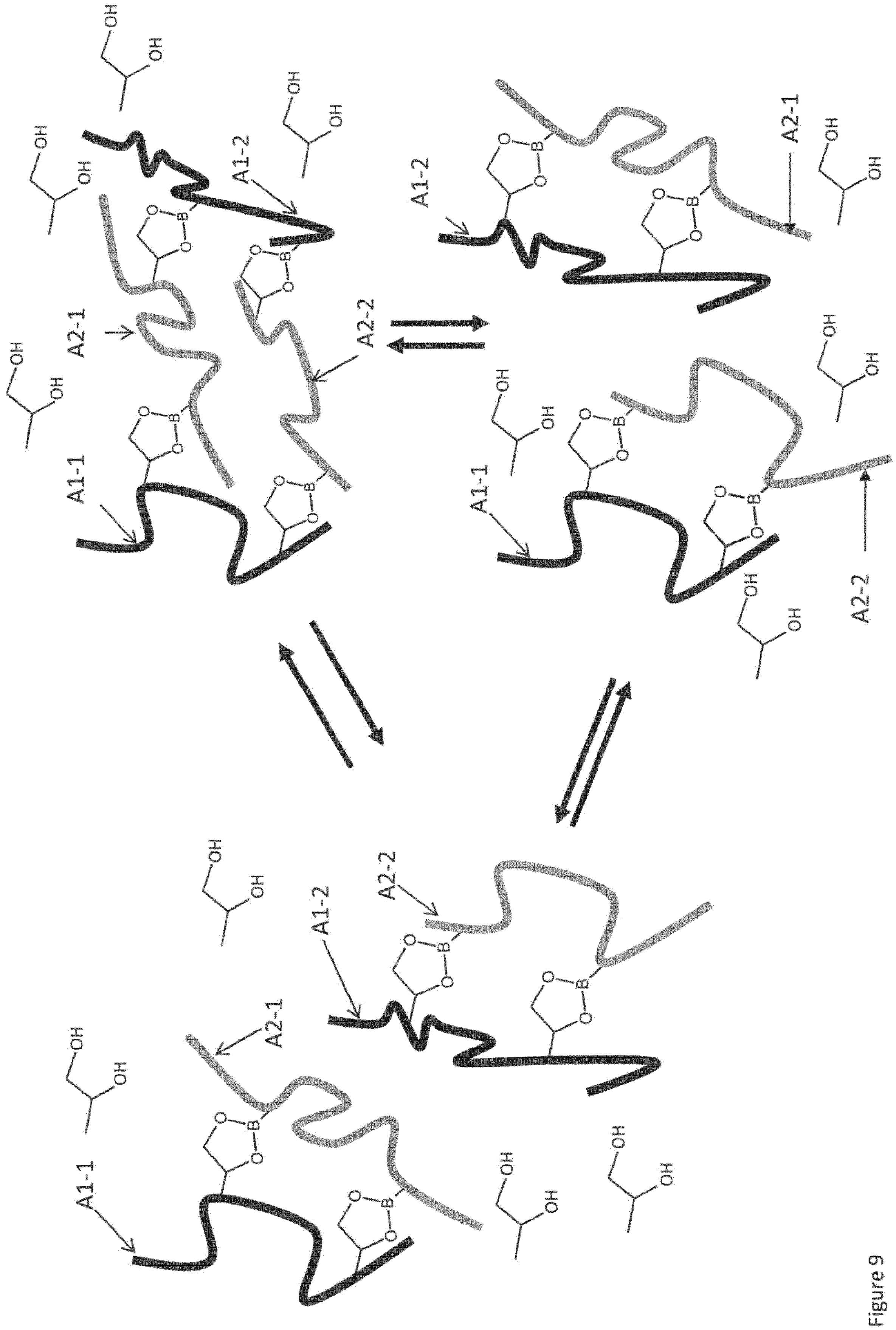


Figure 9

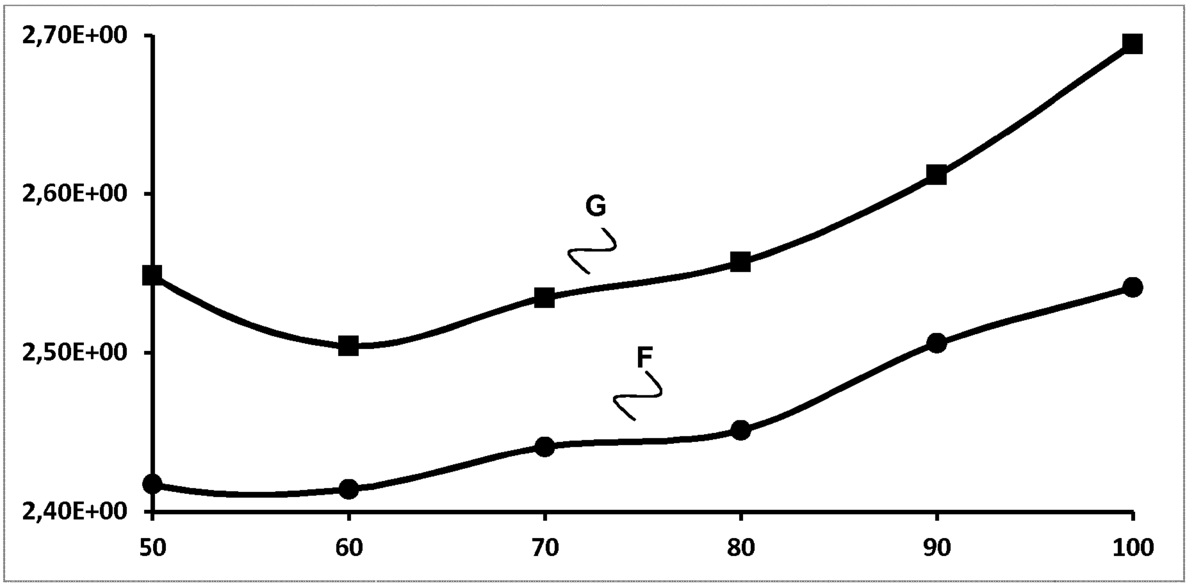


Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2013147795 A
- US 4401797 A
- EP 0570073 A


### Littérature non-brevet citée dans la description


- **MOAD, G. ; SOLOMON, D. H.** The Chemistry of Radical Polymerization. Elsevier Ltd, 2006, 639
- **MATYASZEWSKI, K. ; DAVIS, T. P.** Handbook of Radical Polymerization. Wiley-Interscience, 2002, 936
- **FONTANILLE, M. ; GNANOU, Y.** Chimie et physico-chimie des polymères. 2010, 546